# EUROPEAN PATENT APPLICATION

(11) **EP 4 505 875 A1**
(43) Date of publication of application: **12.02.2025**
(21) Application number: 23784761.1
(22) Date of filing: 04.04.2023
(51) Int. Cl.: A01N 43/08, A01N 43/36, A01N 43/38, A01N 47/12, A01N 47/18, A01P 13/00

(54) **METHOD FOR CONTROLLING PARASITIC PLANTS**

(30) Priority: 04.04.2022 JP 2022062197
(71) Applicant: AJINOMOTO CO., INC., Chuo-ku Tokyo 104-8315 (JP)
(72) Inventor: SATO, Seiichi, Kawasaki-shi, Kanagawa 210-8681 (JP); TAKEDA, Taito, Kawasaki-shi, Kanagawa 210-8681 (JP); TAHARA, Yuki, Kawasaki-shi, Kanagawa 210-8681 (JP); NAKATA, Kengo, Tokyo 103-8461 (JP); ITO, Hirotaka, Tokyo 103-8461 (JP); ONOZATO, Ayumu, Tokyo 103-8461 (JP); MADEIRA, Joao, Tokyo 103-8461 (JP)
(74) Representative: Strehl Schübel-Hopf & Partner
(86) International application number: PCT/JP2023/013999
(87) International publication number: WO 2023/195475

(57) **Abstract**

Provided is a valuable technology in the fields of agriculture and horticulture, such as a technology for controlling a parasitic plant. A parasitic plant is controlled by utilizing compounds that may have similar or opposite functions to a strigolactone, such as an amino acid derivative having a D ring.

## Description

### Technical Field

The present invention relates to a valuable technology in the fields of agriculture and horticulture, such as a technology for controlling a parasitic plant.

### Background Art

Plants of the family Orobanchaceae, such as plants of the genus Striga and plants of the genus Orobanche, plants of the family Scrophulariaceae, such as plants of the genus Alectra, and plants of the family Convolvulaceae, such as plants of the genus Cuscuta, are becoming a problem worldwide as parasitic plants that negatively impact food production. For example, plants of the genus Striga parasitize major cereal crops such as sorghum, maize, and rice, while plants of the genus Orobanche parasitize major vegetable crops such as tomato, potato, tobacco, eggplant, and broad bean, causing significant damage. The total damage caused by these parasitic plants in Africa is said to be around 1 trillion yen. The seeds of the genus Striga and the family Orobanchaceae are very small, and the genus Striga and the like produce up to around 100,000 seeds at a time, making it very difficult to control once the soil has been contaminated. Therefore, there is a need to develop technologies to control plants of the family Orobanchaceae.

For example, a technology is known in which strigolactone or a compound having a similar function induces suicide germination in plants of the family Orobanchaceae, thereby controlling the plants of the family Orobanchaceae (Patent Literature 1 and Non Patent Literature 1).

### Citation List

### Patent Literature

Patent Literature 1: WO2012/043813

### Non Patent Literature

Non Patent Literature 1: Uraguchi et al., (2018) Science, 362, 1301-1305. A femtomolar-range suicide germination stimulant for the parasitic plant Striga hermonthica.

### Summary of Invention

### Technical Problem

An object of the present invention is to provide a valuable technology in the fields of agriculture and horticulture, such as a technology for controlling a parasitic plant.

### Solution to Problem

As a result of intensive studies to solve the above-described problem, the present inventors found a group of compounds that may have similar or opposite functions to strigolactone, thereby completing the present invention.

In other words, the present invention can be exemplified as follows.
[1] A composition for controlling a parasitic plant,
   which contains the following Component (A), (B), or (C):
   (A) a compound represented by Formula (I) described later;
   (B) a compound represented by Formula (II) described later; and
   (C) an amino acid fermentation by-product, wherein
      in Formula (I),
         X represents an interatomic bond or an oxycarbonyl group (OC(=O)),
         Y represents an oxygen atom (O), a nitrogen atom to which a hydrogen atom is bonded (NH), or a nitrogen atom to which a methyl group is bonded (NMe),
         R1 represents a hydrogen atom (H) or a methyl group,
         R2 represents an amino acid, agmatine, guanidine, a structure represented by Formula (R2-1) described later, or a structure represented by Formula (R2-2) described later,
         in Formula (R2-1),
         n represents an integer of 2 to 5 (i.e., 2, 3, 4, or 5),
         in Formula (R2-1), R3 and R4 each independently represent a hydrogen atom or an acyl group,
         in Formula (R2-2),
         a represents an optionally substituted alkylene group having 1 to 4 carbon atoms or an optionally substituted alkenylene group having 2 to 4 carbon atoms,
         R5 represents a hydrogen atom (H) or an optionally substituted alkyl group having 1 to 4 carbon atoms,
      in Formula (II),
         X1 represents an interatomic bond or a methyleneoxy group (CH₂O),
         X2 represents an interatomic bond or a carbonyl group (C(=O)),
         Y represents an oxygen atom (O) or a nitrogen atom (NH) to which a hydrogen atom is bonded,
         R1 represents a hydrogen atom (H) or a methyl group,
         R2 represents an amino acid, agmatine, guanidine, an aliphatic alcohol, a fatty acid, a structure represented by Formula (R2-1), or a structure represented by Formula (R2-2), and
         b-c represents CH-CH₂ or C=CH.
[2] The composition described above, wherein the parasitic plant is controlled by inducing suicide germination of the parasitic plant or by inhibiting germination of the parasitic plant.
[3] The composition described above, wherein the parasitic plant is a plant of the family Orobanchaceae, a plant of the family Scrophulariaceae, or a plant of the family Convolvulaceae.
[4] The composition described above, wherein the parasitic plant is a plant of the genus Striga, a plant of the genus Orobanche, a plant of the genus Phelipanche, a plant of the genus Alectra, or a plant of the genus Cuscuta.
[5] The composition described above, wherein the parasitic plant is Striga asiatica, Striga gesnerioides, Striga hermonthica, Striga aspera, Striga asiatica, Striga curviflora, Striga parviflora, Striga angustifolia, Striga latericea, Striga aequinoctialis, Striga angolensis, Striga bilabiate, Striga brachycalyx, Striga chrsantha, Striga dalzielii, Striga elegans, Striga forbesii, Striga gastonii, Striga gracillima, Striga hallaei, Striga hirsuta, Striga junodii, Striga klingii, Striga lepidagathidis, Striga lutea, Striga macrantha, Striga passargei, Striga pinnatifida, Striga primuloides, Striga yemenica, Striga pubiflora, Orobanche ramosa, Orobanche minor, Orobanche crenata, Orobanche cumana, Orobanche foetida, Orobanche aegyptiaca, Orobanche cernua, Phelipanche ramosa, Phelipanche aegyptiaca, Alectra vogelii, Alectra picta, Alectra sessiliflora, Alectra orobanchoides, Alectra fluminensis, Cuscuta australis, Cuscuta campestris, Cuscuta chinensis, Cuscuta indecora, Cuscuta epithymum, Cuscuta epilinum, Cuscuta gronovii, Cuscuta planiflora, Cuscuta monogyna, Cuscuta pedicellata, Cuscuta palaestina, or Cuscuta rejlexa.
[6] The composition described above, wherein for the Component (A), Y is NH, and R1 is a methyl group.
[7] The composition described above, wherein the Component (A) satisfies any one of the following conditions:
   (1) X is an interatomic bond or an oxycarbonyl group, and R2 is an amino-linked amino acid, amino-linked agmatine, or amino-linked guanidine;
   (2) X is an interatomic bond, and R2 is a carboxyl-linked amino acid;
   (3) X is an interatomic bond, and R2 is a hydroxyl-linked amino acid;
   (4) X is an interatomic bond, and R2 is a thiol-linked amino acid;
   (5) X is an interatomic bond, and R2 is an amide-linked amino acid;
   (6) X is an interatomic bond or an oxycarbonyl group, and R2 is a structure represented by Formula (R2-1); and
   (7) X is an interatomic bond, and R2 is a structure represented by Formula (R2-2).
[8] The composition described above, wherein the Component (A) satisfies any one of the following conditions:
   (1) X is an interatomic bond, Y is NH, R1 is a methyl group, and R2 is an amino-linked amino acid, amino-linked agmatine, amino-linked guanidine, or a structure represented by Formula (R2-1); and
   (2) X is an oxycarbonyl group, Y is NH, R1 is a methyl group, and R2 is a carboxyl-linked amino acid or a structure represented by Formula (R2-2).
[9] The composition described above, wherein for the Component (B), Y is NH, b-c is CH-CH₂, and R1 is H.
[10] The composition described above, wherein the Component (B) satisfies any one of the following conditions:
   (1) X1 is an interatomic bond, X2 is a carbonyl group, and R2 is an amino-linked amino acid, amino-linked agmatine, or amino-linked guanidine;
   (2) X1 is a methyleneoxy group, X2 is an interatomic bond, and R2 is a carboxyl-linked amino acid;
   (3) X1 is an interatomic bond, X2 is a carbonyl group, and R2 is an aliphatic alcohol;
   (4) X1 is a methyleneoxy group, X2 is an interatomic bond, and R2 is a fatty acid;
   (5) X1 is an interatomic bond, X2 is a carbonyl group, and R2 is a structure represented by Formula (R2-1);
   (6) X1 is a methyleneoxy group, X2 is an interatomic bond, and R2 is a structure represented by Formula (R2-2); and
   (7) X1 is an interatomic bond, X2 is an interatomic bond, and R2 is amino-linked guanidine.
[11] The composition described above, wherein the Component (B) satisfies any one of the following conditions:
   (1) X1 is an interatomic bond, X2 is a carbonyl group, Y is NH, b-c is CH-CH₂, R1 is H, and R2 is an amino-linked amino acid, amino-linked agmatine, amino-linked guanidine, or a structure represented by Formula (R2-1);
   (2) X1 is a methyleneoxy group, X2is an interatomic bond, Y is NH, b-c is CH-CH₂, R1 is H, and R2 is a carboxyl-linked amino acid, a fatty acid having 2 to 18 carbon atoms, or a structure represented by Formula (R2-2); and
   (3) X1 is an interatomic bond, X2 is an interatomic bond, Y is an oxygen atom (O), b-c is C=CH, R1 is a methyl group, and R2 is an amino-linked guanidine.
[12] The composition described above, excluding compositions in which the Component (B) is a compound represented by Formula (Compound 41), (Compound 50), (Compound 52), (Compound 54), (Compound 55), or (Compound 77) described later.
[13] The composition described above, wherein the Component (A) or (B) is selected from compounds represented by Formulae (Compound 1) to (Compound 20), (Compound 23), (Compound 26) to (Compound 40), (Compound 42) to (Compound 49), (Compound 51), (Compound 53), (Compound 56) to (Compound 76), (Compound 78) to (Compound 80), and (Compound 82) to (Compound 90) described later.
[14] The composition described above, wherein the Component (C) is a fermentation by-product of lysine, tryptophan, threonine, valine, leucine, or isoleucine.
[15] The composition described above, which is used in a liquid form containing the Component (A), (B), or (C) at a concentration of from 10 nM to 10 mM.
[16] A method for controlling a parasitic plant, including
   applying the following Component (A), (B), or (C) to a seed of a parasitic plant:
   (A) a compound represented by Formula (I) described later;
   (B) a compound represented by Formula (II) described later; and
   (C) an amino acid fermentation by-product, wherein
      in Formula (I),
         X represents an interatomic bond or an oxycarbonyl group (OC(=O)),
         Y represents an oxygen atom (O), a nitrogen atom to which a hydrogen atom is bonded (NH), or a nitrogen atom to which a methyl group is bonded (NMe),
         R1 represents a hydrogen atom (H) or a methyl group,
         R2 represents an amino acid, agmatine, guanidine, a structure represented by Formula (R2-1) described later, or a structure represented by Formula (R2-2) described later,
         in Formula (R2-1),
         n represents an integer of 2 to 5 (i.e., 2, 3, 4, or 5),
         in Formula (R2-1), R3 and R4 each independently represent a hydrogen atom or an acyl group,
         in Formula (R2-2),
         a represents an optionally substituted alkylene group having 1 to 4 carbon atoms or an optionally substituted alkenylene group having 2 to 4 carbon atoms,
         R5 represents a hydrogen atom (H) or an optionally substituted alkyl group having 1 to 4 carbon atoms,
      in Formula (II),
         X1 represents an interatomic bond or a methyleneoxy group (CH₂O),
         X2 represents an interatomic bond or a carbonyl group (C(=O)),
         Y represents an oxygen atom (O) or a nitrogen atom (NH) to which a hydrogen atom is bonded,
         R1 represents a hydrogen atom (H) or a methyl group,
         R2 represents an amino acid, agmatine, guanidine, an aliphatic alcohol, a fatty acid, a structure represented by Formula (R2-1), or a structure represented by Formula (R2-2), and
         b-c represents CH-CH₂ or C=CH.
[17] A method for producing a plant body, including:
   applying the following Component (A), (B), or (C) to a seed of a parasitic plant, thereby inducing suicide germination of the parasitic plant;
   cultivating a plant that is a parasitism target of the parasitic plant after the application; and
   harvesting a plant body of the plant that is a parasitism target of the parasitic plant:
      (A) a compound represented by Formula (I) described later;
      (B) a compound represented by Formula (II) described later; and
      (C) an amino acid fermentation by-product, wherein
         in Formula (I),
            X represents an interatomic bond or an oxycarbonyl group (OC(=O)),
            Y represents an oxygen atom (O), a nitrogen atom to which a hydrogen atom is bonded (NH), or a nitrogen atom to which a methyl group is bonded (NMe),
            R1 represents a hydrogen atom (H) or a methyl group,
            R2 represents an amino acid, agmatine, guanidine, a structure represented by Formula (R2-1) described later, or a structure represented by Formula (R2-2) described later,
            in Formula (R2-1),
            n represents an integer of 2 to 5 (i.e., 2, 3, 4, or 5),
            in Formula (R2-1), R3 and R4 each independently represent a hydrogen atom or an acyl group,
            in Formula (R2-2),
            a represents an optionally substituted alkylene group having 1 to 4 carbon atoms or an optionally substituted alkenylene group having 2 to 4 carbon atoms,
            R5 represents a hydrogen atom (H) or an optionally substituted alkyl group having 1 to 4 carbon atoms,
         in Formula (II),
            X1 represents an interatomic bond or a methyleneoxy group (CH₂O),
            X2 represents an interatomic bond or a carbonyl group (C(=O)),
            Y represents an oxygen atom (O) or a nitrogen atom (NH) to which a hydrogen atom is bonded,
            R1 represents a hydrogen atom (H) or a methyl group,
            R2 represents an amino acid, agmatine, guanidine, an aliphatic alcohol, a fatty acid, a structure represented by Formula (R2-1), or a structure represented by Formula (R2-2), and
            b-c represents CH-CH₂ or C=CH.
[18] A method for producing a plant body, including:
   cultivating a plant that is a parasitism target of a parasitic plant;
   applying the following Component (A), (B), or (C) to a seed of the parasitic plant in a late stage of the cultivation, thereby inducing germination of the parasitic plant; and
   harvesting a plant body of the plant that is a parasitism target of the parasitic plant:
      (A) a compound represented by Formula (I) described later;
      (B) a compound represented by Formula (II) described later; and
      (C) an amino acid fermentation by-product, wherein
         in Formula (I),
            X represents an interatomic bond or an oxycarbonyl group (OC(=O)),
            Y represents an oxygen atom (O), a nitrogen atom to which a hydrogen atom is bonded (NH), or a nitrogen atom to which a methyl group is bonded (NMe),
            R1 represents a hydrogen atom (H) or a methyl group,
            R2 represents an amino acid, agmatine, guanidine, a structure represented by Formula (R2-1) described later, or a structure represented by Formula (R2-2) described later,
            in Formula (R2-1),
            n represents an integer of 2 to 5 (i.e., 2, 3, 4, or 5),
            in Formula (R2-1), R3 and R4 each independently represent a hydrogen atom or an acyl group,
            in Formula (R2-2),
            a represents an optionally substituted alkylene group having 1 to 4 carbon atoms or an optionally substituted alkenylene group having 2 to 4 carbon atoms,
            R5 represents a hydrogen atom (H) or an optionally substituted alkyl group having 1 to 4 carbon atoms,
         in Formula (II),
            X1 represents an interatomic bond or a methyleneoxy group (CH₂O),
            X2 represents an interatomic bond or a carbonyl group (C(=O)),
            Y represents an oxygen atom (O) or a nitrogen atom (NH) to which a hydrogen atom is bonded,
            R1 represents a hydrogen atom (H) or a methyl group,
            R2 represents an amino acid, agmatine, guanidine, an aliphatic alcohol, a fatty acid, a structure represented by Formula (R2-1), or a structure represented by Formula (R2-2), and
            b-c represents CH-CH₂ or C=CH.
[19] A method for producing a plant body, including:
   cultivating a plant that is a parasitism target of a parasitic plant;
   applying the following Component (A), (B), or (C) to a seed of the parasitic plant during the cultivation, thereby inhibiting germination of the parasitic plant; and
   harvesting a plant body of the plant that is a parasitism target of the parasitic plant:
      (A) a compound represented by Formula (I) described later;
      (B) a compound represented by Formula (II) described later; and
      (C) an amino acid fermentation by-product, wherein
         in Formula (I),
            X represents an interatomic bond or an oxycarbonyl group (OC(=O)),
            Y represents an oxygen atom (O), a nitrogen atom to which a hydrogen atom is bonded (NH), or a nitrogen atom to which a methyl group is bonded (NMe),
            R1 represents a hydrogen atom (H) or a methyl group,
            R2 represents an amino acid, agmatine, guanidine, a structure represented by Formula (R2-1) described later, or a structure represented by Formula (R2-2) described later,
            in Formula (R2-1),
            n represents an integer of 2 to 5 (i.e., 2, 3, 4, or 5),
            in Formula (R2-1), R3 and R4 each independently represent a hydrogen atom or an acyl group,
            in Formula (R2-2),
            a represents an optionally substituted alkylene group having 1 to 4 carbon atoms or an optionally substituted alkenylene group having 2 to 4 carbon atoms,
            R5 represents a hydrogen atom (H) or an optionally substituted alkyl group having 1 to 4 carbon atoms,
         in Formula (II),
            X1 represents an interatomic bond or a methyleneoxy group (CH₂O),
            X2 represents an interatomic bond or a carbonyl group (C(=O)),
            Y represents an oxygen atom (O) or a nitrogen atom (NH) to which a hydrogen atom is bonded,
            R1 represents a hydrogen atom (H) or a methyl group,
            R2 represents an amino acid, agmatine, guanidine, an aliphatic alcohol, a fatty acid, a structure represented by Formula (R2-1), or a structure represented by Formula (R2-2), and
            b-c represents CH-CH₂ or C=CH.
[20] The method described above, wherein the parasitic plant is controlled by inducing suicide germination of the parasitic plant or by inhibiting germination of the parasitic plant.
[21] The method described above, wherein the application controls the parasitic plant.
[22] The method described above, wherein the parasitic plant is a plant of the family Orobanchaceae, a plant of the family Scrophulariaceae, or a plant of the family Convolvulaceae.
[23] The method described above, wherein the parasitic plant is a plant of the genus Striga, a plant of the genus Orobanche, a plant of the genus Phelipanche, a plant of the genus Alectra, or a plant of the genus Cuscuta.
[24] The method described above, wherein the parasitic plant is Striga asiatica, Striga gesnerioides, Striga hermonthica, Striga aspera, Striga asiatica, Striga curviflora, Striga parviflora, Striga angustifolia, Striga latericea, Striga aequinoctialis, Striga angolensis, Striga bilabiate, Striga brachycalyx, Striga chrsantha, Striga dalzielii, Striga elegans, Striga forbesii, Striga gastonii, Striga gracillima, Striga hallaei, Striga hirsuta, Striga junodii, Striga klingii, Striga lepidagathidis, Striga lutea, Striga macrantha, Striga passargei, Striga pinnatifida, Striga primuloides, Striga yemenica, Striga pubiflora, Orobanche ramosa, Orobanche minor, Orobanche crenata, Orobanche cumana, Orobanche foetida, Orobanche aegyptiaca, Orobanche cernua, Phelipanche ramosa, Phelipanche aegyptiaca, Alectra vogelii, Alectra picta, Alectra sessiliflora, Alectra orobanchoides, Alectra fluminensis, Cuscuta australis, Cuscuta campestris, Cuscuta chinensis, Cuscuta indecora, Cuscuta epithymum, Cuscuta epilinum, Cuscuta gronovii, Cuscuta planiflora, Cuscuta monogyna, Cuscuta pedicellata, Cuscuta palaestina, or Cuscuta rejlexa.
[25] The method described above, wherein for the Component (A), Y is NH and R1 is a methyl group.
[26] The method described above, wherein the Component (A) satisfies any one of the following conditions:
   (1) X is an interatomic bond or an oxycarbonyl group, and R2 is an amino-linked amino acid, amino-linked agmatine, or amino-linked guanidine;
   (2) X is an interatomic bond, and R2 is a carboxyl-linked amino acid;
   (3) X is an interatomic bond, and R2 is a hydroxyl-linked amino acid;
   (4) X is an interatomic bond, and R2 is a thiol-linked amino acid;
   (5) X is an interatomic bond, and R2 is an amide-linked amino acid;
   (6) X is an interatomic bond or an oxycarbonyl group, and R2 is a structure represented by Formula (R2-1); and
   (7) X is an interatomic bond, and R2 is a structure represented by Formula (R2-2).
[27] The method described above, wherein the Component (A) satisfies any one of the following conditions:
   (1) X is an interatomic bond, Y is NH, R1 is a methyl group, and R2 is an amino-linked amino acid, amino-linked agmatine, amino-linked guanidine, or a structure represented by Formula (R2-1); and
   (2) X is an oxycarbonyl group, Y is NH, R1 is a methyl group, and R2 is a carboxyl-linked amino acid or a structure represented by Formula (R2-2).
[28] The composition described above, wherein for the Component (B), Y is NH, b-c is CH-CH₂, and R1 is H.
[29] The method described above, wherein the Component (B) satisfies any one of the following conditions:
   (1) X1 is an interatomic bond, X2 is a carbonyl group, and R2 is an amino-linked amino acid, amino-linked agmatine, or amino-linked guanidine;
   (2) X1 is a methyleneoxy group, X2 is an interatomic bond, and R2 is a carboxyl-linked amino acid;
   (3) X1 is an interatomic bond, X2 is a carbonyl group, and R2 is an aliphatic alcohol;
   (4) X1 is a methyleneoxy group, X2 is an interatomic bond, and R2 is a fatty acid;
   (5) X1 is an interatomic bond, X2 is a carbonyl group, and R2 is a structure represented by Formula (R2-1);
   (6) X1 is a methyleneoxy group, X2 is an interatomic bond, and R2 is a structure represented by Formula (R2-2); and
   (7) X1 is an interatomic bond, X2 is an interatomic bond, and R2 is amino-linked guanidine.
[30] The method described above, wherein the Component (B) satisfies any one of the following conditions:
   (1) X1 is an interatomic bond, X2 is a carbonyl group, Y is NH, b-c is CH-CH₂, R1 is H, and R2 is an amino-linked amino acid, amino-linked agmatine, or a structure represented by Formula (R2-1);
   (2) X1 is a methyleneoxy group, X2 is an interatomic bond, Y is NH, b-c is CH-CH₂, R1 is H, and R2 is a carboxyl-linked amino acid, a fatty acid having 2 to 18 carbon atoms, or a structure represented by Formula (R2-2); and
   (3) X1 is an interatomic bond, X2 is an interatomic bond, Y is an oxygen atom (O), b-c is C=CH, R1 is a methyl group, and R2 is an amino-linked guanidine.
[31] The method described above, excluding methods applying, as the Component (B), a compound represented by Formula (Compound 41), (Compound 50), (Compound 52), (Compound 54), (Compound 55), and (Compound 77) described later.
[32] The method described above, wherein the Component (A) or (B) is selected from compounds represented by Formulae (Compound 1) to (Compound 20), (Compound 23), (Compound 26) to (Compound 40), (Compound 42) to (Compound 49), (Compound 51), (Compound 53), (Compound 56) to (Compound 76), (Compound 78) to (Compound 80), and (Compound 82) to (Compound 90) described later.
[33] The method described above, wherein the Component (C) is a fermentation by-product of lysine, tryptophan, threonine, valine, leucine, or isoleucine.
[34] The method described above, wherein the Component (A), (B), or (C) is used in a liquid form containing the Component (A), (B), or (C) at a concentration of from 10 nM to 10 mM.

### Brief Description of Drawings

FIG. 1 is a diagram showing the control effect of Compound 5 or synthetic strigolactone GR24 on Orobanche minor by inducing suicide germination.
FIG. 2 is a diagram (photograph) showing the control effect of Compound 5 or synthetic strigolactone GR24 on Orobanche minor by inducing suicide germination.

### Description of Embodiments

The present invention will be described in detail below.

### <1> Active Ingredient

The active ingredients used in the present invention include the following Components (A) to (C):
(A) a compound represented by the following Formula (I);
(B) a compound represented by the following Formula (II); and
(C) an amino acid fermentation by-product.

Component (A) is a compound represented by the following Formula (I). Regarding component (A), "Rⁿ" and "Rn" (n is a positive integer) may be used interchangeably.

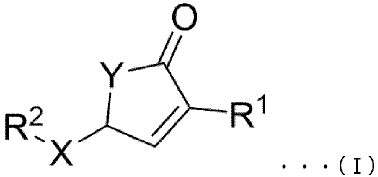

In Formula (I), the ring structure on the right side is also referred to as the "D ring."

Formula (I), X represents an interatomic bond or an oxycarbonyl group (OC(=O)). The "oxycarbonyl group" as X means that O is bonded to the D ring, and C(=O) is bonded to R2.

In Formula (I), Y represents an oxygen atom (O), a nitrogen atom to which a hydrogen atom is bonded (NH), or a nitrogen atom to which a methyl group is bonded (NMe).

In Formula (I), R1 represents a hydrogen atom (H) or a methyl group.

In Formula (I), R2 represents an amino acid, agmatine, guanidine, a structure represented by the following Formula (R2-1), or a structure represented by the following Formula (R2-2). In Formula (I), R2 may be, in particular, an amino acid, agmatine, a structure represented by the following Formula (R2-1), or a structure represented by the following Formula (R2-2).

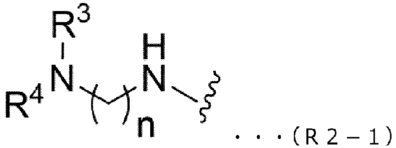

In Formula (R2-1), n represents an integer of 2 to 5 (i.e., 2, 3, 4, or 5).
in Formula (R2-1), R3 and R4 each independently represent a hydrogen atom or an acyl group,

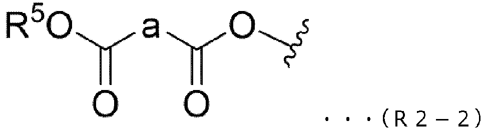

In Formula (R2-2), a represents an optionally substituted alkylene group having 1 to 4 carbon atoms or an optionally substituted alkenylene group having 2 to 4 carbon atoms.

In Formula (R2-2), R5 represents a hydrogen atom (H) or an optionally substituted alkyl group having 1 to 4 carbon atoms. In Formula (R2-2), R5 may be, in particular, an optionally substituted alkyl group having 1 to 4 carbon atoms.

Unless otherwise specified, X, Y, n, and R1 to R5 can each be independently selected for Component (A).

The "optionally substituted functional group" is a general term for a functional group that is substituted and a functional group that is not substituted. In other words, for example, the "optionally substituted alkyl group" is a general term for an alkyl group that is substituted and an alkyl group that is not substituted. The functional group that is substituted is also referred to as a "substituted functional group," and the functional group that is not substituted is also referred to as an "unsubstituted functional group." In other words, for example, the alkyl group that is substituted is also referred to as a "substituted alkyl group," and the alkyl group that is not substituted is also referred to as an "unsubstituted alkyl group." A "functional group" without reference to substitution means a functional group that is not substituted unless otherwise specified. In other words, for example, an "alkyl group" without reference to substitution means an alkyl group that is not substituted unless otherwise specified. Unless otherwise specified, the "number of carbon atoms" in an optionally substituted functional group means the number of carbon atoms in the functional group in an unsubstituted state (i.e., the number of carbon atoms not including the number of carbon atoms of the substituents), regardless of whether or not the functional group is substituted. The description regarding the unsubstituted functional group can also be applied mutatis mutandis to the moiety other than the substituent in the substituted functional group. In other words, for example, the description regarding the unsubstituted alkyl group can also be applied mutatis mutandis to the moiety other than the substituent in the substituted alkyl group (i.e., the alkyl group moiety).

The expression "functional group is substituted" means that one or more of the hydrogen atoms constituting a functional group are substituted by a substituent. The expression "functional group is substituted" can also be referred to as "functional group has a substituent." The number of hydrogen atoms substituted by a substituent may be, for example, from 1 to 5, from 1 to 4, from 1 to 3, or 1 to 2. The number of hydrogen atoms substituted by a substituent may specifically be, for example, 1, 2, 3, 4, or 5. The number of hydrogen atoms substituted by a substituent may be interpreted as the number of substituents possessed by the functional group. When two or more hydrogen atoms are substituted by a substituent, the substituent is selected independently for each hydrogen atom. Examples of the hydrogen atom substituted by a substituent include a hydrogen atom bonded to a carbon atom, a hydrogen atom bonded to a nitrogen atom, and a hydrogen atom bonded to an oxygen atom. The hydrogen atom bonded to the carbon atom may or may not be, for example, a hydrogen atom bonded to a terminal carbon atom. The "terminal carbon atom" means the carbon atom at the end of a carbon chain. When the carbon chain is branched, the terminus may be the terminus of any branch.

Examples of a substituted alkylene group or a substituent possessed by a substituted alkenylene group as a include a halogen atom, a hydroxyl group, an amino group, a carboxyl group, an aminocarbonyl group, a mercapto group, an optionally substituted aryl group, an optionally substituted heteroaryl group, an optionally substituted alkoxy group, an optionally substituted alkylamino group, an optionally substituted alkoxycarbonylamino group, an optionally substituted alkoxycarbonyl group, and an optionally substituted alkylthio group. Examples of a substituent possessed by a substituted alkyl group as R5 include a halogen atom, a hydroxyl group, an amino group, a carboxyl group, an aminocarbonyl group, a mercapto group, an optionally substituted aryl group, an optionally substituted heteroaryl group, an optionally substituted alkoxy group, an optionally substituted alkylamino group, an optionally substituted alkoxycarbonylamino group, an optionally substituted alkoxycarbonyl group, and an optionally substituted alkylthio group. Examples of a substituent possessed by a functional group (e.g., , a substituted alkyl group, a substituted cycloalkyl group, a substituted alkenyl group, a substituted aryl group, or a substituted alkoxy group) constituting an acyl group as R3 or R4 include a halogen atom, a hydroxyl group, an amino group, a carboxyl group, an aminocarbonyl group, a mercapto group, an optionally substituted aryl group, an optionally substituted heteroaryl group, an optionally substituted alkoxy group, an optionally substituted alkylamino group, an optionally substituted alkoxycarbonylamino group, an optionally substituted alkoxycarbonyl group, and an optionally substituted alkylthio group.

Examples of a substituent possessed by a substituted aryl group at a substituted alkylene group or a substituted alkenylene group as a include a halogen atom, a hydroxyl group, an amino group, a carboxyl group, and an alkyl group. Examples of a substituent possessed by a substituted heteroaryl group at a substituted alkylene group or a substituted alkenylene group as a include a halogen atom, a hydroxyl group, an amino group, a carboxyl group, and an alkyl group. Examples of a substituent possessed by a substituted aryl group at a substituted alkyl group as R5 include a halogen atom, a hydroxyl group, an amino group, a carboxyl group, and an alkyl group. Examples of a substituent possessed by a substituted heteroaryl group at a substituted alkyl group as R5 include a halogen atom, a hydroxyl group, an amino group, a carboxyl group, and an alkyl group. Examples of a substituent possessed by a substituted aryl group at a functional group constituting an acyl group as R3 or R4 include a halogen atom, a hydroxyl group, an amino group, a carboxyl group, and an alkyl group. Examples of a substituent possessed by a substituted heteroaryl group at a functional group constituting an acyl group as R3 or R4 include a halogen atom, a hydroxyl group, an amino group, a carboxyl group, and an alkyl group.

Examples of a substituent possessed by a substituted alkoxy group at a substituted alkylene group or a substituted alkenylene group as a include a halogen atom, a hydroxyl group, an amino group, a carboxyl group, an aminocarbonyl group, an aryl group, and a heteroaryl group. Examples of a substituent possessed by a substituted alkoxycarbonyl group at a substituted alkylene group or a substituted alkenylene group as a include a halogen atom, a hydroxyl group, an amino group, a carboxyl group, an aminocarbonyl group, an aryl group, and a heteroaryl group. Examples of a substituent possessed by a substituted alkoxy group at a substituted alkyl group as R5 include a halogen atom, a hydroxyl group, an amino group, a carboxyl group, an aminocarbonyl group, an aryl group, and a heteroaryl group. Examples of a substituent possessed by a substituted alkoxycarbonyl group at a substituted alkyl group as R5 include a halogen atom, a hydroxyl group, an amino group, a carboxyl group, an aminocarbonyl group, an aryl group, and a heteroaryl group. Examples of a substituent possessed by a substituted alkoxy group at a functional group constituting an acyl group as R3 or R4 include a halogen atom, a hydroxyl group, an amino group, a carboxyl group, an aminocarbonyl group, an aryl group, and a heteroaryl group. Examples of a substituent possessed by a substituted alkoxycarbonyl group at a functional group constituting an acyl group as R3 or R4 include a halogen atom, a hydroxyl group, an amino group, a carboxyl group, an aminocarbonyl group, an aryl group, and a heteroaryl group.

Examples of a substituent possessed by a substituted alkylamino group at a substituted alkylene group or a substituted alkenylene group as a include a halogen atom, a hydroxyl group, an amino group, a carboxyl group, an aminocarbonyl group, an N-alkyl group, an aryl group, and a heteroaryl group. Examples of a substituent possessed by a substituted alkoxycarbonylamino group at a substituted alkylene group or a substituted alkenylene group as a include a halogen atom, a hydroxyl group, an amino group, a carboxyl group, an aminocarbonyl group, an N-alkyl group, an aryl group, and a heteroaryl group. Examples of a substituent possessed by a substituted alkylamino group at a substituted alkyl group as R5 include a halogen atom, a hydroxyl group, an amino group, a carboxyl group, an aminocarbonyl group, an N-alkyl group, an aryl group, and a heteroaryl group. Examples of a substituent possessed by a substituted alkoxycarbonylamino group at a substituted alkyl group as R5 include a halogen atom, a hydroxyl group, an amino group, a carboxyl group, an aminocarbonyl group, an N-alkyl group, an aryl group, and a heteroaryl group. Examples of a substituent possessed by a substituted alkylamino group at a functional group constituting an acyl group as R3 or R4 include a halogen atom, a hydroxyl group, an amino group, a carboxyl group, an aminocarbonyl group, an N-alkyl group, an aryl group, and a heteroaryl group. Examples of a substituent possessed by a substituted alkoxycarbonylamino group at a functional group constituting an acyl group as R3 or R4 include a halogen atom, a hydroxyl group, an amino group, a carboxyl group, an aminocarbonyl group, an N-alkyl group, an aryl group, and a heteroaryl group. The "N-alkyl group" refers to an alkyl group that substitutes the hydrogen atom of an amino group.

Examples of a halogen atom include a fluorine atom, a chlorine atom, a bromine atom, and an iodine atom.

Examples of the alkyl group include an alkyl group having 1 to 12 carbon atoms. Particular examples of the alkyl group include an alkyl group having 1 to 6 carbon atoms. Further particular examples of the alkyl group include an alkyl group having 1 to 4 carbon atoms. The alkyl group may be linear or branched. Examples of an alkyl group having 1 to 6 carbon atoms include a methyl group, an ethyl group, a propyl group, an isopropyl group, a butyl group, an isobutyl group, a sec-butyl group, a tert-butyl group, a pentyl group, an isopentyl group, a 2,3-dimethylpropyl group, and a hexyl group. Examples of an alkyl group having 1 to 4 carbon atoms include a methyl group, an ethyl group, a propyl group, an isopropyl group, a butyl group, an isobutyl group, a sec-butyl group, and a tert-butyl group. The description regarding the alkyl group can also apply mutatis mutandis to the N-alkyl group.

The alkylene group may be linear or branched. Examples of an alkylene group having 1 to 4 carbon atoms include a methylene group, an ethylene group, a propylene group, an isopropylene group, a butylene group, an isobutylene group, a sec-butylene group, and a tert-butylene group.

The alkenylene group may be linear or branched. Examples of an alkenylene group having 2 to 4 carbon atoms include an ethenylene group, a propenylene group, an isopropenylene group, a butenylene group, an isobutenylene group, and a sec-butenylene group.

Examples of the aryl group include an aryl group having 6 to 14 carbon atoms. Particular examples of the aryl group include an aryl group having 6 to 10 carbon atoms. Specific examples of the aryl group include a phenyl group, a naphthyl group, and a fluorenyl group.

The "heteroaryl group" means an aryl group having, as a ring-constituting atom, at least one heteroatom selected from the group consisting of a nitrogen atom, an oxygen atom, and a sulfur atom. Examples of the heteroaryl group include a heteroaryl group having 3 to 14 carbon atoms. Particular examples of the heteroaryl group include, a heteroaryl group having 4 to 10 carbon atoms. Further particular examples of the heteroaryl group include a heteroaryl group having 4 to 9 carbon atoms. Specific examples of the heteroaryl group include a furanyl group, a pyrrolyl group, an oxazolyl group, an imidazolyl group, a pyrazolyl group, a pyranyl group, an indenyl group, a thiophenyl group, a pyridinyl group, an indolyl group, and a quinolinyl group. Particular examples of the heteroaryl group include an imidazolyl group and an indolyl group.

Examples of the alkoxy group include an alkoxy group having 1 to 6 carbon atoms. Particular examples of the alkoxy group include an alkoxy group having 1 to 4 carbon atoms. The alkoxy group may be linear or branched. Specific examples of the alkoxy group include a methoxy group, an ethoxy group, a 1-propoxy group, a 2-propoxy group, an n-butoxy group, an i-butoxy group, a sec-butoxy group, a tert-butoxy group, a 1-pentyloxy group, a 2-pentyloxy group, a 3-pentyloxy group, a 2-methyl-1-butyloxy group, a 3-methyl-1-butyloxy group, a 2-methyl-2-butyloxy group, a 3-methyl-2-butyloxy group, a 2,2-dimethyl-1-propyloxy group, a 1-hexyloxy group, a 2-hexyloxy group, and a 3-hexyloxy group. Particular examples of the alkoxy group include a tert-butoxy group.

The optionally substituted alkyl group is an alkyl group or a substituted alkyl group. The alkyl group is as described above. For an alkyl group and a substituent constituting a substituted alkyl group, the above descriptions regarding an alkyl group and its substituent can be applied mutatis mutandis, respectively. Particular examples of the optionally substituted alkyl group having 1 to 4 carbon atoms include a methyl group, an ethyl group, a tert-butyl group, and a benzyl group.

The optionally substituted alkylene group may be an alkylene group or a substituted alkylene group. The alkylene group is as described above. For an alkylene group and a substituent constituting a substituted alkylene group, the above descriptions regarding an alkylene group and its substituent can be applied mutatis mutandis, respectively.

The optionally substituted alkenylene group is an alkenylene group or a substituted alkenylene group. The alkenylene group is as described above. For an alkenylene group and a substituent constituting a substituted alkenylene group, the above descriptions regarding an alkenylene group and its substituent can be applied mutatis mutandis, respectively.

The optionally substituted aryl group is an aryl group or a substituted aryl group. The aryl group is as described above. For an aryl group and a substituent constituting a substituted aryl group, the above descriptions regarding an aryl group and its substituent can be applied mutatis mutandis, respectively.

Specific examples of the substituted aryl group include an optionally substituted alkylaryl group (i.e., an alkylaryl group or a substituted alkylaryl group). For an alkyl group, an aryl group, and a substituent constituting an alkylaryl group or substituted alkylaryl group, the above descriptions regarding an alkyl group, an aryl group, and their substituents can be applied mutatis mutandis, respectively. Specific examples of the optionally substituted alkylaryl group include a methylphenyl group (e.g., a 2-, 3-, or 4-methylphenyl group).

Specific examples of the substituted aryl group include a hydroxyphenyl group (such as a 2-, 3-, or 4-hydroxyphenyl group), a chlorophenyl group (such as a 2-, 3-, or 4-chlorophenyl group), a dichlorophenyl group (such as a 2,5-dichlorophenyl group), a fluorophenyl group (such as a 2-, 3-, or 4-fluorophenyl group), and a 2,3-dihydroxyindenyl group.

The optionally substituted heteroaryl group is a heteroaryl group or a substituted heteroaryl group. The heteroaryl group is as described above. For a heteroaryl group and a substituent constituting a substituted heteroaryl group, the above descriptions regarding a heteroaryl group and its substituent can be applied mutatis mutandis, respectively.

The optionally substituted alkoxy group is an alkoxy group or a substituted alkoxy group. The alkoxy group is as described above. For an alkoxy group and a substituent constituting a substituted alkoxy group, the above descriptions regarding an alkoxy group and its substituent can be applied mutatis mutandis, respectively.

Specific examples of the substituted alkoxy group include an optionally substituted arylalkoxy group (i.e., an arylalkoxy group or a substituted arylalkoxy group). For an aryl group, an alkoxy group, and a substituent constituting an arylalkoxy group or substituted arylalkoxy group, the above descriptions regarding an aryl group, an alkoxy group, and their substituents can be applied mutatis mutandis, respectively. Specific examples of the optionally substituted arylalkoxy group include a phenylmethoxy group.

Specific examples of the substituted alkoxy group include a hydroxyalkoxy group (e.g., a hydroxyethoxy group) and a trifluoromethoxy group.

The optionally substituted alkylamino group is an alkylamino group or a substituted alkylamino group. For an alkyl group constituting an alkylamino group, the above description regarding an alkyl group can be applied mutatis mutandis. For an alkyl group and a substituent constituting a substituted alkylamino group, the above descriptions regarding an alkyl group and its substituent can be applied mutatis mutandis. For example, the number of carbon atoms in the above-described alkyl group (e.g., from 1 to 12 or from 1 to 6) may be interpreted as the number of carbon atoms in an optionally substituted alkylamino group (however, the number of carbon atoms in the substituents is not included). Specific examples of the substituted alkylamino group include an optionally substituted carboxyalkylamino group (i.e., a carboxyalkylamino group or a substituted carboxyalkylamino group). The optionally substituted carboxyalkylamino group may have a number of carbon atoms (not including the number of carbon atoms of the substituents) of, for example, from 2 to 13 or from 2 to 7. Specific examples of the carboxyalkylamino group include a carboxymethylamino group and a 1-methylcarboxymethylamino group. Specific examples of the substituted carboxyalkylamino group include a hydroxyl group, an amino group, a carboxyl group, a phenyl group, an indolyl group, and a carboxyalkylamino group substituted by an N-methyl group. Specific examples of the substituted carboxyalkylamino group include a 1-(aminobutyl)carboxymethylamino group, a 1-methylcarboxymethylamino group, a 1-(indolylmethyl)carboxymethylamino group, a 1-(carboxymethyl)carboxymethylamino group, a 1-(1-hydroxyethyl)carboxymethylamino group, a 1-(hydroxymethyl)carboxymethylamino group, a 1-isobutylcarboxymethylamino group, a 1-benzylcarboxymethylamino group, and an N-methylcarboxymethylamino group.

The optionally substituted alkoxycarbonyl group is an alkoxycarbonyl group or a substituted alkoxycarbonyl group. For an alkoxy group constituting an alkoxycarbonyl group, the above description regarding an alkoxy group can be applied mutatis mutandis. For an alkoxy group and a substituent constituting a substituted alkoxycarbonyl group, the above descriptions regarding an alkoxy group and its substituent can be applied mutatis mutandis. Specific examples of the optionally substituted alkoxycarbonyl group include an indolylacetylmethoxycarbonyl group, a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group (also referred to as Boc), a phenylmethoxycarbonyl group, a 9-fluorenylmethyloxycarbonyl group (also referred to as Fmoc), a 3-methylphenyloxyacetyl group, a 3-chlorophenylmethoxycarbonyl group, a trifluoromethoxycarbonyl group, a 2,5-dichlorobenzoyl group, and a benzyloxycarbonyl group (also referred to as Cbz). Particular examples of the optionally substituted alkoxycarbonyl group include a tert-butoxycarbonyl group, a 9-fluorenylmethyloxycarbonyl group, and a benzyloxycarbonyl group.

The optionally substituted alkoxycarbonylamino group is an alkoxycarbonylamino group or a substituted alkoxycarbonylamino group. For an alkoxy group (or an alkoxycarbonyl group) constituting an alkoxycarbonylamino group, the above description regarding an alkoxy group (or an alkoxycarbonyl group) can be applied mutatis mutandis. For an alkoxy group (or an alkoxycarbonyl group) and a substituent constituting a substituted alkoxycarbonylamino group, the above descriptions regarding an alkoxy group (or an alkoxycarbonyl group) and its substituent can be applied mutatis mutandis. Specific examples of the optionally substituted alkoxycarbonylamino group include a tert-butoxycarbonylamino group, a 9-fluorenylmethyloxycarbonyl amino group, and a benzyloxycarbonyl amino group.

The optionally substituted alkylthio group is an alkylthio group or a substituted alkylthio group. For an alkyl group constituting an alkylthio group, the above description regarding an alkyl group can be applied mutatis mutandis. For an alkyl group and a substituent constituting a substituted alkylthio group, the above descriptions regarding an alkyl group and its substituent can be applied mutatis mutandis. Specific examples of the optionally substituted alkylthio group include a methylthio group.

Examples of the acyl group include an optionally substituted alkylcarbonyl group, an optionally substituted cycloalkylcarbonyl group, an optionally substituted alkenylcarbonyl group, an optionally substituted arylcarbonyl group, and an optionally substituted alkoxycarbonyl group. The optionally substituted alkylcarbonyl group is an alkylcarbonyl group or a substituted alkylcarbonyl group. The optionally substituted cycloalkylcarbonyl group is a cycloalkylcarbonyl group or a substituted cycloalkylcarbonyl group. The optionally substituted alkenylcarbonyl group is an alkenylcarbonyl group or a substituted alkenylcarbonyl group. The optionally substituted arylcarbonyl group is an arylcarbonyl group or a substituted arylcarbonyl group. The optionally substituted alkoxycarbonyl group is an alkoxycarbonyl group or a substituted alkoxycarbonyl group. The substituent possessed by a functional group constituting an acyl group (e.g., a substituted alkyl group, a substituted cycloalkyl group, a substituted alkenyl group, a substituted aryl group, or a substituted alkoxy group) is as described above. For an optionally substituted alkyl group, an optionally substituted aryl group, and an optionally substituted alkoxy group constituting an acyl group, the above descriptions regarding an optionally substituted alkyl group, an optionally substituted aryl group, and an optionally substituted alkoxy group can be applied mutatis mutandis, respectively. Examples of the cycloalkyl group include a cyclic alkyl group having 3 to 8 carbon atoms. Particular examples of the cycloalkyl group include a cyclic alkyl group having 4 to 6 carbon atoms. Specific examples of the cycloalkyl group include a cyclopropyl group, a cyclobutyl group, a cyclopentyl group, a cyclohexyl group, a cycloheptyl group, and a cyclooctyl group. Examples of the alkenyl group include an alkenyl group having 2 to 6 carbon atoms. The alkenyl group may be linear or branched. Specific examples of the alkenyl group include a vinyl group, an allyl group, a propenyl group, a butenyl group, a butadienyl group, a pentenyl group, a pentadienyl group, a hexenyl group, and a hexadienyl group. Particular examples of the acyl group include an optionally substituted alkylcarbonyl group and an optionally substituted alkoxycarbonyl group. Specific examples of the acyl group include an acetyl group, a propionyl group, a butyryl group, an isobutyryl group, a valeryl group, an isovaleryl group, a pivaloyl group, a hexanoyl group, an acryloyl group, a methacryloyl group, a crotonoyl group, an isocrotonoyl group, a cyclopropanoyl group, a cyclobutanoyl group, a cyclopentanoyl group, a cyclohexanoyl group, a benzoyl group, and the above-mentioned optionally substituted alkoxycarbonyl groups. Particular examples of the acyl group include an acetyl group, a tert-butoxycarbonyl group, a 9-fluorenylmethyloxycarbonyl group, and a benzyloxycarbonyl group.

The "amino acid" as R2 means an amino acid bonded to X through an appropriate bond. In Formula (I), the "bond between the amino acid and X" shall be read as the "bond between the amino acid and the D ring" when X is an interatomic bond.

Examples of the amino acid as R2 include an amino-linked amino acid, a carboxyl-linked amino acid, a hydroxyl-linked amino acid, a thiol-linked amino acid, and an amide-linked amino acid.

The "amino-linked amino acid" means an amino acid linked to X through the nitrogen atom of the amino group. When the amino acid has two or more amino groups, any of the amino groups may be used to bond with X. For example, an α-amino group or ε-amino group may be used to bond with X.

The "carboxyl-linked amino acid" means an amino acid linked to X through the oxygen atom of OH of the carboxyl group. When the amino acid has two or more carboxyl groups, any of the carboxyl groups may be used to bond with X. For example, an α-carboxyl group or another carboxyl group may be used to bond with X.

The "hydroxyl-linked amino acid" means an amino acid linked to X through the oxygen atom of the hydroxyl group.

The "thiol-linked amino acid" means an amino acid linked to X through the sulfur atom of the thiol group.

The "amide-linked amino acid" means an amino acid linked to X through the nitrogen atom of the amide group.

Examples of the amino acid include: basic amino acids such as lysine, ornithine, arginine, histidine, citrulline, diaminobutanoic acid, and diaminopropanoic acid; aliphatic amino acids such as isoleucine, alanine, valine, leucine, and glycine; amino acids as hydroxymonoaminocarboxylic acids such as threonine and serine; cyclic amino acids (also referred to as "imino acids") such as proline; aromatic amino acids such as phenylalanine, tyrosine, and tryptophan; sulfur-containing amino acids such as cysteine, cystine, and methionine; acidic amino acids such as glutamic acid and aspartic acid; and amino acids having an amide group in the side chain such as glutamine and asparagine. Examples of the amino acid include norvaline, norleucine, α-aminobutyric acid, γ-aminobutyric acid, hydroxyproline, tert-leucine, and sarcosine. The amino acid may or may not have its amino group and/or a carboxyl group with a substituent. In other words, the "amino acid" encompasses an amino acid having its amino group and/or a carboxyl group with a substituent unless otherwise specified. In other words, examples of the amino acid include an amino acid having its amino group and/or a carboxyl group with a substituent as described above. Examples of the substituent possessed by the amino group of the amino acid include an optionally substituted alkoxycarbonyl group and an optionally substituted alkyl group. In other words, the amino group of the amino acid may constitute, for example, an optionally substituted alkoxycarbonylamino group or an optionally substituted alkylamino group. Particular examples of the substituent possessed by the amino group in the amino acid include a tert-butoxycarbonyl group, a 9-fluorenylmethyloxycarbonyl group, and a benzyloxycarbonyl group. Examples of the substituent possessed by the carboxyl group of the amino acid include an optionally substituted alkyl group and an amino group. In other words, the carboxyl group of the amino acid may constitute, for example, an optionally substituted alkoxycarbonyl group or an aminocarbonyl group. Particular examples of the substituent possessed by the carboxyl group of the amino acid include a methyl group, an ethyl group, a tert-butyl group, and a benzyl group.

"Agmatine" as R2 means agmatine bonded to X through an appropriate bond. In Formula (I), the "bond between agmatine and X" shall be read as the "bond between agmatine and the D ring" when X is an interatomic bond.

Examples of agmatine as R2 include amino-linked agmatine.

The "amino-linked agmatine" means agmatine linked to X through the nitrogen atom of the amino group. Any amino group of agmatine may be used to bond with X. For example, an amino group of the guanidine moiety may be used to bond with X, or an N-4-amino group may be used to bond with X.

Agmatine may or may not have a substituent in its amino group. In other words, unless otherwise specified, "agmatine" encompasses those having a substituent in its amino group. For the substituent at the amino group of agmatine, the above description regarding the substituent in the amino group of the amino acid can be applied to mutatis mutandis.

"Guanidine" as R2 means guanidine bonded to X through an appropriate bond. In Formula (I), the "bond between guanidine and X" shall be read as the "bond between guanidine and the D ring" when X is an interatomic bond.

Examples of guanidine as R2 include amino-linked guanidine.

The "amino-linked guanidine" means guanidine linked to X through the nitrogen atom of the amino group.

Guanidine may or may not have a substituent in its amino group. In other words, unless otherwise specified, "guanidine" encompasses those having a substituent in its amino group. For the substituent at the amino group of guanidine, the above description regarding the substituent in the amino group of the amino acid can be applied to mutatis mutandis. Examples of the substituent at the amino group of guanidine include an optionally substituted alkylcarbonyl group. For the optionally substituted alkylcarbonyl group as the substituent at the amino group of guanidine, the above description regarding the optionally substituted alkylcarbonyl group as the acyl group can be applied to mutatis mutandis.

Specific examples of the structure represented by Formula (R2-1) when R3 and R4 are H include ethylenediamine, propylenediamine, putrescine, and cadaverine. Specific examples of the structure represented by formula (R2-1), when R3 and/or R4 are not H, include ethylenediamine, propylenediamine, putrescine, and cadaverine in which the hydrogen atom of the amino group is substituted by R3 and/or R4.

Specific examples of the structure represented by formula (R2-2) include malonic acid, succinic acid, glutaric acid, adipic acid, fumaric acid, maleic acid, and citric acid, in which the hydrogen atom of the carboxyl group is substituted by R5.

In one aspect, Y may be NH, and R1 may be a methyl group.

In one aspect, X may be an interatomic bond or an oxycarbonyl group, and R2 may be an amino-linked amino acid, amino-linked agmatine, or amino-linked guanidine. In one aspect, in particular, X may be an interatomic bond or an oxycarbonyl group, and R2 may be an amino-linked amino acid or amino-linked agmatine.

In one aspect, X may be an interatomic bond, and R2 may be a carboxyl-linked amino acid.

In one aspect, X may be an interatomic bond, and R2 may be a hydroxyl-linked amino acid.

In one aspect, X may be an interatomic bond, and R2 may be a thiol-linked amino acid.

In one aspect, X may be an interatomic bond, and R2 may be an amide-linked amino acid.

In one aspect, X may be an interatomic bond or an oxycarbonyl group, and R2 may be a structure represented by Formula (R2-1).

In one aspect, X may be an interatomic bond, and R2 may be a structure represented by Formula (R2-2).

In one aspect, X may be an interatomic bond, R1 may be a methyl group, and R2 may be an amino-linked amino acid, amino-linked agmatine, amino-linked guanidine, or a structure represented by Formula (R2-1). In one aspect, in particular, X may be an interatomic bond, R1 may be a methyl group, and R2 may be an amino-linked amino acid, amino-linked agmatine, or a structure represented by Formula (R2-1).

In one aspect, X may be an oxycarbonyl group, R1 may be a methyl group, and R2 may be a carboxyl-linked amino acid or a structure represented by Formula (R2-2).

In one aspect, X may be an interatomic bond, Y may be NH, R1 may be a methyl group, R2 may be an amino-linked amino acid, amino-linked agmatine, amino-linked guanidine, or a structure represented by Formula (R2-1). In one aspect, in particular, X may be an interatomic bond, Y may be NH, R1 may be a methyl group, and R2 may be an amino-linked amino acid, amino-linked agmatine, or a structure represented by Formula (R2-1).

In one aspect, X may be an oxycarbonyl group, Y may be NH, R1 may be a methyl group, and R2 may be a carboxyl-linked amino acid or a structure represented by Formula (R2-2).

Component (B) is a compound represented by the following Formula (II). Regarding component (B), "Rⁿ" and "Rn" (n is a positive integer) may be used interchangeably. Regarding component (B), "Xⁿ" and "Xn" (n is a positive integer) may be used interchangeably.

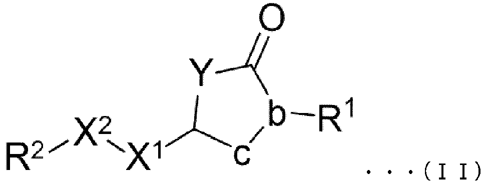

In Formula (II), the ring structure on the right side is also referred to as the "D ring."

In Formula (II), X1 represents an interatomic bond or a methyleneoxy group (CH₂O). The "methyleneoxy group" X1 means that CH₂ is bonded to the D ring, and O is bonded to X2. The "bond between O and X2" of the methyleneoxy group shall be read as the "bond between O and R2" when X2 is an interatomic bond.

In Formula (II), X2 represents an interatomic bond or a carbonyl group (C(=O)).

In Formula (II), Y represents an oxygen atom (O) or a nitrogen atom (NH) to which a hydrogen atom is bonded.

In Formula (II), R1 represents a hydrogen atom (H) or a methyl group.

In Formula (II), R2 represents an amino acid, agmatine, guanidine, an aliphatic alcohol, a fatty acid, a structure represented by the above Formula (R2-1), or a structure represented by the above Formula (R2-2).

In Formula (II), b-c represents CH-CH₂ or C=CH.

Unless otherwise specified, b-c, X1, X2, Y, n, and R1 to R5 can each be independently selected for Component (B).

The structure represented by Formula (R2-1) and the structure represented by Formula (R2-2) are as described above.

The "amino acid" as R2 in Formula (II) means an amino acid bonded to X2 through an appropriate bond. In Formula (II), the "bond between the amino acid and X2" shall be read as the "bond between the amino acid and X1" when X2 is an interatomic bond. In Formula (II), the "bond between the amino acid and X2" shall be read as the "bond between the amino acid and the D ring" when X1 and X2 are interatomic bonds. For the "amino acid" as R2 in Formula (II), the description regarding the "amino acid" as R2 in Formula (I) can be applied mutatis mutandis.

"Agmatine" as R2 in Formula (II) means agmatine bonded to X2 through an appropriate bond. In Formula (II), the "bond between agmatine and X2" shall be read as the "bond between agmatine and X1" when X2 is an interatomic bond. In Formula (II), the "bond between agmatine and X2" shall be read as the "bond between agmatine and the D ring" when X1 and X2 are interatomic bonds. For "agmatine" as R2 in Formula (II), the description regarding "agmatine" as R2 in Formula (I) can be applied mutatis mutandis.

"Guanidine" as R2 in Formula (II) means guanidine bonded to X2 through an appropriate bond. In Formula (II), the "bond between guanidine and X2" shall be read as the "bond between guanidine and X1" when X2 is an interatomic bond. In Formula (II), the "bond between guanidine and X2" shall be read as the "bond between guanidine and the D ring" when X1 and X2 are interatomic bonds. For "guanidine" as R2 in Formula (II), the description regarding "guanidine" as R2 in Formula (I) can be applied mutatis mutandis.

The "aliphatic alcohol" as R2 in Formula (II) means an aliphatic alcohol bonded to X2 through the oxygen atom of a hydroxyl group. In Formula (II), the "bond between the aliphatic alcohol and X2" shall be read as the "bond between the aliphatic alcohol and X1" when X2 is an interatomic bond. In Formula (II), the "bond between the aliphatic alcohol and X2" shall be read as the "bond between the aliphatic alcohol and the D ring" when X1 and X2 are interatomic bonds.

The aliphatic alcohol may be a saturated aliphatic alcohol or an unsaturated aliphatic alcohol. The aliphatic alcohol may be linear or branched. Examples of the aliphatic alcohol include an aliphatic alcohol having 2 to 26, 2 to 22, or 2 to 18 carbon atoms. In particular, the aliphatic alcohol can be an aliphatic alcohol having 2 to 18 carbon atoms. Specific examples of the aliphatic alcohol include ethanol, propanol, isopropanol, butanol, isobutanol, sec-butanol, tert-butanol, pentanol, isopentanol, 2,3-dimethylpropanol, hexanol, heptanol, octanol, nonanol, decanol, undecyl alcohol, dodecyl alcohol, tridecyl alcohol, tetradecyl alcohol, pentadecyl alcohol, hexadecyl alcohol, cis-9-hexadecen-1-ol, heptadecyl alcohol, octadecyl alcohol, cis-9-octadecen-1-ol, cis,cis-9,12-octadecadien-1-ol, 9,12,15-octadecanetrien-1-ol, 6,9,12-octadecanetrien-1-ol, nonadecyl alcohol, eicosanol, heneicosanol, docosanol, tetracosanol, and hexacosanol.

The "fatty acid" as R2 in Formula (II) means a fatty acid bonded to X2 through the oxygen atom of OH of a carboxyl group. In Formula (II), the "bond between the fatty acid and X2" shall be read as the "bond between the fatty acid and X1" when X2 is an interatomic bond. In Formula (II), the "bond between the fatty acid and X2" shall be read as the "bond between the fatty acid and the D ring" when X1 and X2 are interatomic bonds.

The fatty acid may be a saturated fatty acid or an unsaturated fatty acid. The fatty acid alcohol may be linear or branched. Examples of the fatty acid include a fatty acid having 2 to 26, 2 to 22, or 2 to 18 carbon atoms. In particular, the fatty acid can be a fatty acid having 2 to 18 carbon atoms. Specific examples of the fatty acid include acetic acid, propionic acid, succinic acid, butyric acid, valeric acid, caproic acid, enanthic acid, caprylic acid, capric acid, lauric acid, myristic acid, palmitic acid, palmitoleic acid, stearic acid, oleic acid, linoleic acid, α-linolenic acid, γ-linolenic acid, arachidic acid, arachidonic acid, behenic acid, lignoceric acid, nervonic acid, cerotin acid, eicosapentaenoic acid, docosapentaenoic acid, and docosahexaenoic acid.

In one aspect, X1 may be an interatomic bond, and X2 may be a carbonyl group.

In one aspect, X1 may be a methyleneoxy group, and X2 may be an interatomic bond.

In one aspect, X1 may be an interatomic bond, and X2 may be an interatomic bond.

In one aspect, X1 may be a methyleneoxy group, and X2 may be a carbonyl group.

In one aspect, Y may be NH, b-c may be CH-CH₂, and R1 may be H.

In one aspect, X1 may be an interatomic bond, X2 may be a carbonyl group, Y may be NH, b-c may be CH-CH₂, and R1 may be H.

In one aspect, X1 may be a methyleneoxy group, X2 may be an interatomic bond, Y may be NH, b-c may be CH-CH₂, and R1 may be H.

In one aspect, X1 may be an interatomic bond, X2 may be a carbonyl group, and R2 may be an amino-linked amino acid, amino-linked agmatine, or amino-linked guanidine. In one aspect, in particular, X1 may be an interatomic bond, X2 may be a carbonyl group, and R2 may be an amino-linked amino acid or amino-linked agmatine.

In one aspect, X1 may be a methyleneoxy group, X2 may be an interatomic bond, and R2 may be a carboxyl-linked amino acid.

In one aspect, X1 may be an interatomic bond, X2 may be a carbonyl group, and R2 may be an aliphatic alcohol.

In one aspect, X1 may be a methyleneoxy group, X2 may be an interatomic bond, and R2 may be a fatty acid.

In one aspect, X1 may be an interatomic bond, X2 may be a carbonyl group, and R2 may be a structure represented by Formula (R2-1).

In one aspect, X1 may be a methyleneoxy group, X2 may be an interatomic bond, R2 may be a structure represented by Formula (R2-2).

In one aspect, X1 may be an interatomic bond, X2 may be a carbonyl group, Y may be NH, b-c may be CH-CH₂, R1 may be H, and R2 may be an amino-linked amino acid, amino-linked agmatine, amino-linked guanidine, or a structure represented by Formula (R2-1). In one aspect, in particular, X1 may be an interatomic bond, X2 may be a carbonyl group, Y may be NH, b-c may be CH-CH₂, R1 may be H, and R2 may be an amino-linked amino acid, amino-linked agmatine, or a structure represented by Formula (R2-1).

In one aspect, X1 may be a methyleneoxy group, X2 may be an interatomic bond, Y may be NH, b-c may be CH-CH₂, R1 may be H, and R2 may be a carboxyl-linked amino acid, a fatty acid having 2 to 18 carbon atoms, or a structure represented by Formula (R2-2).

In one aspect, X1 may be an interatomic bond, X2 may be an interatomic bond, and R2 may be amino-linked guanidine.

In one aspect, X1 may be an interatomic bond, X2 may be an interatomic bond, Y may be an oxygen atom (O), b-c may be C=CH, R1 may be a methyl group, and R2 may be amino-linked guanidine.

Specific examples of X, Y, n, and R1 to R5 in Component (A) include X, Y, n, and R1 to R5, respectively, in compounds represented by Formulae (Compound 1) to (Compound 20), (Compound 23), (Compound 26) to (Compound 37), (Compound 80), and (Compound 82) to (Compound 85) described later. In other words, specifically, X, Y, n, and R1 to R5 in Component (A) may be selected from, for example, X, Y, n, and R1 to R5, respectively, in compounds represented by Formulae (Compound 1) to (Compound 20), (Compound 23), (Compound 26) to (Compound 37), (Compound 80), and (Compound 82) to (Compound 85) described later.

Specific examples of b-c, X1, X2, Y, n, and R1 to R5 in Component (B) include b-c, X1, X2, Y, n, and R1 to R5, respectively in compounds represented by Formulae (Compound 1) to (Compound 20), (Compound 23), (Compound 26) to (Compound 80), and (Compound 82) to (Compound 90) described later. In other words, specifically, b-c, X1, X2, Y, n, and R1 to R5 in Component (B) may be selected from, for example, b-c, X1, X2, Y, n, and R1 to R5, respectively, in compounds represented by Formula (Compound 1) to (Compound 20), (Compound 23), (Compound 26) to (Compound 80), and (Compound 82) to (Compound 90) described later.

Specific examples of Component (A) or (B) include compounds represented by Formulae (Compound 1) to (Compound 20), (Compound 23), (Compound 26) to (Compound 80), and (Compound 82) to (Compound 90) described later. Particular examples of Component (A) or (B) include compounds represented by Formulae (Compound 1) to (Compound 20), (Compound 23), (Compound 26) to (Compound 61), (Compound 65) to (Compound 80), and (Compound 83) to (Compound 90) described later. Further particular examples of Component (A) or (B) include compounds represented by Formulae (Compound 1) to (Compound 8), (Compound 27) to (Compound 30), (Compound 38) to (Compound 56), and (Compound 66) to (Compound 77) described later. Compounds represented by Formulae (Compound 1) to (Compound 20), (Compound 23), (Compound 26) to (Compound 37), (Compound 80), and (Compound 82) to (Compound 85) may each be an example of Component (A) or (B). Compounds represented by Formulae (Compound 38) to (Compound 79) and (Compound 86) to (Compound 90) may each be an example of Component (B). In one aspect, a compound represented by Formula (Compound 85) may be excluded from Component (A). In one aspect, compounds represented by Formulae (Compound 41), (Compound 50), (Compound 52), (Compound 54), (Compound 55), (Compound 58), (Compound 65), (Compound 77), (Compound 85), (Compound 86), (Compound 87), and (Compound 90) may be excluded from Component (B). In other words, in one aspect, specific examples of Component (A) or (B) include compounds represented by Formulae (Compound 1) to (Compound 20), (Compound 23), (Compound 26) to (Compound 40), (Compound 42) to (Compound 49), (Compound 51), (Compound 53), (Compound 56), (Compound 57), (Compound 59) to (Compound 64), (Compound 66) to (Compound 76), (Compound 78) to (Compound 80), (Compound 82) to (Compound 84), (Compound 88), and (Compound 89). In one aspect, compounds represented by Formulae (Compound 41), (Compound 50), (Compound 52), (Compound 54), (Compound 55), and (Compound 77) may be excluded from Component (B). In other words, in one aspect, specific examples of Component (A) or (B) include compounds represented by Formulae (Compound 1) to (Compound 20), (Compound 23), (Compound 26) to (Compound 40), (Compound 42) to (Compound 49), (Compound 51), (Compound 53), (Compound 56) to (Compound 76), (Compound 78) to (Compound 80), and (Compound 82) to (Compound 90).

When Component (A) or (B) can form a salt, Component (A) or (B) may be used in a free form, a salt form, or a combination thereof. In other words, unless otherwise specified, the term "Component (A)" may mean Component (A) in a free form, or a salt thereof, or a combination thereof. In addition, unless otherwise specified, the term "Component (B)" may mean Component (B) in a free form, or a salt thereof, or a combination thereof. The salt is not particularly limited as long as it does not impair the effects of the present invention. Examples of salts of the acidic group such as a carboxyl group include ammonium salts, salts with alkali metals such as sodium and potassium, salts with alkaline earth metals such as calcium and magnesium, aluminum salts, zinc salts, salts with organic amines such as triethylamine, ethanolamine, morpholine, pyrrolidine, piperidine, piperazine, and dicyclohexylamine, and salts with basic amino acids such as arginine and lysine. Examples of salts of the basic group such as an amino group include salts with inorganic acids such as hydrochloric acid, sulfuric acid, phosphoric acid, nitric acid, and hydrobromic acid, salts with organic carboxylic acids such as formic acid, acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, and their halides. and salts with organic sulfonic acids such as methanesulfonic acid, benzenesulfonic acid, and p-toluenesulfonic acid Examples of halides include heptafluorobutyric acid. One kind of salt may be used, or two or more kinds of salts may be used in combination.

When Component (A) or (B) can form a hydrate, Component (A) or (B) may be used as a non-hydrate, a hydrate, or a combination thereof. In other words, the term "Component (A)" (e.g., "Component (A) in a free form" or "salt of Component (A)") may include both non-hydrate and hydrate forms unless otherwise specified. In addition, the term "Component (B)" (e.g., "Component (B) in a free form" or "salt of Component (B)") may include both non-hydrate and hydrate forms unless otherwise specified.

When used, Component (A) or (B) may be in any form, such as an ion.

One kind of substance may be used, or two or more kinds of substances may be used in combination as Component (A) or (B). When two or more components are selected as Component (A) or (B), the "amount" or "concentration" of Component (A) or (B) may mean the total amount or concentration of the selected components unless otherwise specified.

Component (A) or (B) may be a commercially available product or may be obtained by appropriate production. The method for producing Component (A) or (B) is not particularly limited. Component (A) or (B) can be produced, for example, by a known method. Specifically, Component (A) or (B) can be produced, for example, by chemical synthesis, enzyme reaction, fermentation, extraction, or a combination thereof. Component (A) or (B) may or may not be purified to the desired degree. In other words, as Component (A) or (B), a refined product may be used, or a material containing Component (A) or (B) may be used. Specific examples of materials containing Component (A) or (B) include fermentation products such as culture solutions, bacterial cells, and culture supernatants obtained by culturing microorganisms capable of producing Component (A) or (B), agricultural, marine, and livestock products containing Component (A) or (B), and processed products thereof. Examples of processed products include those obtained by subjecting raw materials, such as the fermentation products described above, to treatments such as concentration, dilution, drying, fractionation, extraction, and purification. As Component (A) or (B), for example, a material having a content of Component (A) or (B) of 1% (w/w) or more, 5% (w/w) or more, 10% (w/w) or more, 30% (w/w) or more, 50% (w/w) or more, 70% (w/w) or more, 90% (w/w) or more, or 95% (w/w) or more may be used.

Component (C) is an amino acid fermentation by-product.

The "amino acid fermentation by-product" is a general term for a liquid remaining after separating an amino acid from an amino acid fermentation liquid (also referred to as "amino acid fermentation by-product liquid"), its concentrate, and its fraction. The concentrate may, for example, be a liquid (i.e., a concentrated liquid) or a solid (i.e., a dried product). The fraction is not particularly limited as long as it contains a fraction having the function of an active ingredient as described below. The term "concentrate fraction" may be used interchangeably with the term "fraction concentrate."

The "amino acid fermentation liquid" means a culture solution containing an amino acid.

Examples of amino acids for the amino acid fermentation by-product and the amino acid fermentation liquid include lysine, tryptophan, threonine, valine, leucine, and isoleucine. Amino acids for the amino acid fermentation by-product and the amino acid fermentation liquid may be an L-amino acid. Any of the amino acids separated from the amino acid fermentation liquid may be in a free form, a salt thereof, or a combination thereof.

The amino acid fermentation liquid can be obtained by culturing a microorganism having an amino acid-producing ability.

The "microorganism having an amino acid-producing ability" may mean a microorganism having an ability to produce a target amino acid when cultured in a medium and accumulating the amino acid in the medium to such an extent that it can be separated.

Examples of the microorganism include bacteria. Examples of the bacteria include bacteria belonging to the family Enterobacteriaceae and coryneform bacteria. Examples of bacteria belonging to the family Enterobacteriaceae include bacteria of the genus Escherichia, such as Escherichia coli, and bacteria of the genus Pantoea, such as Pantoea ananatis. Examples of the coryneform bacteria include bacteria of the genus Corynebacterium, such as Corynebacterium glutamicum.

The microorganism having an amino acid-producing ability may be one that inherently has an amino acid-producing ability, or may be one that has been modified to have an amino acid-producing ability. A microorganism having an amino acid-producing ability can be obtained, for example, by imparting an amino acid-producing ability to a microorganism or by enhancing the amino acid-producing ability of a microorganism. The amino acid-producing ability (specifically, L-amino acid-producing ability) can be imparted or enhanced by, for example, methods that have been conventionally employed in breeding amino acid-producing bacteria (see Amino Acid Fermentation, Academic Publication Center, First published on May 30, 1986, pp. 77-100). The method for imparting or enhancing the amino acid-producing ability (specifically, L-amino acid-producing ability) is disclosed in, for example, US2018-0282773 and WO2018/030507.

L-amino acid-producing bacteria and the method for imparting or enhancing the L-amino acid-producing ability are specifically exemplified below. The properties of L-amino acid-producing bacteria and modifications for imparting or enhancing the L-amino acid-producing ability, as exemplified below, may be used singly or in appropriate combination.

### <L-threonine-producing Bacteria>

Examples of a method for imparting or enhancing an L-threonine-producing ability include modifying bacteria so as to increase the activity of one or more enzymes selected from L-threonine biosynthetic enzymes. Examples of such enzymes include, but are not limited to, aspartokinase III (lysC), aspartate-semialdehyde dehydrogenase (asd), aspartokinase I (thrA), homoserine kinase (thrB), threonine synthase (thrC), and aspartate aminotransferase (aspartate transaminase) (aspC). Among these enzymes, it is preferable to enhance the activity of one or more enzymes selected from aspartokinase III, aspartate-semialdehyde dehydrogenase, aspartokinase I, homoserine kinase, aspartate aminotransferase, and threonine synthase. The L-threonine biosynthetic genes may be introduced into a strain in which threonine degradation is inhibited. An example of a strain in which threonine degradation is inhibited is the E. coli TDH6 strain (Japanese Unexamined Patent Publication No. 2001-346578), which is deficient in threonine dehydrogenase activity.

The activity of L-threonine biosynthetic enzymes is inhibited by the final product, L-threonine. Therefore, to construct an L-threonine-producing bacterium, it is preferable to modify the L-threonine biosynthetic gene to avoid feedback inhibition by L-threonine. The above-described thrA, thrB, and thrC genes constitute the threonine operon, which forms an attenuator structure. The expression of the threonine operon is inhibited by isoleucine and threonine in the culture medium, which is suppressed by attenuation. Enhanced expression of the threonine operon can be achieved by deleting the leader sequence or the attenuator of the attenuation region (Lynn, S. P., Burton, W. S., Donohue, T. J., Gould, R. M., Gumport, R. I., and Gardner, J. F. J. Mol. Biol. 194:59-69 (1987); WO02/26993; WO2005/049808; WO2003/097839).

Although there is a native promoter upstream of the threonine operon, this promoter may be replaced with a non-native promoter (WO98/04715). Alternatively, a threonine operon may be constructed such that genes involved in threonine biosynthesis are expressed under the control of the lambda phage repressor and promoter (EP0593792B). Furthermore, a bacterium modified to be unaffected by feedback inhibition by L-threonine can also be obtained by selecting a strain resistant to the L-threonine analog α-amino-β-hydroxyvaleric acid (AHV).

It is preferable that the threonine operon that is thus modified to be unaffected by feedback inhibition by L-threonine has an increased copy number or is linked to a strong promoter, thereby improving the expression level in a host. The copy number can be increased by introducing a plasmid containing the threonine operon into the host. The copy number can also be increased by transferring the threonine operon onto the genome of the host using a transposon, Mu phage, or the like.

Examples of the method for imparting or enhancing the L-threonine-producing ability also include a method for imparting L-threonine resistance or L-homoserine resistance to the host. Resistance can be imparted, for example, by enhancing the expression of a gene imparting resistance to L-threonine or a gene imparting resistance to L-homoserine. Examples of genes imparting resistance include the rhtAgene (Res. Microbiol. 154:123-135 (2003)), the rhtB gene (EP0994190A), the rhtC gene (EP1013765A), and the yfiK and yeaS genes (EP1016710A). For the method for imparting L-threonine resistance to a host, the methods described in EP0994190A and WO90/04636 can be referred to.

Examples of L-Threonine-producing bacteria or parent strains for inducing the same include E. coli TDH-6/pVIC40 (VKPM B-3996; U.S. Patent No. 5,175,107, U.S. Patent No. 5,705,371), E. coli 472T23/pYN7 (ATCC 98081; U.S. Patent No. 5,631,157), E. coli NRRL B-21593(U.S. Patent No. 5,939,307), E. coli FERM BP-3756 (U.S. Patent No. 5,474,918), E. coli FERM BP-3519 and FERM BP-3520 (U.S. Patent No. 5,376,538), E. coli MG442 (Gusyatiner et al., Genetika (in Russian), 14, 947-956 (1978)), E. coli VL643 and VL2055(EP1149911A), and E. coli VKPM B-5318(EP0593792B).

The VKPM B-3996 strain is a strain in which the plasmid pVIC40 has been introduced into the TDH-6 strain. The TDH-6 strain is sucrose-utilizing, lacks the thrC gene, and has a leaky mutation in the ilvAgene. In addition, the TDH-6 strain has a mutation in the rhtA gene that imparts resistance to high concentrations of threonine or homoserine. Plasmid pVIC40 is a plasmid in which the thrA*BC operon, which contains a mutant thrA gene encoding aspartokinase homoserine dehydrogenase I resistant to feedback inhibition by threonine and a wild-type thrBC gene, has been inserted into an RSF1010-derived vector (U.S. Patent No. 5,705,371). This mutant thrA gene encodes aspartokinase homoserine dehydrogenase I, for which feedback inhibition by threonine is substantially relieved. The B-3996 strain was deposited on November 19, 1987, at the All-Union Scientific Center of Antibiotics (Nagatinskaya Street 3-A, 117105 Moscow, Russia) under Accession No. RIA 1867. This strain was also deposited on April 7, 1987, at the Russian National Collection of Industrial Microorganisms (VKPM) (FGUP GosNII Genetika, 1 Dorozhny proezd., 1 Moscow 117545, Russia) under Accession No. VKPM B-3996.

The VKPM B-5318 strain is non-isoleucine-requiring and retains the plasmid pPRT614 in which the regulatory region of the threonine operon in the plasmid pVIC40 has been substituted by the temperature-sensitive lambda phage C1 repressor and PR promoter. VKPM B-5318 was deposited internationally on May 3, 1990, at the Russian National Collection of Industrial Microorganisms (VKPM) (FGUP GosNII Genetika, 1 Dorozhny proezd., 1 Moscow 117545, Russia) under Accession No. VKPM B-5318.

The thrAgene encoding aspartokinase homoserine dehydrogenase I of E. coli has been elucidated (Nucleotide Nos. 337 to 2799, GenBank accession NC_000913.2, gi: 49175990). The thrA gene is located between the thrL and thrB genes on the chromosome of E. coli K-12. The thrB gene encoding homoserine kinase of Escherichia coli has been elucidated (Nucleotide Nos. 2801 to 3733, GenBank accession NC_000913.2, gi: 49175990). The thrB gene is located between the thrA and thrC genes on the chromosome of E. coli K-12. The thrC gene encoding threonine synthase of E. coli has been elucidated (Nucleotide Nos. 3734 to 5020, GenBank accession NC_000913.2, gi: 49175990). The thrC gene is located between the thrB gene and the yaaX open reading frame on the E. coli K-12 chromosome. The thrA*BC operon, which contains a mutant thrA gene encoding aspartokinase homoserine dehydrogenase I resistant to feedback inhibition by threonine and a wild-type thrBC gene, can be obtained from the well-known plasmid pVIC40 (U.S. Patent No. 5,705,371) present in the threonine-producing strain E. coli VKPM B-3996.

The E. coli rhtA gene is located in the 18 min region on the E. coli chromosome close to the glnHPQ operon, which encodes components of the glutamine transport system. The rhtA gene is identical to ORF1 (ybiF gene, nucleotide positions 764 to 1651, GenBank Accession No. AAA218541, gi:440181) and is located between the pexB gene and the ompX gene. The unit expressing the protein encoded by ORF1 is referred to as the rhtA gene (rht: resistant to homoserine and threonine). In addition, the rhtA23 mutation, which imparts resistance to high concentrations of threonine or homoserine, has been found to be a G->A substitution at position -1 relative to the ATG start codon (ABSTRACTS of the 17th International Congress of Biochemistry and Molecular Biology in conjugation with Annual Meeting of the American Society for Biochemistry and Molecular Biology, San Francisco, California August 24-29, 1997, abstract No. 457, EP1013765A).

The asd gene of E. coli has already been identified (Nucleotide Nos. 3572511 to 3571408, GenBank accession NC_000913.1, gi:16131307), and can be obtained by PCR using primers constructed based on the base sequence of the gene (White, T. J. et al., Trends Genet., 5, 185 (1989)). The asd genes of other microorganisms can be obtained similarly.

The aspC gene of E. coli has also already been elucidated (Nucleotide Nos. 983742 to 984932, GenBank accession NC_000913.1, gi:16128895), and can be obtained by PCR using primers prepared based on the base sequence of the gene. The aspC genes of other microorganisms can be obtained similarly.

In addition, examples of coryneform bacteria having the L-threonine-producing ability include Corynebacterium acetoacidophilum AJ12318 (FERM BP-1172; U.S. Patent No. 5,188,949).

### <L-lysine-producing Bacteria>

Examples of a method for imparting or enhancing an L-lysine-producing ability include modifying bacteria so as to increase the activity of one or more enzymes selected from L-lysine biosynthetic enzymes. Examples of such enzymes include, but are not particularly limited to, dihydrodipicolinate synthase (dapA), aspartokinase III (lysC), dihydrodipicolinate reductase (dapB), diaminopimelate decarboxylase (lysA), diaminopimelate dehydrogenase (ddh) (U.S. Patent No. 6,040,160), phosphoenolpyruvate carboxylase (ppc), aspartate semialdehyde dehydrogenase (asd), aspartate aminotransferase (aspartate transaminase) (aspC), diaminopimelate epimerase (dapF), tetrahydrodipicolinate succinylase (dapD), succinyl-diaminopimelate deacylase (dapE), and aspartase (aspA) (EP 1253195 A). Among these enzymes, it is preferable to enhance the activity of one or more enzymes selected from, for example, dihydrodipicolinate reductase, diaminopimelate decarboxylase, diaminopimelate dehydrogenase, phosphoenolpyruvate carboxylase, aspartate aminotransferase, diaminopimelate epimerase, aspartate semialdehyde dehydrogenase, tetrahydrodipicolinate succinylase, and succinyldiaminopimelate deacylase. In the L-lysine-producing bacterium or a parent strain for inducing the same, the expression levels of a gene involved in energy efficiency (cyo) (EP 1170376 A), genes encoding nicotinamide nucleotide transhydrogenase (pntAB) (U.S. Patent No. 5,830,716), the ybjE gene (WO2005/073390), or a combination thereof may be increased. Since aspartokinase III (lysC) is subject to feedback inhibition by L-lysine, a mutant lysC gene encoding aspartokinase III, for which feedback inhibition by L-lysine has been relieved, may be used for enhancing the activity of the enzyme (U.S. Patent No. 5,932,453). Examples of aspartokinase III, for which feedback inhibition by L-lysine has been relieved, include aspartokinase III derived from Escherichia coli having one or more of the following mutations: a mutation in which the methionine residue at position 318 is substituted by an isoleucine residue, a mutation in which the glycine residue at position 323 is substituted by an aspartic acid residue, and a mutation in which the threonine residue at position 352 is substituted by an isoleucine residue (U.S. Patent Nos. 5,661,012 and 6,040,160). In addition, since dihydrodipicolinate synthase (dapA) is subject to feedback inhibition by L-lysine, a mutant dapA gene encoding a dihydrodipicolinate synthase, for which feedback inhibition by L-lysine has been relieved, may be used for enhancing the activity of the enzyme. Examples of dihydrodipicolinate synthase, for which feedback inhibition by L-lysine has been relieved, include dihydrodipicolinate synthase derived from Escherichia coli that has a mutation in which the histidine residue at position 118 is substituted by a tyrosine residue (U.S. Patent No. 6,040,160).

Examples of the method for imparting or enhancing the L-lysine-producing ability also include a method for modifying a bacterium to reduce the activity of one or more enzymes selected from enzymes that catalyze reactions that branch off from the L-lysine biosynthetic pathway to produce compounds other than L-lysine. Examples of such enzymes include, but are not particularly limited to, homoserine dehydrogenase, lysine decarboxylase (US Patent No. 5,827,698), and malic enzyme (WO2005/010175).

Examples of the method for imparting or enhancing the L-lysine-producing ability to coryneform bacteria include a method for modifying a bacterium to increase the activity of the lysine excretion system (lysE) (WO97/23597). The lysE gene of Corynebacterium glutamicum ATCC 13032 corresponds to a complementary sequence of the sequence from positions 1329712 to 1330413 in the genome sequence registered in the NCBI database as GenBank accession NC_006958 (VERSION NC_006958.1 GI:62388892). The LysE protein of Corynebacterium glutamicum ATCC13032 is registered under GenBank accession YP_225551 (YP_225551.1 GI:62390149).

Examples of an L-lysine-producing bacterium or a parent strain for inducing the bacterium include mutant strains having resistance to L-lysine analogs. L-lysine analogs inhibit the growth of bacteria such as Enterobacteriaceae and coryneform bacteria, but this inhibition is entirely or partially relieved when L-lysine is coexistent in the medium. Examples of L-lysine analogs include, but are not limited to, oxalysine, lysine hydroxamate, S-(2-aminoethyl)-L-cysteine (AEC), γ-methyllysine, and α-chlorocaprolactam. Mutants having resistance to these lysine analogs can be obtained by subjecting bacteria to ordinary artificial mutation treatment.

Specific examples of an L-lysine-producing bacterium or a parent strain for inducing the bacterium include E. coli AJ11442 (FERM BP-1543, NRRL B-12185; U.S. Patent No. 4,346,170) and E. coli VL611. In these strains, the feedback inhibition of aspartokinase by L-lysine has been relieved.

Specific examples of an L-lysine-producing bacterium or a parent strain for inducing the bacterium also include the E. coli WC196 strain. The WC196 strain was bred by imparting AEC resistance to the W3110 strain, which is derived from E. coli K-12 (U.S. Patent No. 5,827,698). The WC196 strain was named E. coli AJ13069, deposited on December 6, 1994, at the National Institute of Bioscience and Human-Technology of the Agency of Industrial Science and Technology (currently the International Patent Organism Depositary (IPOD) of the National Institute of Technology and Evaluation, Room 120, 2-5-8 Kazusa Kamatari, Kisarazu City, Chiba Prefecture, Japan, Postal Code: 292-0818) under the accession number FERM P-14690, and transferred to an international deposit under the Budapest Treaty on September 29, 1995, which has been assigned the accession number FERM BP-5252. (U.S. Patent No. 5,827,698).

Examples of a preferable L-lysine-producing bacterium include E. coli WC196ΔcadAΔldc and E. coli WC196ΔcadAΔldc/pCABD2 (WO2010/061890). WC196ΔcadAΔldc is a strain constructed by disrupting the cadA and ldcC genes encoding lysine decarboxylase from the WC196 strain. WC196ΔcadAΔldc/pCABD2 is a strain constructed by introducing the plasmid pCABD2 (U.S. Patent No. 6,040,160) containing lysine biosynthesis genes into WC196ΔcadAΔldc. WC196ΔcadAΔldc was named AJ110692 and internationally deposited on October 7, 2008, at the International Patent Organism Depositary of the National Institute of Advanced Industrial Science and Technology (AIST) (currently the International Patent Organism Depositary (IPOD) of the National Institute of Technology and Evaluation, Room 120, 2-5-8 Kazusa Kamatari, Kisarazu City, Chiba Prefecture, Japan, Postal Code: 292-0818) under the accession number FERM BP-11027. pCABD2 contains a mutant dapA gene encoding dihydrodipicolinate synthase (DDPS) derived from Escherichia coli having a mutation (H118Y), for which feedback inhibition by L-lysine is relieved, a mutant lysC gene encoding aspartokinase III derived from Escherichia coli having a mutation (T352I), for which feedback inhibition by L-lysine is relieved, a dapB gene encoding dihydrodipicolinate reductase derived from Escherichia coli, and a ddh gene encoding diaminopimelate dehydrogenase derived from Brevibacterium lactofermentum.

Examples of a preferable L-lysine-producing bacterium also include the E. coli AJIK01 strain (NITE BP-01520). The AJIK01 strain was named E. coli AJ111046, deposited on January 29, 2013, at the NITE Patent Microorganisms Depositary (NMPD) of the National Institute of Technology and Evaluation, Room 122, 2-5-8 Kazusa Kamatari, Kisarazu City, Chiba Prefecture, Japan, Postal Code: 292-0818), and transferred to an international deposit under the Budapest Treaty on May 15, 2014, which has been assigned the accession number NITE BP-01520.

In addition, examples of coryneform bacteria having the L-lysine-producing ability include: AEC resistance mutations (the Corynebacterium glutamicum (Brevibacterium lactofermentum) AJ11082 (NRRL B-11470) strain and the like; Japanese Examined Patent Publication Nos. 56-1914 (1981), 56-1915 (1981), 57-14157 (1982), 57-14158 (1982), 57-30474 (1982), 58-10075 (1983), 59-4993 (1984), 61-35840 (1986), 62-24074 (1987), 62-36673 (1987), 5-11958 (1993), 7-112437 (1995), and 7-112438 (1995)); mutant strains that require amino acids such as L-homoserine for their growth (Japanese Examined Patent Publication Nos. 48-28078 (1973) and 56-6499 (1981)); mutant strains that are resistant to AEC and require amino acids such as L-leucine, L-homoserine, L-proline, L-serine, L-arginine, L-alanine, and L-valine (U.S. Patent Nos. 3,708,395 and 3,825,472); mutants resistant to DL-α-amino-ε-caprolactam, α-amino-lauryllactam, aspartic acid analogues, sulfa drugs, quinoids, and N-lauroylleucine; mutants resistant to oxaloacetate decarboxylase inhibitors or respiratory enzyme inhibitors (Japanese Unexamined Patent Publication Nos. 50-53588 (1975), 50-31093 (1975), 52-102498 (1977), 53-9394 (1978), 53-86089 (1978), 55-9783 (1980), 55-9759 (1980), 56-32995 (1981), and 56-39778 (1981) and Japanese Examined Patent Publication Nos. 53-43591 (1978) and 53-1833 (1978)); mutants requiring inositol or acetate (Japanese Unexamined Patent Publication Nos. 55-9784 (1980) and 56-8692 (1981)); mutants sensitive to fluoropyruvate or temperatures 34°C or higher (Japanese Unexamined Patent Publication Nos. 55-9783 (1980) and 53-86090 (1978)); and mutants resistant to ethylene glycol (U.S. Patent No. 4,411,997).

### <L-leucine-producing Bacteria>

Examples of a method for imparting or enhancing an L-leucine-producing ability include modifying bacteria so as to increase the activity of one or more enzymes selected from L-leucine biosynthetic enzymes. Examples of such enzymes include, but are not particularly limited to, enzymes encoded by genes in the leuABCD operon. For enhancing the enzyme activity, for example, a mutant leuA gene encoding isopropyl malate synthase, for which feedback inhibition by L-leucine has been relieved (US Patent No. 6,403,342) can be suitably used.

Specific examples of an L-leucine-producing bacterium or a parent strain for inducing the bacterium include strains belonging to the genus Escherichia, which are leucine-resistant E. coli strains (e.g., Strain 57 (VKPM B-7386; U.S. Patent No. 6,124,121)), E. coli strains resistant to leucine analogues such as β-2-thienylalanine, 3-hydroxyleucine, 4-azaleucine, and 5,5,5-trifluoroleucine (Japanese Examined Patent Publication No. 62-34397 (1987) and Japanese Unexamined Patent Publication No. 8-70879 (1996)), E. coli strains obtained by genetic the engineering method described in WO96/06926, E. coli H-9068 (Japanese Unexamined Patent Publication No. 8-70879 (1996)), and the like.

Examples of coryneform bacteria having the L-leucine producing ability include Corynebacterium glutamicum (Brevibacterium lactofermentum) AJ3718 (FERM P-2516), which is resistant to 2-thiazolealanine and β-hydroxyleucine and is auxotrophic for isoleucine and methionine.

### <L-isoleucine-producing Bacteria>

Examples of a method for imparting or enhancing an L-isoleucine-producing ability include modifying bacteria so as to increase the activity of one or more enzymes selected from L-isoleucine biosynthetic enzymes. Examples of such enzymes include, but are not particularly limited to, threonine deaminase and acetohydroxyacid synthase (Japanese Unexamined Patent Publication No. 2-458 (1990), EP0356739A, U.S. Patent No. 5,998,178).

Specific examples of an L-isoleucine-producing bacterium or a parent strain for inducing the bacterium include bacteria of the genus Escherichia, which are mutants resistant to 6-dimethylaminopurine (Japanese Unexamined Patent Publication No. 5-304969 (1993)), mutants resistant to isoleucine analogues such as thiasoleucine and isoleucine hydroxamate, mutants resistant to DL-ethionine and/or arginine hydroxamate in addition to isoleucine analogs (Japanese Unexamined Patent Publication No. 5-130882 (1993)), and the like.

Examples of coryneform bacteria having the L-isoleucine-producing ability include coryneform bacteria with the amplified brnE gene encoding a branched-chain amino acid excretion protein (Japanese Unexamined Patent Publication No. 2001-169788), coryneform bacteria with the L-isoleucine-producing ability imparted by protoplast fusion with L-lysine-producing bacteria (Japanese Unexamined Patent Publication No. 62-74293 (1987)), coryneform bacteria with enhanced homoserine dehydrogenase activity (Japanese Unexamined Patent Publication No. 62-91193 (1987)), threonine hydroxamate-resistant strains (Japanese Unexamined Patent Publication No. 62-195293 (1987)), α-ketomalone-resistant strains (Japanese Unexamined Patent Publication No. 61-15695 (1986)), methyl lysine-resistant strains (Japanese Unexamined Patent Publication No. 61-15696 (1986)), and Corynebacterium glutamicum (Brevibacterium flavum) AJ12149 (FERM BP-759; U.S. Patent No. 4,656,135).

### <L-valine-producing Bacteria>

Examples of a method for imparting or enhancing an L-valine-producing ability include modifying bacteria so as to increase the activity of one or more enzymes selected from L-valine biosynthetic enzymes. Examples of such enzymes include, but are not particularly limited to, enzymes encoded by genes in the ilvGMEDA operon and the ilvBNC operon. ilvBN encodes acetohydroxyacid synthase, and ilvC encodes isomeroductase (WO00/50624). The expression of the ilvGMEDA operon and the ilvBNC operon is suppressed (attenuated) by L-valine, L-isoleucine, and/or L-leucine. Therefore, to enhance the enzyme activity, it is preferable to remove or modify the region necessary for attenuation and cancel the expression suppression caused by the generated L-valine. In addition, threonine deaminase encoded by the ilvA gene is an enzyme that catalyzes the deamination reaction from L-threonine to 2-ketobutyric acid, which is the rate-limiting step in the L-isoleucine biosynthesis pathway. Therefore, for the production of L-valine, it is preferable that the ilvA gene is disrupted or the like, and threonine deaminase activity is reduced.

Examples of the method for imparting or enhancing the L-valine-producing ability also include a method for modifying a bacterium to reduce the activity of one or more enzymes selected from enzymes that catalyze reactions that branch off from the L-valine biosynthetic pathway to produce compounds other than L-valine. Examples of such enzymes include, but are not particularly limited to, threonine dehydratase involved in L-leucine synthesis and enzymes involved in D-pantothenic acid synthesis (WO00/50624).

Specific examples of an L-valine-producing bacterium or a parent strain for inducing the bacterium include E. coli strains modified to overexpress the ilvGMEDA operon (U.S. Patent No. 5,998,178).

Examples of an L-valine-producing bacterium or a parent strain for inducing the bacterium also include strains having mutations in aminoacyl-tRNA synthetase (U.S. Patent No. 5,658,766). Examples of such strains include E. coli VL1970, which has a mutation in the ileS gene that encodes isoleucine tRNA synthetase. E. coli VL1970 was deposited on June 24, 1988, at the Russian National Collection of Industrial Microorganisms (VKPM) (FGUP GosNII Genetika, 1 Dorozhny proezd., 1 Moscow 117545, Russia) under Accession No. VKPM B-4411. Examples of an L-valine-producing bacterium or a parent strain for inducing the bacterium also include mutant strains that require lipoic acid for growth and/or lack H⁺-ATPase (WO96/06926).

Examples of an L-valine-producing bacterium or a parent strain for inducing the bacterium also include strains having resistance to amino acid analogs. Examples of such strains include coryneform bacterial strains requiring L-isoleucine and L-methionine, being resistant to D-ribose, purine ribonucleosides, or pyrimidine ribonucleoside, and having the L-valine-producing ability (FERM P-1841, FERM P-29)(Japanese Examined Patent Publication No. 53-025034), coryneform bacterial strains resistant to polyketides (FERM P-1763, FERM P-1764)(Japanese Examined Patent Publication No. 06-065314), and coryneform bacterial strains that exhibit resistance to L-valine in a medium containing acetate as the sole carbon source and are sensitive to pyruvate analogs (e.g., fluoropyruvate) in a medium containing glucose as the sole carbon source (FERM BP-3006, FERM BP-3007)(Japanese Patent No. 3006929).

### <L-tryptophan-producing Bacteria>

Examples of a method for imparting or enhancing an L-tryptophan-producing ability include modifying bacteria so as to increase the activity of one or more enzymes selected from L-tryptophan biosynthetic enzymes.

Examples of L-tryptophan biosynthetic enzymes include, but are not particularly limited to, 3-deoxy-D-arabinoheptulosonate-7-phosphate synthase (aroG), 3-dehydroquinate synthase (aroB), shikimate dehydrogenase (aroE), shikimate kinase (aroL), 5-enolpyruvylshikimate 3-phosphate synthase (aroA), and chorismate synthase (aroC), which are biosynthetic enzymes common to aromatic amino acids (EP763127B). The expression of the genes encoding these enzymes is controlled by the tyrosine repressor (tyrR), and the activity of these enzymes may be enhanced by deleting the tyrR gene (EP763127B).

Examples of L-tryptophan biosynthetic enzymes include, but are not particularly limited to, anthranilate synthase (trpE), tryptophan synthase (trpAB), and phosphoglycerate dehydrogenase (serA). For example, the L-tryptophan-producing ability can be imparted or enhanced by introducing a DNA containing the tryptophan operon. Tryptophan synthase consists of α and β subunits encoded by the trpA and trpB genes, respectively. Since anthranilate synthase is subject to feedback inhibition by L-tryptophan, the activity of the enzyme can be enhanced by utilizing a gene encoding the enzyme into which a mutation that relieves the feedback inhibition has been introduced. Since phosphoglycerate dehydrogenase is subject to feedback inhibition by L-serine, the activity of the enzyme can be enhanced by using a gene encoding the enzyme into which a mutation that relieves the feedback inhibition has been introduced. Further, the L-tryptophan-producing ability may be imparted or enhanced by increasing the expression of an operon (ace operon) consisting of malate synthase (aceB), isocitrate lyase (aceA), and isocitrate dehydrogenase kinase/phosphatase (aceK) (WO2005/103275).

The L-tryptophan-producing bacteria may be modified to reduce the biosynthesis of aromatic amino acids other than L-tryptophan. The L-tryptophan-producing bacteria may also be modified such that the uptake system of by-products is enhanced. Examples of by-products include aromatic amino acids other than L-tryptophan. Examples of genes encoding uptake systems for by-products include the pheP gene encoding the L-phenylalanine uptake system and the tyrP gene encoding the L-tyrosine uptake system (EP1484410).

Specific examples of an L-tryptophan-producing bacterium or a parent strain for inducing the bacterium also include E. coli JP4735/pMU3028(DSM10122) and JP6015/pMU91(DSM10123) having a mutant trpS gene encoding a partially inactivated tryptophanyl-tRNA synthetase (U.S. Patent No. 5,756,345), E. coli SV164 having a trpE allele encoding anthranilate synthase that is not subject to feedback inhibition by tryptophan, E. coli SV164 having a serA allele encoding phosphoglycerate dehydrogenase that is not subject to feedback inhibition by serine and a trpE allele encoding anthranilate synthase that is not subject to feedback inhibition by tryptophan (pGH5)(U.S. Patent No. 6,180,373), strains introduced with a tryptophan operon containing the trpE allele encoding anthranilate synthase that is not subject to feedback inhibition by tryptophan (Japanese Unexamined Patent Publication No. 57-71397 (1982), Japanese Unexamined Patent Publication No. 62-244382 (1987), U.S. Patent No. 4,371,614), tryptophanase-deficient E. coli AGX17(pGX44)(NRRL B-12263) and AGX6(pGX50)aroP(NRRL B-12264)(U.S. Patent No. 4,371,614), E. coli AGX17/pGX50,pACKG4-pps with increased phosphoenolpyruvate-producing ability (WO9708333, U.S. Patent No. 6,319,696), and strains belonging to the genus Escherichia with increased activity of the protein encoded by the yedA gene or the yddG gene (US2003-0148473A1 and US2003-0157667A1).

Examples of coryneform bacteria having the L-tryptophan-producing ability include sulfaguanidine-resistant Corynebacterium glutamicum AJ12118 (FERM BP-478) (Patent No. 1681002), a strain introduced with a tryptophan operon (Japanese Unexamined Patent Publication No. 63-240794 (1988)), and a strain introduced with a gene encoding shikimate kinase derived from coryneform bacteria (Japanese Patent No. 1994749).

The culture conditions for a microorganism having an amino acid-producing ability are not particularly limited as long as the microorganism having an amino acid-producing ability can grow and the target amino acid is produced. For example, the culture can be carried out under conditions normally used for culturing microorganisms such as bacteria. The culture conditions may be appropriately set depending on various conditions, such as the type of microorganism used.

The medium used for culturing a microorganism having an amino acid-producing ability is not particularly limited as long as the microorganism having an amino acid-producing ability can grow and the target amino acid is produced. For example, a normal medium used for culturing microorganisms such as bacteria can be used as the medium. For example, a medium containing components selected from a carbon source, a nitrogen source, a phosphoric acid source, a sulfur source, and various other organic and inorganic components can be used as the medium. The types and concentrations of medium components may be appropriately set depending on various conditions, such as the type of microorganism used.

Specific examples of carbon sources include: sugars such as glucose, fructose, galactose, xylose, arabinose, sucrose, lactose, cellobiose, blackstrap molasses, starch hydrolysates, and biomass hydrolysates; organic acids such as acetic acid, fumaric acid, citric acid, and succinic acid; alcohols such as glycerol, crude glycerol, and ethanol; and fatty acids. As the carbon source, one kind of carbon source may be used, or two or more kinds of carbon sources may be used in combination.

Specific examples of the nitrogen source include ammonium salts such as ammonium sulfate, ammonium chloride, and ammonium phosphate; organic nitrogen sources such as peptone, casamino acid, yeast extract, malt extract, meat extract, corn steep liquor, and soybean protein hydrolysates; ammonia; and urea. As the nitrogen source, one kind of nitrogen source may be used, or two or more kinds of nitrogen sources may be used in combination.

Specific examples of the phosphoric acid source include: phosphates such as potassium dihydrogen phosphate and dipotassium hydrogen phosphate; and phosphoric acid polymers such as pyrophosphoric acid. As the phosphoric acid source, one kind of phosphoric acid source may be used, or two or more kinds of phosphoric acid sources may be used in combination.

Specific examples of the sulfur source include: inorganic sulfur compounds such as sulfates, thiosulfates, and sulfites; and sulfur-containing amino acids such as cysteine, cystine, and glutathione. As the sulfur source, one kind of sulfur source may be used, or two or more kinds of sulfur sources may be used in combination.

Specific examples of other various organic and inorganic components include: inorganic salts such as sodium chloride and potassium chloride; trace metals such as iron, manganese, magnesium, and calcium; vitamins such as vitamin B1, vitamin B2, vitamin B6, nicotinic acid, nicotinamide, and vitamin B12; amino acids; nucleic acids; and organic components containing these, such as peptone, casamino acid, yeast extract, malt extract, meat extract, corn steep liquor, and soy protein hydrolysates. As the various other organic and inorganic components, one kind of component may be used, or two or more kinds of components may be used in combination.

Culture may be carried out in liquid culture (i.e., in a liquid medium). The culture may be carried out, for example, under aerobic conditions. In the case of liquid culture, the "aerobic conditions" may mean that the dissolved oxygen concentration in the liquid medium is 0.33 ppm or more, which is the detection limit by an oxygen membrane electrode, and preferably 1.5 ppm or more. The oxygen concentration may be controlled, for example, to from 5% to 50% of the saturated oxygen concentration, preferably to about 10%. Specifically, the culture under aerobic conditions may be carried out, for example, by aeration culture, shaking culture, stirring culture, or a combination thereof. The pH of the medium may be, for example, from 3 to 10, preferably from 4.0 to 9.5. During the culture, the pH of the medium can be adjusted as necessary. The pH of the medium can be adjusted using various alkaline or acidic substances such as ammonia gas, ammonia water, sodium carbonate, sodium bicarbonate, potassium carbonate, potassium bicarbonate, magnesium carbonate, sodium hydroxide, calcium hydroxide, and magnesium hydroxide. The culture temperature may be, for example, from 20°C to 40°C, preferably from 25°C to 37°C. The culture period may be, for example, from 10 to 120 hours. The culture may be carried out, for example, by batch culture, fed-batch culture, continuous culture, or a combination thereof. In addition, the culture may be carried out in separate stages: preculture and main culture. For example, preculture may be carried out on a solid medium such as an agar medium, and main culture may be carried out in a liquid medium. The culture may be continued, for example, until the carbon source in the medium is consumed or until the activity of a microorganism having the amino acid-producing ability is lost.

By culturing a microorganism having the amino acid-producing ability in such a manner, amino acids accumulate in the medium, and an amino acid fermentation liquid is thus obtained.

The amino acids can be separated from the amino acid fermentation liquid by, for example, known techniques used for separating and purifying compounds. Examples of such techniques include the ion exchange resin method (Nagai, H. et al., Separation Science and Technology, 39(16), 3691-3710), the precipitation method, the membrane separation method (Japanese Unexamined Patent Publication No. 9-164323 (1997), Japanese Unexamined Patent Publication No. 9-173792 (1997)), and the crystallization method (WO2008/078448, WO2008/078646). These techniques can be used singly or in an appropriate combination. In a case in which amino acids precipitate in the medium, the amino acids can be separated from the amino acid fermentation liquid by solid-liquid separation means such as centrifugation or filtration.

By separating the amino acids from the amino acid fermentation liquid in such a manner, an amino acid fermentation by-product liquid is obtained as a by-product.

The amino acid fermentation by-product liquid can be concentrated or fractionated, for example, by an ordinary method. Examples of the method for concentrating the amino acid fermentation by-product liquid include vacuum concentration, freeze drying, and spray drying. Examples of the means for fractionating the amino acid fermentation by-product liquid include the techniques used for separating and purifying the compounds as exemplified above.

The active ingredient may have a similar function as strigolactone. Therefore, by utilizing the active ingredient, effects based on the same function as, for example, strigolactone may be obtained. In other words, the active ingredient may be utilized so as to obtain the same effects as strigolactone.

Examples of functions similar to those of strigolactone include inducing germination in a parasitic plant, inhibiting branching in a plant, and inducing hyphal branching in a mycorrhizal fungus. The active ingredient may have, for example, one or more (e.g., all) functions selected from the same functions as strigolactone exemplified above. The active ingredient may, for example, have at least the function of inducing germination of a parasitic plant. The "germination of a parasitic plant" and the "germination of a seed of a parasitic plant" may be used interchangeably. For example, compounds represented by Formulae (Compound 1) to (Compound 3), (Compound 5) to (Compound 14), (Compound 16) to (Compound 20), (Compound 23), (Compound 26) to (Compound 35), (Compound 37), (Compound 38), (Compound 40), (Compound 53), (Compound 60), (Compound 72), (Compound 83), (Compound 88), and (Compound 89) described later may have the function of inducing the germination of a parasitic plant. For example, compounds represented by Formulae (Compound 1) to (Compound 3), (Compound 5) to (Compound 8), (Compound 27) to (Compound 30), (Compound 38), (Compound 40), (Compound 53), and (Compound 72) described later may have the function of inducing the germination of a parasitic plant.

The active ingredient may have a function different from strigolactone, for example, a function of inhibiting the germination of a parasitic plant. For example, compounds represented by Formulae (Compound 4), (Compound 15), (Compound 36), (Compound 39), (Compound 42) to (Compound 49), (Compound 51), (Compound 56), (Compound 57), (Compound 59), (Compound 61), (Compound 63), (Compound 66) to (Compound 71), (Compound 73) to (Compound 76), (Compound 78) to (Compound 80), and (Compound 84) described later may have the function of inhibiting the germination of a parasitic plant. For example, compounds represented by Formulae (Compound 4), (Compound 39), (Compound 42) to (Compound 49), (Compound 51), (Compound 56), (Compound 66) to (Compound 71), and (Compound 73) to (Compound 76) described later may have the function of inhibiting the germination of a parasitic plant.

In one aspect, by utilizing an active ingredient, specifically by applying the active ingredient to a seed of a parasitic plant, the germination of the parasitic plant may be induced or inhibited; that is, the effect of inducing or inhibiting the germination of a parasitic plant may be obtained. The effect of inducing the germination of a parasitic plant is also referred to as the "germination induction effect." The effect of inhibiting the germination of a parasitic plant is also referred to as the "germination inhibition effect." Examples of the induced germination of a parasitic plant include suicide germination of a parasitic plant. The "suicide germination of a parasitic plant" may mean the germination of a parasitic plant in an environment in which a plant to be parasitized by a parasitic plant does not exist. The plant to be parasitized by a parasitic plant is also referred to as the "parasitism-target plant." A parasitic plant that has undergone suicide germination cannot parasitize the target plant and may, therefore, die. The inhibition of germination of the parasitic plant may prevent the parasitic plant from growing and parasitizing the target plant. Therefore, the induction of suicide germination of a parasitic plant or the inhibition of germination of a parasitic plant may allow, for example, controlling the parasitic plant. In other words, the effect of controlling a parasitic plant may be obtained. The effect of controlling a parasitic plant is also referred to as the "parasitic plant-controlling effect." The parasitic plant-controlling effect may be an example of the germination induction effect or the germination inhibition effect. The induction of suicide germination of a parasitic plant, the inhibition of the germination of a parasitic plant, or the control of a parasitic plant may allow, for example, the improvement of the cultivation performance of a parasitism-target plant. In other words, the effect of improving the cultivation performance of a parasitism-target plant may be obtained. The effect of improving the cultivation performance of a parasitism-target plant is also referred to as the "effect of improving the cultivation performance of a parasitism-target plant." The effect of improving the cultivation performance of a parasitism-target plant may be an example of the germination induction effect, the germination inhibition effect, or the parasitic plant-controlling effect. Examples of improving the cultivation performance of a parasitism-target plant include improving the yield of a parasitism-target plant, improving the growth of a parasitism-target plant, and improving the survivability of a parasitism-target plant. A particular example of improving the cultivation performance of a parasitism-target plant is improving the yield of a parasitism-target plant. Improvement in plant yield includes improvement in the overall yield of the plant body and improvement in the yield of parts of the plant body such as leaves, roots, fruits, seeds, or the like.

Examples of parasitic plants include root parasitic plants. Examples of parasitic plants also include plants whose germination is induced by strigolactone. Specific examples of parasitic plants include plants of the family Orobanchaceae, plants of the family Scrophulariaceae, and plants of the family Convolvulaceae. Examples of plants of the family Orobanchaceae include plants of the genus Striga, plants of the genus Orobanche, and plants of the genus Phelipanche. Particular examples of plants of the family Orobanchaceae include plants of the genus Striga and plants of the genus Orobanche. Examples of plants of the genus Striga include Striga asiatica, Striga gesnerioides, Striga hermonthica, Striga aspera, Striga asiatica, Striga curviflora, Striga parviflora, Striga angustifolia, Striga latericea, Striga aequinoctialis, Striga angolensis, Striga bilabiate, Striga brachycalyx, Striga chrsantha, Striga dalzielii, Striga elegans, Striga forbesii, Striga gastonii, Striga gracillima, Striga hallaei, Striga hirsuta, Striga junodii, Striga klingii, Striga lepidagathidis, Striga lutea, Striga macrantha, Striga passargei, Striga pinnatifida, Striga primuloides, Striga yemenica, and Striga pubiflora. Examples of plants of the genus Orobanche include Orobanche ramosa, Orobanche minor, Orobanche crenata, Orobanche cumana, Orobanche foetida, Orobanche aegyptiaca, and Orobanche cernua. Examples of plants of the genus Phelipanche include Phelipanche ramosa and Phelipanche aegyptiaca. Examples of plants of the family Scrophulariaceae include plants of the genus Alectra. Examples of plants of the genus Alectra include Alectra vogelii, Alectra picta, Alectra sessiliflora, Alectra orobanchoides, and Alectra fluminensis. Examples of plants of the family Convolvulaceae include plants of the genus Cuscuta. Examples of plants of the genus Cuscuta include Cuscuta australis, Cuscuta campestris, Cuscuta chinensis, Cuscuta indecora, Cuscuta epithymum, Cuscuta epilinum, Cuscuta gronovii, Cuscuta planiflora, Cuscuta monogyna, Cuscuta pedicellata, Cuscuta palaestina, and Cuscuta rejlexa. When the classification of a parasitic plant is changed, the parasitic plant may be treated as falling into either or both of the previous and subsequent classifications. Note that when the classification of a parasitic plant is changed, the parasitic plant will be treated as falling under both the old and new classifications, unless otherwise specified. For example, Orobanche ramosa L. is currently classified as Phelipanche ramosa (L.) Pomel. However, unless otherwise specified, Orobanche ramosa L. will be treated as corresponding to both a plant of the genus Orobanche and a plant of the genus Phelipanche and also treated as corresponding to both Orobanche ramosa and Phelipanche ramosa. The parasitic plant may be one kind of plant or two or more kinds of plants.

The type of the parasitism-target plant is not particularly limited as long as it is a target for the parasitic plant. The parasitism-target plant may be, for example, a woody plant or a herbaceous plant. Examples of the parasitism-target plant include plants of the family Poaceae (e.g., rice, barley, wheat, corn, sorghum, millet, sugarcane, oats, lawn grass, pearl millet, finger millet, and fonio), plants of the family Solanaceae (e.g., tomato, pepper, eggplant, potato, and tobacco), plants of the family Cucurbitaceae (e.g., cucumbers, melons, and pumpkins), plants of the family Legumes (e.g., peas, soybeans, kidney beans, alfalfa, groundnuts, broad beans, cowpeas, lentils, chickpeas, clover, peanuts, and bambara groundnuts), plants of the family Brassicaceae (e.g., radish, Chinese cabbage, cabbage, Japanese mustard spinach (komatsuna), flowering rapeseed (nanohana), bok choy, and Arabidopsis thaliana), plants of the family Rosaceae (e.g., strawberries, apples, pears, and peaches), plants of the family Moraceae (e.g., mulberry), plants of the family Malvaceae (e.g., cotton), plants of the family Umbelliferae (e.g., carrots, parsley, and celery), plants of the family Liliaceae (e.g., leeks, onions, and asparagus), plants of the family Asteraceae (e.g., burdock, sunflower, chrysanthemum, garland daisy, safflower, and lettuce), plants of the family Amaranthaceae (e.g., sugar beet), plants of the family Ericaceae (e.g., blueberries and cranberries), plants of the family Vitaceae (e.g., grapes), plants of the family Rutaceae (e.g., unshu mandarin orange, lemon, and yuzu), plants of the family Rubiaceae (e.g., coffee tree), plants of the family Oleaceae (e.g., olive), plants of the family Lauraceae (e.g., avocado), plants of the family Anacardiaceae (e.g., mango and cashew nut tree), plants of the family Sapindaceae (e.g., lychee), and plants of the family Lamiaceae (e.g., Coleus). The parasitism-target plant may be one kind of plant or two or more kinds of plants.

The germination induction effect or the germination inhibition effect can be confirmed, for example, by using the germination of a parasitic plant as an indicator. In other words, in a case in which the germination of a parasitic plant is promoted when an active ingredient is used compared to when the active ingredient is not used, it can be judged that the active ingredient has induced the germination of the parasitic plant. The promotion of the germination of a parasitic plant can be measured, for example, as an increase in the germination rate of the parasitic plant or an increase in the germination speed of the parasitic plant. The germination rate of the parasitic plant can be measured, for example, by the procedure described in the Examples. In addition, in a case in which the germination of a parasitic plant is inhibited when an active ingredient is used compared to when the active ingredient is not used, it can be judged that the active ingredient has inhibited the germination of the parasitic plant. The inhibition of the germination of a parasitic plant can be measured, for example, as a decrease in the germination rate of the parasitic plant or a decrease in the germination speed of the parasitic plant. The inhibition of germination also encompasses a case in which germination is not observed at all.

The germination induction effect or the germination inhibition effect can also be confirmed, for example, by confirming the parasitic plant-controlling effect. The parasitic plant-controlling effect can be confirmed, for example, by using the growth, survivability, or parasitism of a parasitic plant as an indicator. In other words, in a case in which the growth, survivability, or parasitism of a parasitic plant is reduced when an active ingredient is used compared to when the active ingredient is not used, it can be judged that the active ingredient has controlled the parasitic plant.

The germination induction effect or the germination inhibition effect can also be confirmed, for example, by confirming the effect of improving the cultivation performance of a parasitism-target plant. The effect of improving the cultivation performance of a parasitism-target plant can be confirmed, for example, by using the cultivation performance of a parasitism-target plant as an indicator. In other words, in a case in which the cultivation performance (e.g., yield, growth, or viability) of a parasitism-target plant is improved when the active ingredient is used compared to when an active ingredient is not used, it can be judged that the active ingredient has improved the cultivation performance of the parasitism-target plant.

In one aspect, by utilizing an active ingredient, specifically by applying the active ingredient to a plant, the branching of the plant may be inhibited; that is, the effect of inhibiting the branching of a plant may be obtained. The effect of inhibiting the branching of a plant is also referred to as the "branching inhibition effect." The plant whose branching is inhibited by the active ingredient is also referred to as the "cultivation-target plant." An example of the branching of a plant is the branching of the aerial part of the plant. Inhibiting the branching of a cultivation-target plant may, for example, improve the cultivation performance of the cultivation-target plant; that is, an effect of improving the cultivation performance of the cultivation-target plant may be obtained. The effect of improving the cultivation performance of a cultivation-target plant is also referred to as the "effect of improving the cultivation performance of a cultivation-target plant." The effect of improving the cultivation performance of a cultivation-target plant may be an example of the branching inhibition effect. Examples of improving the cultivation performance of a cultivation-target plant include improving the yield of a cultivation-target plant, improving the growth of a cultivation-target plant, and improving the survivability of a cultivation-target plant. A particular example of improving the cultivation performance of a cultivation-target plant is improving the yield of a cultivation-target plant.

There are no particular restrictions on the types of cultivation-target plants as long as the active ingredient inhibits branching. With regard to the "cultivation-target plant," for example, the description regarding the parasitism-target plant described above can be applied mutatis mutandis. In other words, examples of the cultivation-target plant include plants exemplified as parasitism-target plants.

The branching inhibition effect can be confirmed, for example, by using the branching of a cultivation-target plant as an indicator. In other words, in a case in which the branching of a cultivation-target plant is inhibited when an active ingredient is used compared to when the active ingredient is not used, it can be judged that the active ingredient has inhibited the branching of the cultivation-target plant. The inhibition of the branching of a cultivation-target plant can be measured, for example, as a reduction in the number of branches per individual cultivation-target plant.

The branching inhibition effect can also be confirmed, for example, by confirming the effect of improving the cultivation performance of a cultivation-target plant. The effect of improving the cultivation performance of a cultivation-target plant can be confirmed, for example, by using the cultivation performance of a cultivation-target plant as an indicator. In other words, in a case in which the cultivation performance (e.g., yield, growth, or survivability) of a cultivation-target plant is improved when the active ingredient is used compared to when an active ingredient is not used, it can be judged that the active ingredient has improved the cultivation performance of the cultivation-target plant.

In one aspect, by utilizing an active ingredient, specifically by applying the active ingredient to a mycorrhizal fungus, the hyphal branching of the mycorrhizal fungus may be induced; that is, the effect of inducing the hyphal branching of a mycorrhizal fungus may be obtained. The effect of inducing hyphal branching of a mycorrhizal fungus is also referred to as the "hyphal branching induction effect." A plant with which a mycorrhizal fungus lives symbiotically is also referred to as the "symbiosis-target plant." Inducing the hyphal branching of a mycorrhizal fungus may, for example, improve the cultivation performance of the symbiosis-target plant; that is, an effect of improving the cultivation performance of the symbiosis-target plant may be obtained. The effect of improving the cultivation performance of a symbiosis-target plant is also referred to as the "effect of improving the cultivation performance of a symbiosis-target plant." The effect of improving the cultivation performance of a symbiosis-target plant may be an example of the hyphal branching induction effect. Examples of improving the cultivation performance of a symbiosis-target plant include improving the yield of a symbiosis-target plant, improving the growth of a symbiosis-target plant, and improving the survivability of a symbiosis-target plant. A particular example of improving the cultivation performance of a symbiosis-target plant is improving the yield of a symbiosis-target plant.

Examples of mycorrhizal fungi include arbuscular mycorrhizal fungi. Examples of arbuscular mycorrhizal fungi include fungi of the division Glomeromycota.

There are no particular restrictions on the types of symbiosis-target plants as long as mycorrhizal fungi can live symbiotically therewith. With regard to the "symbiosis-target plant," for example, the description regarding the parasitism-target plant described above can be applied mutatis mutandis. In other words, examples of the symbiosis-target plant include plants exemplified as parasitism-target plants.

The hyphal branching induction effect can be confirmed, for example, by using the hyphal branching of a mycorrhizal fungus as an indicator. In other words, in a case in which the hyphal branching of a mycorrhizal fungus is promoted when an active ingredient is used compared to when the active ingredient is not used, it can be judged that the active ingredient has induced the hyphal branching of the mycorrhizal fungus. Promoting the hyphal branching of a mycorrhizal fungus can be measured, for example, as the generation of hyphal morphology with a form of fine terminal branches, as observed when a mycorrhizal fungus reaches the vicinity of the roots of a symbiosis-target plant.

The branching inhibition effect can also be confirmed, for example, by confirming the effect of improving the cultivation performance of a cultivation-target plant. The effect of improving the cultivation performance of a cultivation-target plant can be confirmed, for example, by using the cultivation performance of a cultivation-target plant as an indicator. In other words, in a case in which the cultivation performance (e.g., yield, growth, or survivability) of a cultivation-target plant is improved when the active ingredient is used compared to when an active ingredient is not used, it can be judged that the active ingredient has improved the cultivation performance of the cultivation-target plant.

In addition, the same function as strigolactone can be measured by using the binding activity of the active ingredient with the strigolactone receptor as an indicator. Examples of the strigolactone receptor include the strigolactone receptor D14 (DWARF14) protein of Arabidopsis thaliana, strigolactone receptor D14 of the family Poaceae, strigolactone receptor HTL (HYPOSENSITIVE TO LIGHT) of the genus Striga, the strigolactone receptor D14 protein of the genus Orobanche, as well as D14 and HTL/KAI2 (HYPOSENSITIVE TO LIGHT/KARRIKIN INSENSITIVE2) of other parasitic plants. In other words, when binding activity between an active ingredient and a strigolactone receptor is confirmed, it can be judged that the active ingredient has a similar function to strigolactone (i.e., the use of the active ingredient can provide effects based on the same function as strigolactone). The binding activity between an active ingredient and a strigolactone receptor can be measured, for example, by measuring the inhibition of the binding between Yoshimulactone Green (YLG), a synthetic strigolactone labeled with a fluorescent probe, and D14 by the active ingredient. The inhibition of the binding between Yoshimulactone Green (YLG) and D14 by an active ingredient can be measured, for example, by the procedure described in Examples.

### <2> Composition of the Present Invention

The composition of the present invention is a composition containing an active ingredient (i.e., the above-described Component (A), (B), or (C)).

The composition of the present invention can be applied to a target matter such as a seed of a parasitic plant, a cultivation-target plant, or a mycorrhizal fungus for use. The aspect of using the composition of the present invention is described in detail in "Method of the Present Invention." The composition of the present invention can be utilized, for example, so as to obtain the effects exemplified above.

In one aspect, the germination of a parasitic plant may be induced or inhibited by utilizing the composition of the present invention, specifically by applying the composition of the present invention to a seed of a parasitic plant. In other words, the composition of the present invention may be, for example, a composition for inducing the germination of a parasitic plant or a composition for inhibiting the germination of a parasitic plant. The composition for inducing the germination of a parasitic plant may be, for example, a composition for inducing suicide germination of a parasitic plant. The induction of suicide germination of a parasitic plant or the inhibition of germination of a parasitic plant may allow, for example, controlling the parasitic plant. In other words, the composition of the present invention may be, for example, a composition for controlling a parasitic plant. The composition for controlling a parasitic plant may be an example of the composition for inducing the germination of a parasitic plant or the composition for inhibiting the germination of a parasitic plant. The induction of suicide germination of a parasitic plant, the inhibition of the germination of a parasitic plant, or the control of a parasitic plant may allow, for example, the improvement of the cultivation performance of a parasitism-target plant. Therefore, the composition of the present invention may be utilized for, for example, cultivating a parasitism-target plant. In other words, the composition of the present invention may be, for example, a composition for cultivating a parasitism-target plant, such as a composition for improving the cultivation performance of a parasitism-target plant. The composition for cultivating a parasitism-target plant, such as a composition for improving the cultivation performance of a parasitism-target plant, may be an example of the composition for inducing the germination of a parasitic plant, the composition for inhibiting the germination of a parasitic plant, or the composition for controlling a parasitic plant. The composition for inducing the germination of a parasitic plant, the composition for inhibiting the germination of a parasitic plant, the composition for controlling a parasitic plant, and the composition for improving the cultivation performance of a parasitism-target plant are also referred to as the "agent inducing the germination of a parasitic plant," the "agent inhibiting the germination of a parasitic plant," the "agent controlling a parasitic plant," and the "agent for improving the cultivation performance of a parasitism-target plant," respectively.

In one aspect, the branching of a plant may be inhibited by utilizing the composition of the present invention, specifically by applying the composition of the present invention to a cultivation-target plant. In other words, the composition of the present invention may be, for example, a composition for inhibiting the branching of a cultivation-target plant. Inhibiting the branching of a cultivation-target plant may, for example, improve the cultivation performance of a cultivation-target plant. Therefore, the composition of the present invention may be utilized for, for example, cultivating a cultivation-target plant. In other words, the composition of the present invention may be, for example, a composition for cultivating a cultivation-target plant, such as a composition for improving the cultivation performance of a cultivation-target plant. The composition for cultivating a cultivation-target plant, such as a composition for improving the cultivation performance of a cultivation-target plant, may be an example of the composition for inhibiting the branching of a cultivation-target plant. The composition for inhibiting the branching of a cultivation-target plant and the composition for improving the cultivation performance of a cultivation-target plant may be referred to as the "agent for inhibiting the branching of a cultivation-target plant" and the "agent for improving the cultivation performance of a cultivation-target plant."

In one aspect, the hyphal branching of a mycorrhizal fungus may be induced by utilizing the composition of the present invention, specifically by applying the composition of the present invention to a mycorrhizal fungus. In other words, the composition of the present invention may be, for example, a composition for inducing the hyphal branching of a mycorrhizal fungus. Inducing the hyphal branching of a mycorrhizal fungus may, for example, improve the cultivation performance of a symbiosis-target plant. Therefore, the composition of the present invention may be utilized for, for example, cultivating a symbiosis-target plant. In other words, the composition of the present invention may be, for example, a composition for cultivating a symbiosis-target plant, such as a composition for improving the cultivation performance of a symbiosis-target plant. The composition for cultivating a symbiosis-target plant, such as a composition for improving the cultivation performance of a symbiosis-target plant, may be an example of the composition for inducing the hyphal branching of a mycorrhizal fungus. The composition for inducing the hyphal branching of a mycorrhizal fungus and the composition for improving the cultivation performance of a symbiosis-target plant are also referred to as the "agent for inducing the hyphal branching of a mycorrhizal fungus" and the "agent for improving the cultivation performance of a symbiosis-target plant," respectively.

The intended use of the composition of the present invention exemplified above may be useful in the fields of agriculture and horticulture. Therefore, the composition of the present invention may be used in the fields of agriculture and horticulture. In other words, the composition of the present invention may be, for example, an agricultural and horticultural composition. The composition of the present invention may specifically be, for example, an agricultural and horticultural composition for the intended use of the composition of the present invention exemplified above.

The composition of the present invention may be provided as, for example, a pesticide. The composition of the present invention may also be provided as, a fertilizer.

The compositional profile of the composition of the present invention is not particularly limited as long as the composition of the present invention contains an active ingredient and yields desired effects. The types and contents of the components contained in the composition of the present invention can be appropriately selected depending on various conditions such as the type of target matter, the cultivation method of the target matter, the growth stage of the target matter, the purpose of using the composition of the present invention, and the aspect of using the composition of the present invention.

The composition of the present invention may consist of an active ingredient or may contain ingredients other than the active ingredient. Examples of ingredients other than the active ingredient include ingredients that are usually used for agricultural chemicals, fertilizers, medicines, and the like. Specific examples of such ingredients include an excipient, a binder, a disintegrant, a lubricant, a stabilizer, a diluent, a surfactant, a spreader, a pH adjuster, water, an alcohol, a vitamin, a mineral, and other additives. Specific examples of the spreader include Approach BI (trademark) (Kao Corporation), Mixpower (trademark) (Syngenta Japan K.K.), and Squash (trademark) (MARUWA BIOCHEMICAL Co., Ltd.). One kind of ingredient other than the active ingredient or two or more kinds thereof may be used. The composition of the present invention may be formulated as appropriate. The dosage form of the composition of the present invention is not particularly limited. The dosage form of the composition of the present invention can be appropriately selected depending on various conditions such as the aspect of using the composition of the present invention. Examples of dosage forms include liquid, suspension, powder, tablet, pill, capsule, and paste.

The content of the active ingredient in the composition of the present invention is more than 0% (w/w) and is 100% (w/w) or less. The content of the active ingredient in the composition of the present invention may be, for example, 0.0005% (w/w) or more, 0.001% (w/w) or more, 0.002% (w/w) or more, 0.005% (w/w) or more, 0.01% (w/w) or more, 0.02% (w/w) or more, 0.05% (w/w) or more, 0.1% (w/w) or more, 0.2% (w/w) or more, 0.5% (w/w) or more, 1% (w/w) or more, 2% (w/w) or more, 5% (w/w) or more, or 10% (w/w) or more. It may be 100% (w/w) or less, 99.9% (w/w) or less, 70% (w/w) or less, 50% (w/w) or less, 30% (w/w) or less, 20% (w/w) or less, 15% (w/w) or less, 10% (w/w) or less, 5% (w/w) or less, 2% (w/w) or less, 1% (w/w) or less, 0.5% (w/w) or less, 0.2% (w/w) or less, 0.1% (w/w) or less, 0.05% (w/w) or less, or 0.02% (w/w) or less. It also may be any compatible combination thereof. In addition, the content of the active ingredient in the composition of the present invention may be, for example, 10 nM or more, 20 nM or more, 50 nM or more, 100 nM or more, 200 nM or more, 500 nM or more, 1 µM or more, 2 µM or more, 5 µM or more, 10 µM or more, 20 µM or more, 50 µM or more, 100 µM or more, or 200 µM or more. It may be 1 M or less, 500 mM or less, 200 mM or less, 100 mM or less, 50 mM or less, 20 mM or less, 10 mM or less, 5 mM or less, 2 mM or less, or 1 mM or less. It also may be any compatible combination thereof. In a case in which the composition of the present invention contains two or more kinds of active ingredients, the contents of two or more kinds of active ingredients in the composition of the present invention may be set independently or in total within the range of the content of the active ingredients in the composition of the present invention exemplified above (provided that the total content of the two or more kinds of active ingredients in the composition of the present invention is 100% (w/w) or less). In a case in which the composition of the present invention contains two or more kinds of active ingredients, the "content of the active ingredients in the composition of the present invention" means the total content of those two or more active ingredients in the composition of the present invention, unless otherwise specified.

In addition, the content of the active ingredient in the composition of the present invention can be set such that, for example, the concentration of the active ingredients is within a specified range when using the composition of the present invention. The concentration of an active ingredient when the composition of the present invention is used is also referred to as the "use concentration of the active ingredient" or "application concentration of the active ingredient." The use concentration of the active ingredient may be, in particular, the concentration when the composition of the present invention is used in a liquid form.

The use concentration of the active ingredient may be, for example, 1 nM or more, 2 nM or more, 5 nM or more, 10 nM or more, 20 nM or more, 50 nM or more, 100 nM or more, 200 nM or more, 500 nM or more, 1 µM or more, 2 µM or more, 5 µM or more, 10 µM or more, 20 µM or more, 50 µM or more, 100 µM or more, 200 µM or more, 500 µM or more, or 1 mM or more. It may be 10 mM or less, 5 mM or less, 2 mM or less, 1 mM or less, 500 µM or less, 200 µM or less, 100 µM or less, 50 µM or less, 20 µM or less, 10 µM or less, 5 µM or less, 2 µM or less, 1 µM or less, 500 nM or less, 200 nM or less, or 100 nM or less. It also may be any compatible combination thereof. The use concentration of the active ingredient may specifically be, for example, from 1 nM to 10 nM, from 10 nM to 100 nM, from 100 nM to 1 µM, from 1 µM to 10 µM, from 10 µM to 100 µM, from 100 µM to 1 mM, or from 1 mM to 10 mM. The use concentration of the active ingredient may specifically be, for example, from 1 nM to 1 mM, from 10 nM to 10 mM, from 10 nM to 1 mM, from 10 nM to 100 µM, from 100 nM to 10 mM, from 100 nM to 1 mM, from 100 nM to 100 µM, from 1 µM to 10 mM, from 1 µM to 1 mM, from 1 µM to 100 µM, from 10 µM to 10 mM, from 10 µM to 1 mM, from 10 µM to 100 µM, from 100 µM to 10 mM, or from 100 µM to 1 mM. In the case of using two or more kinds of active ingredients, the use concentrations of those two or more active ingredients may be set independently or in total within the range of the content of the active ingredients in the use concentration of the active ingredient exemplified above. In the case of using two or more kinds of active ingredients, the " use concentration of the active ingredient" means the total use concentration of those two or more active ingredients, unless otherwise specified.

When an ingredient containing an active ingredient is used, the amount of an active ingredient (e.g., content (concentration) or amount used) is calculated based on the amount of the active ingredient in the ingredient. The amount of an active ingredient (e.g., content (concentration) or amount used) shall be calculated based on the mass of the salt or hydrate converted to an equimolar mass of the free form when the active ingredient forms a salt or hydrate. The amount of an active ingredient (e.g., content (concentration) or amount used) shall be calculated based on the dry weight of Component (C) when the active ingredient is Component (C).

The active ingredient and other ingredients may be contained in a mixed state in the composition of the present invention or may be contained separately or in optional separate combinations in the composition of the present invention.

### <3> Method of the Present Invention

The method of the present invention is a method including applying an active ingredient (i.e., Component (A), (B), or (C) described above) to a target matter, such as a seed of a parasitic plant, a cultivation-target plant, or a mycorrhizal fungus. The method of the present invention can be carried out, for example, so as to obtain the effects exemplified above.

In one aspect, the germination of a parasitic plant may be induced or inhibited by carrying out the method of the present invention, specifically by applying the active ingredient to seeds of a parasitic plant. In other words, the method of the present invention may be, for example, a method for inducing or inhibiting the germination of a parasitic plant. The method for inducing the germination of a parasitic plant may be, for example, a method for inducing suicide germination of a parasitic plant. The induction or inhibition of suicide germination of a parasitic plant may allow, for example, controlling the parasitic plant. In other words, the method of the present invention may be, for example, a method for controlling a parasitic plant. The method for controlling a parasitic plant may be an example of the method for inducing or inhibiting the germination of a parasitic plant. The induction of suicide germination of a parasitic plant, the inhibition of the germination of a parasitic plant, or the control of a parasitic plant may allow, for example, the improvement of the cultivation performance of a parasitism-target plant. Therefore, the method of the present invention may be utilized for, for example, cultivating a parasitism-target plant. In other words, the method of the present invention may be, for example, a method for cultivating a parasitism-target plant, such as a method for improving the cultivation performance of a parasitism-target plant. The method for cultivating a parasitism-target plant, such as a method for improving the cultivation performance of a parasitism-target plant, may be an example of the method for inducing the germination of a parasitic plant, the method for inhibiting the germination of a parasitic plant, or the method for controlling a parasitic plant.

In one aspect, the branching of a cultivation-target plant may be inhibited by carrying out the method of the present invention, specifically by applying the active ingredient to a cultivation-target plant. In other words, the method of the present invention may be, for example, a method for inhibiting the branching of a cultivation-target plant. Inhibiting the branching of a cultivation-target plant may, for example, improve the cultivation performance of a cultivation-target plant. Therefore, the method of the present invention may be utilized for, for example, cultivating a cultivation-target plant. In other words, the method of the present invention may be, for example, a method for cultivating a cultivation-target plant, such as a method for improving the cultivation performance of a cultivation-target plant. The method for cultivating a cultivation-target plant, such as a method for improving the cultivation performance of a cultivation-target plant, may be an example of the method for inhibiting the branching of a cultivation-target plant.

In one aspect, the hyphal branching of a mycorrhizal fungus may be induced by carrying out the method of the present invention, specifically by applying the active ingredient to a mycorrhizal fungus. In other words, the method of the present invention may be, for example, a method for inducing the hyphal branching of a mycorrhizal fungus. Inducing the hyphal branching of a mycorrhizal fungus may, for example, improve a symbiosis-target plant. Therefore, the method of the present invention may be utilized for, for example, cultivating a symbiosis-target plant. In other words, the method of the present invention may be, for example, a method for cultivating a symbiosis-target plant, such as a method for improving the cultivation performance of a symbiosis-target plant. The method for cultivating a symbiosis-target plant, such as a method for improving the cultivation performance of a symbiosis-target plant, may be an example of the method for inducing the hyphal branching of a mycorrhizal fungus.

The active ingredient can be applied to a plant, for example, by utilizing the composition of the present invention (i.e., by applying the composition of the present invention). In other words, one aspect of the method of the present invention may be, for example, a method including applying the composition of the present invention to a plant. "Applying the active ingredient to a plant" encompasses applying the composition of the present invention to a plant. The composition of the present invention can be applied to a plant, for example, as is or after being appropriately diluted, dispersed, or dissolved in a liquid such as water, physiological saline, a buffer solution, alcohol, DMSO, or the like. In other words, the composition of the present invention can be applied to a plant after, for example, appropriately adjusting its concentration such that the use concentration of the active ingredient exemplified above can be obtained. The composition of the present invention can be applied to a plant, especially in a liquid form. The composition of the present invention may be used singly or in combination with other ingredients. For other ingredients, the descriptions regarding ingredients other than the active ingredient in the description of the composition of the present invention may be applied mutatis mutandis. In other words, the composition of the present invention may be used in combination with an additive such as a spreader.

The method for applying the composition of the present invention is not particularly limited as long as the desired effect can be obtained. The method for applying the composition of the present invention can be appropriately selected depending on various conditions such as the type of target matter, the method for growing a target matter, the growth stage of a target matter, and the purpose of using the composition of the present invention. The composition of the present invention can be applied to a target matter by an ordinary method in which a pesticide or fertilizer is applied to a plant seed, a plant, or a mycorrhizal fungus. The composition of the present invention may be applied to, for example, a target matter itself, such as a seed of a parasitic plant, a cultivation target plant, or a mycorrhizal fungus, or to a medium in which a target matter is grown, or to a combination thereof. The medium in which a target matter is grown is also referred to as the "growth medium" or "growth system." The growth medium can be appropriately selected depending on various conditions, such as the type of target matter and the method for growing a target matter. Examples of growing a target matter include germinating a parasitic plant, cultivating a cultivation-target plant, and growing a mycorrhizal fungus. The method for growing a target matter is not particularly limited. A target matter can be grown, for example, by the same method as an ordinary method for growing a target matter, except for applying the composition of the present invention. Examples of a method for cultivating a cultivation-target plant or the like include soil cultivation, nutrient solution cultivation, and nutrient solution soil cultivation. Examples of nutrient solution cultivation include hydroponics and solid medium culture. Examples of hydroponics include the nutrient film technique (NFT) and the deep flow technique (DFT). In other words, examples of the growth medium in which a plant such as a cultivation-target plant is cultivated include soil, a hydroponic culture solution, and a solid culture medium. Growing of other target matters, such as germinating a parasitic plant and growing a mycorrhizal fungus, can also be carried out in, for example, a medium in which a plant, such as a cultivation-target plant, is cultivated. Therefore, for the medium in which growing of other target matters, such as germinating a parasitic plant and growing a mycorrhizal fungus, is carried out, the above description regarding the medium in which a plant, such as a cultivation-target plant, is cultivated may be applied mutatis mutandis. In other words, examples of the medium in which growing of other target matters, such as germinating a parasitic plant and growing a mycorrhizal fungus, is carried out include the media exemplified as media in which a plant is cultivated. The medium in which germinating a parasitic plant is carried out may also be the medium in which cultivating a parasitism-target plant is carried out. The medium in which growing a mycorrhizal fungus is carried out may also be the medium in which cultivating a symbiosis-target plant is carried out. Examples of the application to a target matter per se include spraying to or coating on the target matter and immersing the target matter. The composition of the present invention may be applied to the entire or part of the target matter. For example, when the target matter is a plant, the composition of the present invention may be applied to the entire or part of the plant body. The composition of the present invention may, for example, be applied to the entire aerial part of a plant body. Examples of plant body parts include leaves, stems, trunks, roots, and fruits. When the composition of the present invention is applied to leaves, the composition of the present invention may be applied to only one or both of the front and back surfaces of the leaves. Specific examples of the application to a plant body include foliar spray and root immersion. Examples of the application to a growth medium include spraying, drenching, and mixing into the growth medium. Specifically, for example, the composition of the present invention may be applied (e.g., sprayed) to a growth medium through a watering tube. The application to a growth medium may be carried out such that the active ingredient reaches a position where it can act on a target matter. For example, the application to a medium in which a plant is grown may be carried out such that the active ingredient reaches the root zone of the plant.

The timing of applying the composition of the present invention is not particularly limited as long as the desired effect can be obtained. The timing of applying the composition of the present invention can be appropriately selected depending on various conditions such as the type of target matter, the method for growing a target matter, the growth stage of a target matter, and the purpose of using the composition of the present invention. When the composition of the present invention is applied to a growth medium, the growth medium may or may not already contain a target matter. Desired effects may be obtained in a target matter by applying the composition of the present invention to the target matter per se or by applying the composition of the present invention to a growth medium in which the target matter already exists. By applying the composition of the present invention to a growth medium in which no target matter is present, desired effects may be obtained in a target matter that may exist in the growth medium in the future. Examples of a target matter that may exist in the growth medium in the future include a target matter that will be transferred to the growth medium from outside in the future and a target matter that will be generated within the growth medium in the future. The composition of the present invention may be applied once or may be applied twice or more. The composition of the present invention may be applied intermittently or continuously.

For example, when the composition of the present invention is utilized so as to induce or inhibit the germination of a parasitic plant, the composition of the present invention may be applied before the germination of the parasitic plant.

Specifically, for example, when the composition of the present invention is used so as to induce the suicide germination of a parasitic plant (e.g., to control a parasitic plant by inducing suicide germination), the composition of the present invention may be applied before the germination of the parasitic plant such that the germination of the parasitic plant is induced during a period when no parasitism-target plant is present in the growth medium. In other words, for example, when the composition of the present invention is used so as to induce suicide germination of a parasitic plant (e.g., to control a parasitic plant by inducing suicide germination), the composition of the present invention may be applied at a time point when a parasitism-target plant is absent in the growth medium before the germination of the parasitic plant. Examples of the period or time point when a parasitism-target plant is absent in the growth medium include the period or time point before seeds or seedlings of a parasitism-target plant are planted in the growth medium. When a parasitism-target plant is cultivated after the induction of suicide germination of the parasitic plant or after the control of the parasitic plant, for example, after the induction of suicide germination of the parasitic plant or after the control of the parasitic plant, seeds or seedlings of the parasitism-target plant may be planted, the parasitism-target plant may be germinated, and/or the parasitism-target plant may be grown.

Specifically, for example, when the composition of the present invention is used so as to induce the germination of a parasitic plant (e.g., to control a parasitic plant by inducing germination), the composition of the present invention may be applied before the germination of the parasitic plant such that the germination of the parasitic plant is induced during a period when the productivity of the parasitism-target plant is not affected by the parasitism by the parasitic plant. By inducing the germination of the parasitic plant during a period when the productivity of the parasitism-target plant is not affected by the parasitism by the parasitic plant, the parasitic plant may parasite the parasitism-target plant during the same period. Examples of the period when the productivity of the parasitism-target plant is not affected by the parasitism by the parasitic plant include the late stage of the cultivation of the parasitism-target plant, i.e., the late stage of the cultivation season of the parasitism-target plant. The "late stage of the growth of the parasitism-target plant" may refer to, for example, the period after the parasitism-target plant has become fully grown. The "late stage of the growth of the parasitism-target plant" may mean, for example, a period after 50% or more, 60% or more, 70% or more, 80% or more, 90% or more, or 95% or more of the entire period of the cultivation of the parasitism-target plant has elapsed. The "entire period of the cultivation of the parasitism-target plant" may mean the period from planting the seeds or seedlings of the parasitism-target plant to the completion of cultivation of the parasitism-target plant (e.g., harvesting the plant body). At such time, for example, the composition of the present invention may be applied (e.g., sprayed) to a growth medium through a watering tube. Following the germination and parasitism of a parasitic plant and before a parasitic plant matures and produces seeds, the parasitic plant may be removed from the growth medium. The parasitic plants may be harvested (e.g., cut) from the growth medium along with the parasitism-target plant.

Specifically, for example, when the composition of the present invention is used so as to inhibit the germination of a parasitic plant (e.g., to control a parasitic plant by inhibiting germination), the composition of the present invention may be applied before the germination of the parasitic plant such that the germination of the parasitic plant is inhibited during a period when a parasitism-target plant is present in the growth medium. In other words, for example, when the composition of the present invention is used so as to inhibit the germination of a parasitic plant (e.g., to control a parasitic plant by inhibiting germination), the composition of the present invention may be applied at a time point when a parasitism-target plant is absent or present in the growth medium before the germination of the parasitic plant. In other words, by applying the composition of the present invention in advance at a time point when the parasitism-target plant is absent in the growth medium, the germination of the parasitic plant may be inhibited during the period when the parasitism-target plant is present in the growth medium thereafter. In addition, by applying the composition of the present invention at a time point when the parasitism-target plant is present in the growth medium, the germination of the parasitic plant may be inhibited during the period when the parasitism-target plant is present in the growth medium. When the composition of the present invention is used so as to inhibit the germination of a parasitic plant (e.g., to control a parasitic plant by inhibiting germination), the composition of the present invention may be applied, for example, especially when a parasitism-target plant is present in the growth medium. Examples of the period or time point when the parasitism-target plant is present in the growth medium include a period or time point after the germination of the parasitism-target plant and a period or time point after planting a seedling of the parasitism-target plant in the growth medium.

By applying the composition of the present invention to a seed of a parasitic plant or by applying the composition of the present invention to a growth medium in which a seed of a parasitic plant already exists, the germination of the parasitic plant (e.g., suicide germination) can be induced, the germination of the parasitic plant can be inhibited, parasitic plants emerging from the seed can be controlled, and/or the cultivation performance of a plant that is the parasitism target of parasitic plants emerging from the seed can be improved. In addition, by applying the composition of the present invention to a growth medium in which a seed of a parasitic plant is absent, the germination (e.g., suicide germination) of a parasitic plant that will be present in the growth medium in the medium can be induced, the germination of a parasitic plant that will be present in the growth medium in the medium can be inhibited, parasitic plants emerging from the seed can be controlled, and/or the cultivation performance of a plant that is the parasitism target of parasitic plants emerging from the seed can be improved. In other words, the composition of the present invention may be used for, for example, controlling a parasitic plant in a growth medium that has already been contaminated with a seed of the parasitic plant or may be used in a preventive manner for controlling a parasitic plant in a growth medium that will be possibly contaminated with a seed of the parasitic plant.

For example, when the composition of the present invention is utilized so as to inhibit the branching of a cultivation-target plant, the composition of the present invention may be applied before the branching of the cultivation-target plant has progressed. Specifically, for example, when the composition of the present invention is utilized so as to limit the branching of a cultivation-target plant to a desired extent, the composition of the present invention may be applied before the branching of the cultivation-target plant has progressed to the desired extent.

For example, when the composition of the present invention is utilized so as to induce the hyphal branching of a mycorrhizal fungus, the composition of the present invention may be applied before the hyphal branching of the mycorrhizal fungus is complete. In addition, for example, the composition of the present invention may be applied after the hyphal branching of a mycorrhizal fungus is complete, thereby further promoting the hyphal branching.

The amount of the composition of the present invention to be applied is not particularly limited as long as the desired effect can be obtained. The amount of the composition of the present invention to be applied can be appropriately selected depending on various conditions such as the type of target matter, the method for growing a target matter, the growth stage of a target matter, the purpose of using the composition of the present invention, the method for applying the composition of the present invention, and the timing of applying the composition of the present invention.

The amount of the composition of the present invention to be applied as, for example, the amount of the composition of the present invention to be applied in a liquid form (e.g., the composition of the present invention in a liquid form containing the active ingredient at the use concentration as exemplified above) may be 100 L/ha or more, 200 L/ha or more, 500 L/ha or more, 1000 L/ha or more, 1500 L/ha or more, 2000 L/ha or more, 3000 L/ha or more, 4000 L/ha or more, 5000 L/ha or more, 7000 L/ha or more, 10,000 L/ha or more, 30,000 L/ha or more, 50,000 ha or more, 70,000 ha or more, 100,000 L/ha or more, 150,000 L/ha or more, 200,000 L/ha or more, 300,000 L/ha or more, 500,000 L/ha or more, or 750,000 L/ha or more. It may be 1,000,000 L/ha or less, 750,000 L/ha or less, 500,000 L/ha or less, 300,000 L/ha or less, 200,000 L/ha or less, 150,000 L/ha or less, 100,000 L/ha or less, 70,000 L/ha or less, 50,000 L/ha or less, 30,000 L/ha or less, 10,000 L/ha or less, 9000 L/ha or less, 8000 L/ha or less, 7000 L/ha or less, 6000 L/ha or less, 5000 L/ha or less, 4000 L/ha or less, 3000 L/ha or less, 2000 L/ha or less, or 1500 L/ha or less. It also may be any compatible combination thereof. Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 100 L/ha to 1500 L/ha, from 1500 L/ha to 5000 L/ha, from 5000 L/ha to 10,000 L/ha, from 10,000 L/ha to 30,000 L/ha, from 30,000 L/ha to 50,000 L/ha, form 50,000 L/ha to 100,000 L/ha, from 100,000 L/ha to 150,000 L/ha, from 150,000 L/ha to 200,000 L/ha, from 200,000 L/ha to 500,000 L/ha, or from 500,000 L/ha to 10,000,000 L/ha. Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 100 L/ha to 1,000,000 L/ha, from 200 L/ha to 1,000,000 L/ha, from 500 L/ha to 1,000,000 L/ha, from 1000 L/ha to 750,000 L/ha, from 10,000 L/ha to 750,000 L/ha, or from 100,000 L/ha to 750,000 L/ha. In addition, the amount of the composition of the present invention to be applied can be set, taking into consideration not only the application area (two-dimensional element) but also three-dimensional elements. In other words, the amount of the composition of the present invention to be applied can be set, for example, according to the height of a plant to which the composition of the present invention is to be applied (e.g., sprayed). Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 1000 L/ha to 750,000 L/ha, from 1000 L/ha to 30,000 L/ha, from 1000 L/ha to 5000 L/ha, or from 1000 L/ha to 1500 L/ha for a plant that is knee-high from the ground surface. Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 1500 L/ha to 750,000 L/ha, from 1500 L/ha to 70,000 L/ha, from 1500 L/ha to 10,000 L/ha, or from 1500 L/ha to 3000 L/ha for a plant that is from knee-high to human-height. Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 3000 L/ha to 750,000 L/ha, from 3000 L/ha to 100,000 L/ha, from 3000 L/ha to 30,000 L/ha, or from 3000 L/ha to 5000 L/ha for a plant that is from human height to 2-m height. Specifically, the amount of the composition of the present invention to be applied as, for example, the amount of the composition of the present invention to be applied in a liquid form (e.g., the composition of the present invention in a liquid form containing the active ingredient at the use concentration as exemplified above) may be from 5000 L/ha to 750,000 L/ha, from 5000 L/ha to 150,000 L/ha, from 5000 L/ha to 30,000 L/ha, or from 5000 L/ha to 7000 L/ha for a plant that is 2 m or more in height. When the composition of the present invention is applied to a growth medium (e.g., irrigated to the ground surface), specifically, the amount of the composition of the present invention applied as, for example, the amount of the composition of the present invention applied in a liquid form (e.g., the composition of the present invention in a liquid form containing the active ingredient at the use concentration as exemplified above) may be from 250,000 L/ha to 750,000 L/ha. The composition of the present invention may be applied once or may be applied in divided portions. The composition of the present invention may be applied, for example, in two or more, three or more, five or more, or ten or more divided portions. When the composition of the present invention is applied in divided portions, the "amount of the composition of the present invention applied" means the total amount of the composition of the present invention applied by a plurality of applications.

The amount of the composition of the present invention to be applied can be set, for example, such that the amount of the active ingredient to be applied falls within a predetermined range.

The amount of the active ingredient to be applied may be, for example, 1µ mol/ha or more, 10µ mol/ha or more, 20µ mol/ha or more, 50µ mol/ha or more, 100µ mol/ha or more, 200µ mol/ha or more, 500µ mol/ha or more, 1 mmol/ha or more, 2 mmol/ha or more , 5 mmol/ha or more , 10 mmol/ha or more , 20 mmol/ha or more, 50 mmol/ha or more, 100 mmol/ha or more, 200 mmol/ha or more, 500 mmol/ha or more, 1 mol/ha or more, 2 mol/ha or more, 5 mol/ha or more, 10 mol/ha or more, 20 mol/ha or more, 50 mol/ha or more, 100 mol/ha or more, 300 mol/ha or more, 500 mol/ha or more, 1000 mol/ha or more, or 1500 mol/ha or more. It may be 2500 mol/ha or less, 1500 mol/ha or less, 1000 mol/ha or less, 500 mol/ha or less, 200 mol/ha or less, 100 mol/ha or less, 50 mol/ha or less, 20 mol/ha or less, 10 mol/ha or less, 5 mol/ha or less, 2 mol/ha or less, 1 mol/ha or less, 500 mmol/ha or less, 200 mmol/ha or less, 100 mmol/ha or less, 50 mmol/ha or less, 20 mmol/ha or less, 10 mmol/ha or less, 5 mmol/ha or less, 2 mmol/ha or less, 1 mmol/ha or less, 500µ mol/ha or less, 200µ mol/ha or less, or 100µ mol/ha or less. It also may be any compatible combination thereof. Specifically, the amount of the active ingredient to be applied may be, for example, from 1µ mol/ha to 100µ mol/ha, from 10µ mol/ha to 1 mmol/ha, from 1 mmol/ha to 10 mmol/ha, from 10 mmol/ha to 100 mmol/ha, from 100 mmol/ha to 1 mol/ha, from 1 mol/ha to 10 mol/ha, from 10 mol/ha to 100 mol/ha, from 100 mol/ha to 500 mol/ha, from 500 mol/ha to 1000 mol/ha, from 1000 mol/ha to 1500 mol/ha, or from 1500 mol/ha to 2500 mol/ha. When the composition of the present invention is applied in dividend portions, the "amount of the active ingredient to be applied" means the total amount of the active ingredient to be applied by a plurality of applications.

The above description of the aspect of applying the composition of the present invention can be applied mutatis mutandis to any other case in which an active ingredient is applied to a plant. In other words, the active ingredient may be applied to a plant at a use concentration, for example, as exemplified above. For example, the active ingredient may be applied to a plant at the amount of the active ingredient to be applied as exemplified above. The active ingredient may be prepared as a composition, for example, a liquid composition, containing the active ingredient, and applied to a plant. For a composition containing the active ingredient, the explanation of the composition of the present invention may be applied mutatis mutandis. The active ingredient can be applied to a plant, especially in a liquid form. Specifically, the active ingredient may be prepared, for example, as a liquid composition containing the active ingredient at the use concentration as exemplified above and applied to a plant. The active ingredient may be used in combination with other ingredients, such as a spreader.

A plant (specifically, a plant body) can be obtained by cultivating it using the method of the present invention. Therefore, one aspect of the method of the present invention may be a method for producing a plant (specifically, a plant body). More specifically, one aspect of the method of the present invention may be a method for producing a plant (specifically, a plant body), including cultivating a plant by applying an active ingredient (i.e., Component (A), (B), or (C) described above) to a target matter, such as a seed of a parasitic plant, a cultivation-target plant, or a mycorrhizal fungus. The combination of the target matter and the plant to be produced can be selected as appropriate. Examples of the combination of the target matter and the plant to be produced include a combination of a seed of a parasitic plant and a parasitism-target plant, a combination of a cultivation-target plant and a cultivation-target plant (this means that a cultivation-target plant to which an active ingredient has been applied), and a combination of a mycorrhizal fungus and a symbiosis-target plant. The method for cultivating the plant to be produced is not particularly limited. The cultivation of the plant to be produced can be carried out, for example, in the same manner as ordinary methods for cultivating plants, except for applying the active ingredient to the target matter. The method for cultivating the plant is as described above. The application of the active ingredient and the cultivation of the plant to be produced may, for example, be carried out to obtain the desired effect of applying the active ingredient. For example, the active ingredient may be applied during the cultivation of the plant to be produced, or the active ingredient may be applied before the cultivation of the plant to be produced. Specifically, for example, after the induction of suicide germination of a parasitic plant, after the inhibition of the germination of a parasitic plant, or after the control of a parasitic plant, a parasitism-target plant may be cultivated. In other words, one aspect of the method of the present invention may be a method for producing a parasitism-target plant (specifically a plant body of a parasitism-target plant), including: for example, applying an active ingredient (i.e., the above-described Component (A), (B), or (C)) to a seed of a parasitic plant, thereby inducing the suicide germination of the parasitic plant so as to inhibit the germination of the parasitic plant or control the parasitic plant; and cultivating a parasitism-target plant after the application (specifically after inducing the suicide germination of the parasitic plant, after inhibiting the germination of the parasitic plant, or after controlling the parasitic plant). One aspect of the method of the present invention may be a method for producing a parasitism-target plant (specifically a plant body of a parasitism-target plant), including: for example, cultivating a parasitism-target plant; and applying an active ingredient (i.e., the above-described Component (A), (B), or (C)) to a seed of a parasitic plant, thereby inhibiting the germination of the parasitic plant. The plant (specifically the plant body) can be harvested appropriately. In other words, the method of the present invention may further include harvesting the plant (specifically the plant body). "Harvesting" may be used interchangeably with "collecting." "Harvesting or collecting a plant" may be used interchangeably with "harvesting or collecting a plant body." The plant (specifically the plant body) to be harvested may be the entire or part of the plant body. Examples of plant body parts include leaves, stems, trunks, roots, and fruits.

### <4> Use of Active Ingredient

The present invention also discloses the use of the active ingredient in the application exemplified above. In other words, the present invention discloses: for example, the use of an active ingredient for inducing the germination (e.g., suicide germination) of a parasitic plant, inhibiting the germination of a parasitic plant, controlling a parasitic plant, inhibiting the branching of a cultivation-target plant, inducing the hyphal branching of a mycorrhizal fungus, or improving cultivation performance of a plant (e.g., a parasitism-target plant, a cultivation-target plant, or a symbiosis-target plant); and the use of an active ingredient in producing a composition for inducing the germination (e.g., suicide germination) of a parasitic plant, inhibiting the germination of a parasitic plant, controlling a parasitic plant, inhibiting the branching of a cultivation-target plant, inducing the hyphal branching of a mycorrhizal fungus, or improving cultivation performance of a plant (e.g., a parasitism-target plant, a cultivation-target plant, or a symbiosis-target plant).

The present invention also discloses an active ingredient for use in the above-described application. In other words, the present invention discloses: for example, an active ingredient used for inducing the germination (e.g., suicide germination) of a parasitic plant, inhibiting the germination of a parasitic plant, controlling a parasitic plant, inhibiting the branching of a cultivation-target plant, inducing the hyphal branching of a mycorrhizal fungus, or improving cultivation performance of a plant (e.g., a parasitism-target plant, a cultivation-target plant, or a symbiosis-target plant); and an active ingredient used in producing a composition for inducing the germination (e.g., suicide germination) of a parasitic plant, inhibiting the germination of a parasitic plant, controlling a parasitic plant, inhibiting the branching of a cultivation-target plant, inducing the hyphal branching of a mycorrhizal fungus, or improving cultivation performance of a plant (e.g., a parasitism-target plant, a cultivation-target plant, or a symbiosis-target plant).

### Examples

The present invention will now be described in more detail with reference to the following non-limiting examples.

### (Synthesis Example)

Compounds 1 to 90 were obtained by the following method. The structures of Compounds 1 to 90 are shown in the following formulas (Compound 1) to (Compound 90), respectively.

### Synthesis Example 1

Pyridine (0.2 mL) was added to a chloroform solution (5 mL) of N^{α}-Boc-Lys-OMe·AcOH·nH₂O(0·AcOH) (296 mg, 0.87 mmol, as a monohydrate) and stirred at 0°C for 5 minutes. After that, a chloroform solution (5 mL) of triphosgene (266 mg, 0.99 mmol) was added and further stirred for 2 hours. 0.1N hydrochloric acid was added to the reaction solution, and then partition extraction was performed with chloroform. The organic layer was dehydrated and dried over anhydrous sodium sulfate and then concentrated to dryness under reduced pressure. The resulting residue was dissolved in chloroform (2 mL) without purification, and then 5-hydroxy-3-methyl-2,5-dihydrofuran-2-one (115 mg, 1.01 mmol) and triethylamine (0.15 mL, 1.08 mmol) were added thereto, followed by stirring at room temperature for 5 hours. Chloroform was added to the reaction solution and then partitioned and washed with 0.1N hydrochloric acid. The organic layer was dehydrated and dried over anhydrous sodium sulfate. The organic layer was concentrated to dryness under reduced pressure, and the resulting residue was purified by reversed-phase HPLC (linear gradient of water-acetonitrile), thereby obtaining Compound 1. Yield: 13%; ESI MS m/z 423.1 (M+Na)⁺; ¹H NMR (400 MHz, CD₃OD) δ 7.09 (1H, t, J=1.6 Hz), 6.85 (1H, t, J=1.6 Hz), 4.11 (1H, dd, J=4.8, 8.8 Hz), 3.73 (3H, s), 3.16 (2H, t, J=6.8 Hz), 1.94 (3H, s), 1.79 (1H, m), 1.67 (1H, m), 1.58-1.52 (2H, m), 1.46 (11H, brs).

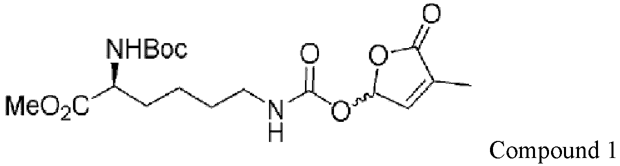

### Synthesis Example 2

Compound 1 (23 mg, 0.057 mmol) was dissolved in formic acid (0.1 mL), and the mixture was stirred at room temperature for 18 hours. The reaction solution was concentrated to dryness under reduced pressure, thereby obtaining Compound 2 as formate.
Yield: 99%; ESI MS m/z 301.0 (M+H)⁺; ¹H NMR (400 MHz, CD₃OD)δ9.26 (1H, s), 7.09 (1H, t, J=1.6 Hz), 6.85 (1H, t, J=1.6 Hz), 4.06 (1H, t, J=6.4 Hz), 3.86 (3H, s), 3.25-3.12 (2H, m), 1.99-1.89 (5H, m), 1.62-1.43 (4H, m).

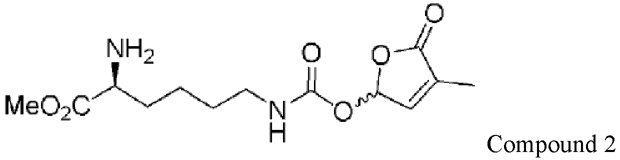

### Synthesis Example 3

Compound 3 was obtained using N^{ε}-Boc-lysine t-butyl ester and 5-hydroxy-3-methyl-2,5-dihydrofuran-2-one as starting materials by the same method as Compound 1.
Yield: 20%; ¹H NMR (400 MHz, CD₃OD)δ7.11 (1H, m), 6.85 (1H, m), 4.06 (1H, m), 3.07-3.03 (2H, m), 1.95 (3H, d, J=0.8 Hz), 1.81 (1H, m), 1.69 (1H, m), 1.49-1.44 (22H, m).

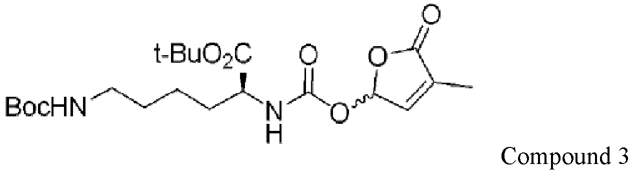

### Synthesis Example 4

Compound 4 was obtained using Compound 3 as a starting material by the same method as Compound 2.
Yield: 99%; ESI MS m/z 287.0 (M+H)⁺; ¹H NMR (400 MHz, D₂O)δ7.08 (0.5H, d, J=1.6 Hz), 7.05 (0.5H, d, J=2.0 Hz), 6.76 (0.5H, t, J=1.6 Hz), 6.74 (0.5H, t, J=1.6 Hz), 3.95 (1H, m), 2.91 (2H, t, J=7.6 Hz), 1.85 (3H, s), 1.76 (1H, m), 1.68-1.58 (3H, m), 1.39-1.33 (2H, m).

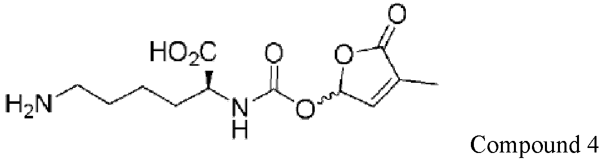

### Synthesis Example 5

Carbodiimidazole (CDI) (80 mg, 0.49 mmol) was dissolved in THF (3 mL), and 5-hydroxy-3-methyl-2,5-dihydrofuran-2-one (59 mg, 0.52 mmol) was added thereto, followed by stirring at room temperature for 5 hours. Phenylalanine t-butyl ester hydrochloride (125 mg, 0.49 mmol) was added to the reaction solution, to which triethylamine (0.08 mL, 0.57 mmol) was then added under ice cooling, followed by further stirring at room temperature for 1 hour. Ethyl acetate was added to the reaction solution and then partitioned and washed with 0.1N hydrochloric acid. The organic layer was dehydrated and dried over anhydrous sodium sulfate and then concentrated to dryness under reduced pressure. The residue was purified by reverse phase HPLC (water containing 0.1% formic acid-acetonitrile), thereby obtaining Compound 5.
Yield: 35%; ESI MS m/z 384.1 (M+Na)⁺; ¹H NMR (400 MHz, CD₃OD)δ7.33-7.22 (5H, m), 7.09 (0.5H, s), 7.05 (0.5H, s), 6.81 (0.5H, brs), 6.78 (0.5H, brs), 4.34 (1H, m), 2.96 (1H, m), 2.11 (1H, m), 1.44 (4H, s), 1.41 (5H, m).

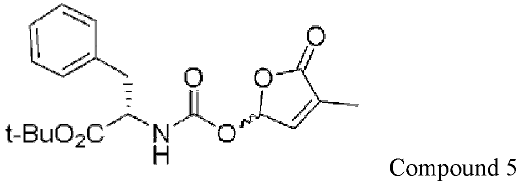

### Synthesis Example 6

Compound 6 was obtained using leucine t-butyl ester hydrochloride and 5-hydroxy-3-methyl-2,5-dihydrofuran-2-one as starting materials by the same method as Compound 5.
Yield: 21%; ESI MS m/z 350.0 (M+Na)⁺; ¹H NMR (400 MHz, CD₃OD)δ7.11 (1H, m), 6.85 (1H, m), 4.12 (1H, m), 1.95 (3H, s), 1.73 (1H, m), 1.60-1.56 (2H, m), 1.49 (9H, s), 0.99-0.94 (6H, m).

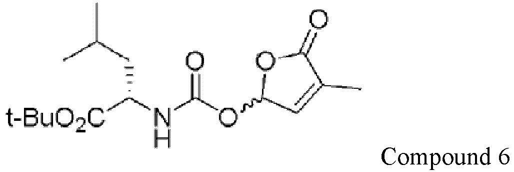

### Synthesis Example 7

Compound 7 was obtained using mono N-Boc-propylenediamine as a starting material by the same method as Compound 1.
Yield: 40%; ESI MS m/z 337.1 (M+Na)⁺; ¹H NMR (400 MHz, CD₃OD)δ7.09 (1H, t, J=1.6 Hz), 6.85 (1H, t, J=1.6 Hz), 3.19 (2H, t, J=6.8 Hz), 3.10 (2H, t, J=6.8 Hz), 1.94 (3H, s), 1.71-1.64 (2H, m), 1.45 (9H, s).

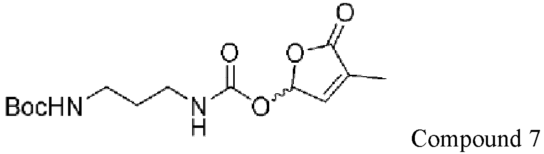

### Synthesis Example 8

Compound 8 was obtained as formate using Compound 7 as a starting material by the same method as Compound 2.
Yield: 99%; ESI MS m/z 215.0 (M+H)⁺; ¹H NMR (400 MHz, CD₃OD)δ8.34 (1H, s), 7.10 (1H, t, J=1.6 Hz), 6.85 (1H, t, J=1.6 Hz), 3.30-3.23 (2H, m), 3.00 (2H, t, J=7.6 Hz), 1.949 (3H, s), 1.945-1.88 (2H, m).

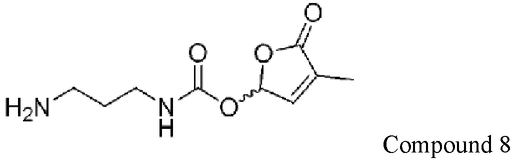

### Synthesis Example 9

Compound 9 was obtained using mono N-Boc-cadaverine and 5-hydroxy-3-methyl-2,5-dihydrofuran-2-one as starting materials by the same method as Compound 5.
Yield: 19%; ESI MS m/z 365.1 (M+Na)⁺; ¹H NMR (400 MHz, CDCl₃)δ6.87 (2H, m), 5.06 (1H, brs), 4.57 (1H, brs), 3.25-3.20 (2H, m), 3.14-3.09 (2H, m), 1.97 (3H, s), 1.58-1.48 (4H, m), 1.43 (9H, s), 1.39-1.33 (2H, m).

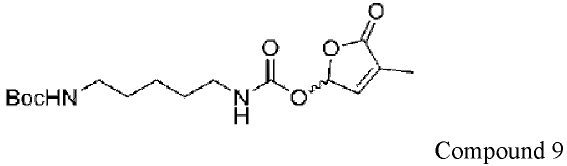

### Synthesis Example 10

Compound 10 was obtained as formate using Compound 9 as a starting material by the same method as Compound 2.
Yield: 99%; ESI MS m/z 243.0 (M+H)⁺; ¹H NMR (400 MHz, CD₃OD)δ8.51 (1H, s), 7.09 (1H, d, J=1.6 Hz), 6.84 (1H, t, J=1.6 Hz), 3.23-3.14 (2H, m), 2.94 (2H, t, J=7.6 Hz), 1.94 (3H, s), 1.72-1.68 (2H, m), 1.61-1.55 (2H, m), 1.48-1.42 (2H, m).

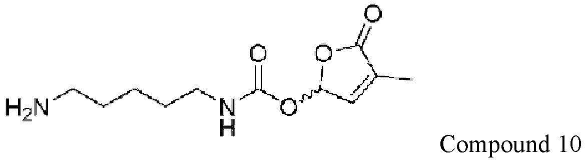

### Synthesis Example 11

Compound 9 (2.5 mg, 0.0073 mmol) was dissolved in heptafluorobutyric acid (0.1 mL), and the mixture was stirred at room temperature for 18 hours. The reaction solution was concentrated to dryness under reduced pressure, thereby obtaining Compound 10 as heptafluorobutyrate.
Yield: 99%; ¹H NMR (400 MHz, CD₃OD)δ7.09 (1H, d, J=1.6 Hz), 6.85 (1H, t, J=1.6 Hz), 3.25-3.13 (2H, m), 2.94 (2H, t, J=7.6 Hz), 1.94 (3H, s), 1.72-1.68 (2H, m), 1.61-1.56 (2H, m), 1.48-1.42 (2H, m).

### Synthesis Example 12

Triethylamine (0.15 mL) was added to a THF solution (15 mL) of Compound 10 (formate) (264 mg), and the mixture was stirred at room temperature for 5 minutes. N,N',N"-tri-Boc-guanidine (327 mg) was added to the reaction solution, and the mixture was further stirred at room temperature for 2 days. The reaction solution was concentrated under reduced pressure, and ethyl acetate was added thereto, which was then partitioned and washed with 1N hydrochloric acid. The organic layer was dehydrated and dried over anhydrous sodium sulfate and then concentrated to dryness under reduced pressure. The resulting residue was purified by silica gel column chromatography (n-hexane/ethyl acetate), thereby obtaining Compound 11.
Yield: 35%; ESI MS m/z 485.3 (M+H)⁺; ¹H NMR (400 MHz, CD₃OD)δ7.08 (1H, t, J=1.6 Hz), 6.85 (1H, t, J=1.6 Hz), 3.39-3.36 (2H, m), 3.20-3.16 (2H, m), 1.94 (3H, s), 1.66-1.38 (24H, m).

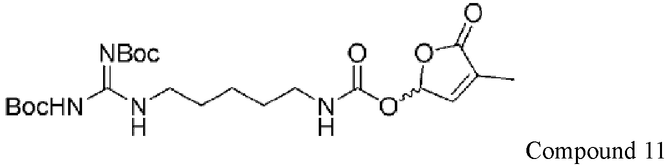

### Synthesis Example 13

Compound 12 was obtained as formate using Compound 11 as a starting material by the same method as Compound 2.
Yield: 99%; ESI MS m/z 285 (M+H)⁺; ¹H NMR (400 MHz, CD₃OD)δ8.38 (1H, s), 7.10 (1H, t, J=1.6 Hz), 6.84 (1H, t, J=1.6 Hz), 3.21-3.15 (4H, m), 1.94 (3H, s), 1.65-1.56 (4H, m), 1.46-1.40 (4H, m).

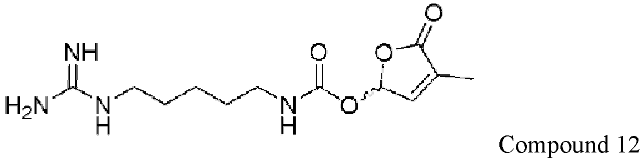

### Synthesis Example 14

Compound 12 was obtained as heptafluorobutyrate using Compound 11 as a starting material by the same method as Compound 9.
Yield: 99%; ¹H NMR (400 MHz, CD₃OD)δ7.09 (1H, s), 6.84 (1H, d, J=1.6 Hz),3.24-3.13 (4H, m), 1.94 (3H, s), 1.66-1.55 (4H, m), 1.45-1.40 (2H, m).

### Synthesis Example 15

Compound 13 was obtained using GABA ethyl ester and 5-hydroxy-3-methyl-2,5-dihydrofuran-2-one as starting materials by the same method as Compound 5. Yield: 14%; ESI MS m/z 272.0 (M+H)⁺; ¹H NMR (400 MHz, CD₃OD)δ7.09 (1H, t, J=1.6 Hz), 6.85 (1H, t, J=1.6 Hz), 4.14 (2H, q, J=7.2 Hz), 3.20 (2H, t, J=7.2 Hz), 2.38 (2H, t, J=7.2 Hz), 1.94 (3H, s), 1.86-1.79 (2H, m), 1.27 (3H, t, J=7.2 Hz).

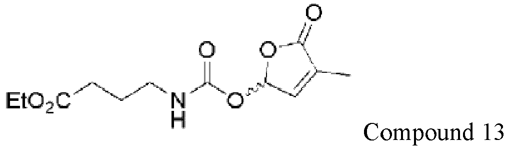

### Synthesis Example 16

Compound 14 was synthesized using GABAt-butyl ester and 5-hydroxy-3-methyl-2,5-dihydrofuran-2-one as starting materials by the same method as Compound 5.
Yield: 20%; ESI MS 322.0 (M+Na)⁺; ¹H NMR (400 MHz, CD₃OD)δ7.09 (1H, t, J=1.6 Hz), 6.85 (1H, t, J=1.6 Hz), 3.20-3.17 (2H, m), 2.29 (2H, t, J=7.6 Hz), 1.94 (3H, s), 1.82-1.75 (2H, m), 1.47 (9H, s).

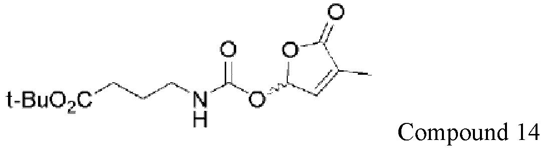

### Synthesis Example 17

Compound 15 was obtained using Compound 14 as a starting material by the same method as Compound 2.
Yield: 73%; ESI MS 244.0 (M+H)⁺; ¹H NMR (400 MHz, CD₃OD)δ7.09 (1H, t, J=1.6 Hz), 6.85 (1H, t, J=1.6 Hz), 3.23-3.19 (2H, m), 2.36 (2H, t, J=7.6 Hz), 1.94 (3H, s), 1.86-1.79 (2H, m).

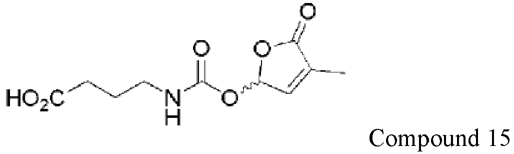

### Synthesis Example 18

Compound 16 was obtained using L-homoserine lactone hydrochloride and 5-hydroxy-3-methyl-2,5-dihydrofuran-2-one as starting materials by the same method as Compound 5.
Yield: 7%; ESI MS m/z 263.9 (M+Na)⁺; ¹H NMR (400 MHz, CD₃OD)δ7.12 (1H, m), 6.87 (1H, m), 4.52 (0.5H, m), 4.33 (1.5H, m), 4.29 (1H, m), 2.60 (1H, m), 2.33 (1H, m), 1.95 (3H, s).

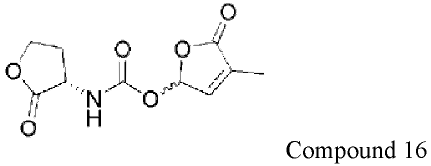

### Synthesis Example 19

Compound 17 was obtained using D-homoserine lactone hydrochloride and 5-hydroxy-3-methyl-2,5-dihydrofuran-2-one as starting materials by the same method as Compound 5.
Yield: 19%; ESI MS m/z 263.9 (M+Na)⁺; ¹H NMR (400 MHz,CD₃OD)δ7.11 (1H, m), 6.87 (1H, m), 4.61-4.56 (1.5H, m), 4.51-4.42 (1.5H, m), 4.32 (1H, m), 2.59 (1H, m), 2.33 (1H, m), 1.95 (3H, s).

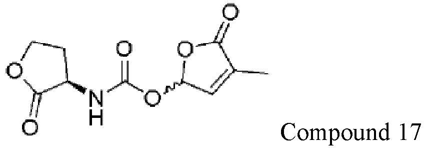

### Synthesis Example 20

Compound 18 was obtained using proline benzyl ester hydrochloride and 5-hydroxy-3-methyl-2,5-dihydrofuran-2-one as starting materials by the same method as Compound 5.
Yield: 16%; ESI MS m/z 368.0 (M+Na)⁺; ¹H NMR (400 MHz, CD₃OD)δ7.42-7.34 (4H, m), 7.12 (0.7H, t, J=1.6 Hz), 7.05 (0.3H, t, J=1.6 Hz), 6.84 (1H, m), 6.70 (0.7H, t, J=1.6 Hz), 6.48 (0.3H, t, J=1.6 Hz), 5.27-5.02 (1.7H, m), 5.03 (0.3H, d, J=11.6 Hz), 4.42 (1H, m), 3.61-3.49 (2H, m), 2.32 (1H, m), 2.07-1.86 (6H, m).

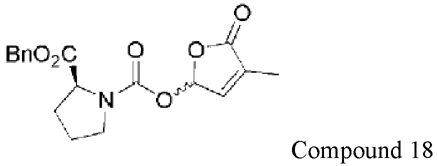

### Synthesis Example 21

Compound 19 was obtained using phenylalanine methyl ester hydrochloride and 5-hydroxy-3-methyl-2,5-dihydrofuran-2-one as starting materials by the same method as Compound 5.
Yield: 22%; ESI MS m/z 342.0 (M+Na)⁺; ¹H NMR (400 MHz, CD₃OD)δ7.32-7.22 (5H, m), 7.08 (0.5H, s), 7.03 (0.5H, t, J=1.6 Hz), 6.79 (0.5H, s), 6.76 (0.5H, s), 4.48 (1H, m), 3.74 (1.5H, s), 3.72 (1.5H, s), 3.18 (1H, m), 2.97 (1H, m), 1.94 (1.5H, s), 1.93 (1.5H, s).

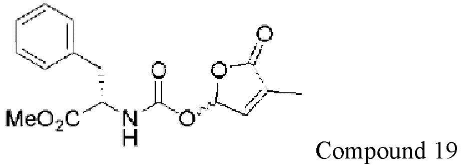

### Synthesis Example 22

Compound 20 was obtained using phenylalanine ethyl ester hydrochloride and 5-hydroxy-3-methyl-2,5-dihydrofuran-2-one as starting materials by the same method as Compound 5.
Yield: 15%; ESI MS m/z 356.0 (M+Na)⁺; ¹H NMR (400 MHz, CD₃OD)δ7.32-7.22 (5H, m), 7.08 (0.5H, s), 7.04 (0.5H, t, J=1.6 Hz), 6.78 (0.5H, d, J=1.2 Hz), 6.76 (0.5H, d, J=1.6 Hz), 4.45 (1H, m), 4.21-4.13 (2H, m), 3.17 (1H, m), 2.98 (1H, m), 1.94 (1.5H, s), 1.93 (1.5H, s), 1.26-1.20 (3H, m).

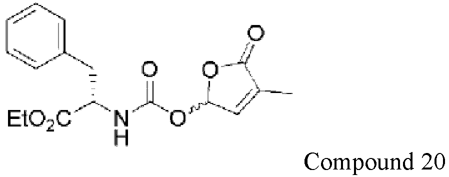

### Synthesis Example 23

### (Step 1) Synthesis of Compound 21

HOAt (132 mg, 0.97 mmol) and WSC·HCl (190 mg, 0.99 mmol) were added to an acetonitrile solution (10 mL) of N-Cbz-leucine (259 mg, 0.95 mmol) and stirred at room temperature for 1 hour. Leucine t-butyl ester hydrochloride (235 mg, 1.05 mmol) and triethylamine (0.16 mL, 1.15 mmol) were added to the reaction solution and further stirred at room temperature for 3 hours. The reaction solution was concentrated under reduced pressure, and ethyl acetate was added. The mixture was then partitioned and washed successively with a 10% aqueous citric acid solution and a saturated aqueous sodium hydrogen carbonate solution. The organic layer was dehydrated and dried over anhydrous sodium sulfate and then concentrated to dryness under reduced pressure, thereby obtaining Compound 21.
Yield: 93%; ESI MS m/z 457.2 (M+Na)⁺; ¹H NMR (400 MHz, CD₃OD) δ 7.39-7.30 (5H, m), 5.12 (1H, d, J=12.0 Hz), 5.09 (1H, d, J=12.0 Hz), 4.35 (1H, dd, J=6.0, 8.8 Hz), 4.22 (1H, m), 1.73 (4H, m), 1.62-1.54 (4H, m), 1.47 (9H, s), 0.99-0.91 (12H, m).

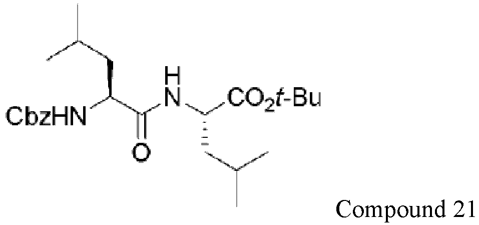

### (Step 2) Synthesis of Compound 22

5% Palladium carbon (54 mg) was added to an ethanol solution (10 mL) of Compound 21 (370 mg, 0.85 mmol) and stirred under a hydrogen atmosphere at room temperature for 18 hours. The reaction solution was filtered, and the obtained filtrate was concentrated to dryness under reduced pressure, thereby obtaining Compound 22.
Yield: 88%; ESI MS m/z 301.2 (M+H)⁺; ¹H NMR (400 MHz, CD₃OD)δ4.37 (1H, t, J=6.8 Hz), 3.40 (1H, dd, J=6.0, 8.0 Hz), 1.79-1.71 (2H, m), 1.63-1.56 (3H, m), 1.48 (9H, s), 1.39 (1H, m), 1.00-0.94 (12H, m).

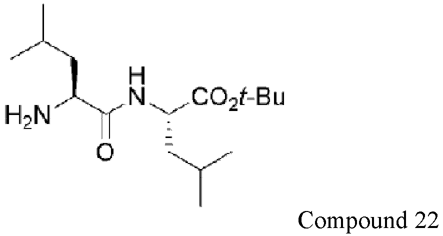

### (Step 3) Synthesis of Compound 23

Compound 23 was obtained using Compound 22 and 5-hydroxy-3-methyl-2,5-dihydrofuran-2-one as starting materials by the same method as Compound 5. Yield: 17%; ESI MS m/z 463.2 (M+Na)⁺; ¹H NMR (400 MHz,CD₃OD)δ7.10 (1H, m), 6.84 (1H, m), 4.34 (1H, m), 4.25 (1H, m), 1.95 (3H, s), 1.76-1.71 (2H, m), 1.64-1.58 (4H, m), 1.47 (9H, s), 1.00-0.93 (12H, m).

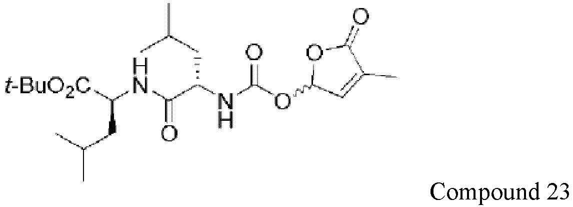

### Synthesis Example 24

### (Step 1) Synthesis of Compound 24

Compound 24 was obtained using phenylalanine methyl ester hydrochloride and N-Cbz-proline as starting materials by the same method as Compound 21. Yield: 94%; ESI MS m/z 411.1 (M+H)⁺; ¹H NMR (400 MHz,CD₃OD)δ7.39-7.15 (10H, m), 5.14 (2H, brs), 5.06 (1H, d, J=12.4 Hz), 4.99 (1H, d, J=12.4 Hz), 4.68 (1H, m), 4.29 (1H, m), 3.69 (1.5H, s), 3.65 (1.5H, s), 3.53-3.45 (2H, m), 3.16-3.07 (1.5H, m), 2.92 (0.5H, dd, J=4.8, 14.0 Hz), 2.18 (1H, m), 1.85-1.80 (3H, m).

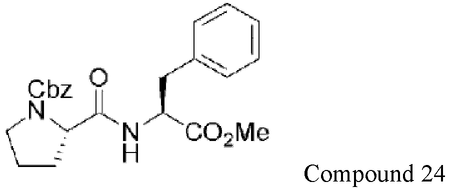

### (Step 2) Synthesis of Compound 25

Compound 25 was obtained using Compound 24 as a starting material by the same method as Compound 22.
Yield: 95%; ESI MS m/z 277.0 (M+H)⁺; ¹H NMR (400 MHz,CD₃OD)δ7.31-7.18 (5H, m), 4.72 (1H, dd, J=5.2, 8.8 Hz), 3.74 (3H, s), 3.63 (1H, dd, J=5.2, 9.2 Hz), 3.21 (1H, dd, J=5.2, 14.0 Hz), 3.02 (1H, dd, J=8.8, 14.0 Hz), 2.90-2.84 (2H, m), 2.06 (1H, m), 1.69-1.57 (3H, m).

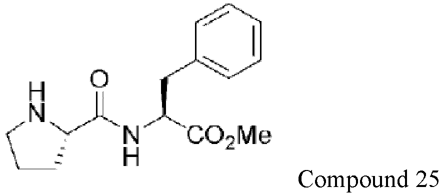

### (Step 3) Synthesis of Compound 26

Compound 26 was obtained using Compound 25 and 5-hydroxy-3-methyl-2,5-dihydrofuran-2-one as starting materials by the same method as Compound 5. Yield: 20%; ESI MS m/z 417.1 (M+H)⁺; ¹H NMR (400 MHz,CD₃OD)δ7.33-7.06 (6H, m), 7.06-6.77 (1H, m), 4.82 (0.5H, m),4.71 (0.5H, m), 4.35 (0.5H, m), 4.25 (0.5H, m), 3.74 (1.5H, s), 3.70 (1.5H, s), 3.58-3.45 (2H, m), 3.24-2.99 (2H, m), 2.17 (1H, m), 1.97-1.72 (6H, m).

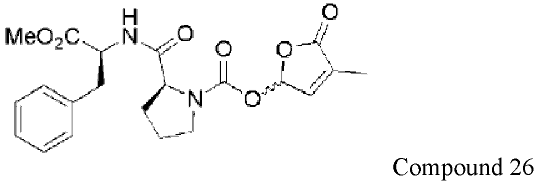

### Synthesis Example 25

Compound 27 was obtained using N-Boc-phenylalanine and 5-hydroxy-3-methyl-2,5-dihydrofuran-2-one as starting materials by the same method as Compound 21.
Yield: 88%; ESI MS m/z 384.1 (M+Na)⁺; ¹H NMR (400 MHz, CD₃OD)δ7.19-7.10 (4H, m), 7.03-6.95 (1H, m), 6.83-6.72 (2H, m), 4.29 (1H, m), 3.00 (1H, m), 2.86 (1H, m), 1.82 (0.6H, s), 1.81 (0.4H, s), 1.28 (9H, s).

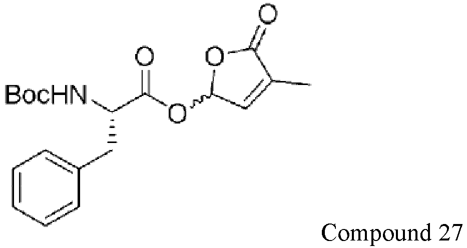

### Synthesis Example 26

Compound 28 was obtained using N-Boc-leucine and 5-hydroxy-3-methyl-2,5-dihydrofuran-2-one as starting materials by the same method as Compound 21. Yield: 91%; ESI MS m/z 350.1 (M+Na)⁺; ¹H NMR (400 MHz, CD₃OD)δ7.03 (0.5H, t, J=1.6 Hz), 7.00 (0.5H, t, J=1.6 Hz), 6.82 (1H, t, J=1.6 Hz), 6.79 (0.5H, d, J=1.6 Hz), 4.09 (1H, m), 1.84 (3H, d, J=1.6 Hz), 1.62 (1H, m), 1.52-1.43 (2H, m), 1.34 (9H, s), 0.86-0.81 (6H, m).

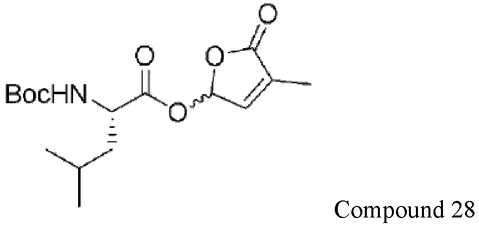

### Synthesis Example 27

Compound 29 was obtained using N^{α}-,N^{ε}-Di-Boc-lysine and 5-hydroxy-3-methyl-2,5-dihydrofuran-2-one as starting materials by the same method as Compound 21.
Yield: 92%; ESI MS m/z 465.2 (M+Na)⁺; ¹H NMR (400 MHz, CD₃OD)δ4.01 (1H, m), 2.95-2.92 (2H, m), 1.95 (3H, d, J=0.8 Hz). 1.87 (1H, m), 1.71 (1H, m), 1.49-1.44 (22H, m).

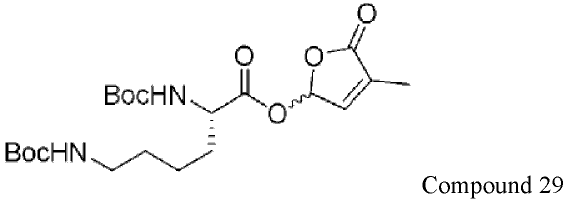

### Synthesis Example 28

Compound 30 was obtained using mono-tert-butyl succinate and 5-hydroxy-3-methyl-2,5-dihydrofuran-2-one as starting materials by the same method as Compound 21.
Yield: 87%; ESI MS m/z 293.1 (M+Na)⁺; ¹H NMR (400 MHz, CD₃OD)δ7.12 (1H, t, J=1.6 Hz), 6.92 (1H, t, J=1.6 Hz), 2.67-2.65 (2H, m), 2.59-2.56 (2H, m), 1.86 (3H, s), 1.46 (9H, s).

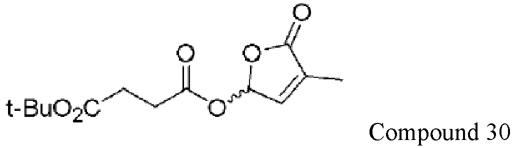

### Synthesis Example 29

Compound 31 was obtained using N-Boc-tryptophan and 5-hydroxy-3-methyl-2,5-dihydrofuran-2-one as starting materials by the same method as Compound 21. Yield: 95%; ESI MS m/z 423.1 (M+Na)⁺; ¹H NMR (400 MHz, CD₃OD)δ7.41 (1H, m), 7.24 (1H, m), 7.02-6.90 (3H, m), 6.82 (0.33H, t, J=1.6 Hz), 6.73 (0.67H, m), 6.56 (0.67H, t, J=1.6 Hz), 6.32 (0.33H, d, J=2.4 Hz), 4.36 (1H, m), 3.18-3.02 (2H, m), 1.79 (1H, s), 1.72 (2H, s), 1.30 (3H, s), 1.28 (6H, s).

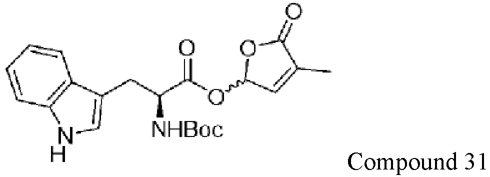

### Synthesis Example 30

Compound 32 was obtained using N-Boc-methionine and 5-hydroxy-3-methyl-2,5-dihydrofuran-2-one as starting materials by the same method as Compound 21. Yield: 99%; ESI MS m/z 377.0 (M+MeOH)⁺; ¹H NMR (400 MHz, CD₃OD)δ7.02 (1H, m), 6.82 (1H, t, J=1.6 Hz), 4.24 (0.5H, m), 4.04 (0.5H, m), 2.53-2.39 (2H, m), 2.08-1.74 (8H, m), 1.34 (9H, s).

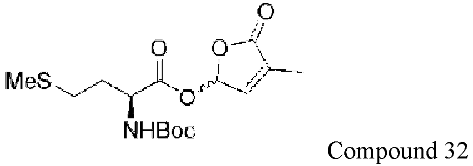

### Synthesis Example 31

Compound 33 was obtained using N-Boc-aspartic acid β-methyl ester and 5-hydroxy-3-methyl-2,5-dihydrofuran-2-one as starting materials by the same method as Compound 21.
Yield: 87%; ESI MS m/z 366.0 (M+Na)⁺; ¹H NMR (400 MHz, CD₃OD)δ7.00 (1H, m), 6.80 (1H, t, J=1.6 Hz), 4.47 (1H, m), 3.59 (3H, s), 2.84-2.67 (2H, m), 1.84 (3H, s), 1.34 (9H, s).

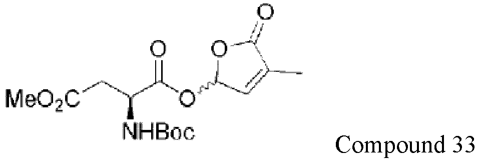

### Synthesis Example 32

Compound 34 was obtained using τ-benzyl-N^{α}-Boc-histidine and 5-hydroxy-3-methyl-2,5-dihydrofuran-2-one as starting materials by the same method as Compound 21.
Yield: 21%; ESI MS m/z 442.2 (M+H)⁺; ¹H NMR (400 MHz, CD₃OD)δ7.57 (0.5H, m), 7.54 (0.5H, s), 7.27-7.20 (3H, m), 7.15-7.13 (2H, m), 6.96 (0.5H, d, J=1.6 Hz), 6.84-6.69 (3H, m), 5.06 (1H, s), 5.05 (1H, s), 4.30 (1H, m), 2.91-2.81 (2H, m), 1.83 (1.5H, s), 1.81 (1.5H, s), 1.292 (4.5H, s) 1.288 (4.5H, s).

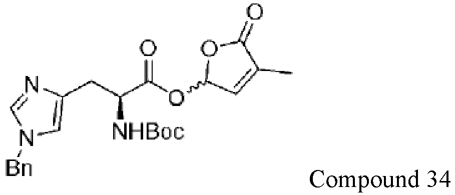

### Synthesis Example 33

Compound 35 was obtained using τ-Cbz-N^{α}-Boc-histidine and 5-hydroxy-3-methyl-2,5-dihydrofuran-2-one as starting materials by the same method as Compound 21.
Yield: 68%; ESI MS m/z 486.2 (M+H)⁺; ¹H NMR (400 MHz, CD₃OD)δ 8.08 (1H, m), 7.38 (1H, m), 7.30-7.22 (5H, m), 6.96 (1H, m), 6.77 (1H, t, J=1.6 Hz), 5.33 (1.2H, s), 5.05 (0.8H, s), 4.36 (1H, m), 2.97-2.80 (2H, m), 1.81 (3H, s), 1.28 (5.4H, s), 1.27 (3.6H, s).

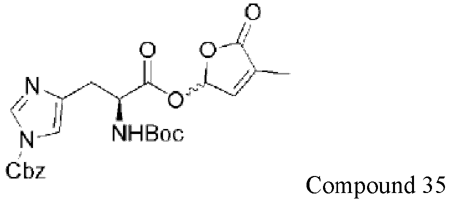

### Synthesis Example 34

5-Hydroxy-3-methyl-2,5-dihydrofuran-2-one (114 mg, 1.00 mmol) and glutaric anhydride (114 mg, 1.00 mmol) were dissolved in acetonitrile (2 mL), and triethylamine (0.15 mL, 1.08 mmol) was added thereto, followed by stirring at room temperature for 2 hours. The solvent and excess reagent were evaporated to dryness under reduced pressure, thereby obtaining Compound 36 as a triethylamine salt.
Yield: 99%; ESI MS m/z 250.9 (M+Na)⁺; ¹H NMR (400 MHz, CDCl₃)δ11.36 (1H, br), 6.94 (1H, d, J=1.6 Hz), 6.88 (1H, t, J=1.6 Hz), 3.11 (2H, q, J=7.2 Hz), 2.48 (2H, t, J=7.2 Hz), 2.38 (2H, t, J=7.2 Hz), 2.05-1.91 (5H, m), 1.27 (3H, t, J=7.2 Hz).

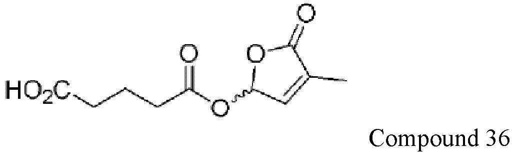

### Synthesis Example 35

Compound 37 was obtained using N-Boc-phenylalanine and 5-hydroxy-2,5-dihydrofuran-2-one as starting materials by the same method as Compound 21. Yield: 40%; ESI MS m/z 370.0 (M+Na)⁺; ¹H NMR (400 MHz, CD₃OD)δ7.53 (0.5H, dd, J=1.2, 5.6 Hz), 7.37-7.23 (4.5H, m), 7.05 (0.5H, s), 6.99 (0.5H, t, J=1.2 Hz), 6.38 (1H, t, J=1.2 Hz), 4.42 (1H, m), 3.13 (1H, m), 2.98 (1H, m), 1.40 (9H, s).

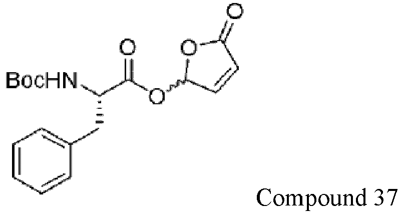

### Synthesis Example 36

Compound 38 was obtained using L-pyroglutamic acid and Nε-Boc-lysine t-butyl ester hydrochloride as starting materials by the same method as Compound 21. Yield: 85%; ESI MS m/z 414.2 (M+H)⁺; ¹H NMR (400 MHz, CD₃OD)δ4.28-4.24 (2H, m), 3.05 (2H, t, J=6.8 Hz), 2.54-2.27 (5H, m), 2.15 (1H, m), 1.86-1.83 (2H, m), 1.76-1.68 (2H, m), 1.49 (9H, s), 1.45 (9H, s).

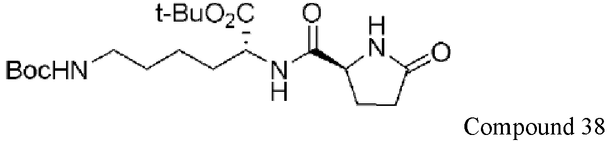

### Synthesis Example 37

Compound 38 (150 mg, 0.36 mmol) was dissolved in a 4N hydrochloric acid dioxane solution (2 mL), followed by stirring at room temperature for 18 hours. The mixture was concentrated to dryness under reduced pressure, thereby obtaining Compound 39 as a hydrochloride salt.
Yield: 99%; ¹H NMR (400 MHz, D₂O)δ4.30-4.26 (2H, m), 2.88 (2H, t, J=8.0 Hz), 2.43 (1H, m), 2.33-2.28 (2H, m), 1.97 (1H, m), 1.83 (1H, m), 1.70 (1H, m), 1.61-1.54 (2H, m), 1.39-1.30 (2H, m).

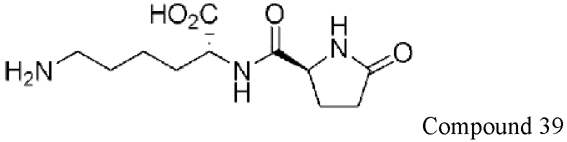

### Synthesis Example 38

Compound 40 was obtained using N^{α}-Cbz-lysine benzyl ester and L-pyroglutamic acid as starting materials by the same method as Compound 21.
Yield: 96%; ESI MS m/z 482.2 (M+H)⁺; ¹H NMR (400 MHz, CD₃OD)δ7.37-7.30 (10H, m), 5.21-5.06 (4H, m), 4.23 (1H, dd, J=4.8, 8.8 Hz), 4.12 (1H, dd, J=4.8, 8.8 Hz), 3.19-3.16 (2H, m), 2.46-2.34 (2H, m), 2.27 (1H, m), 2.01 (1H, m), 1.84 (1H, m), 1.70 (1H, m), 1.57-1.47 (2H, m), 1.43-1.36 (2H, m).

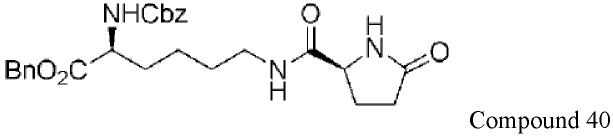

### Synthesis Example 39

Compound 41 was obtained using Compound 40 as a starting material by the same method as Compound 22.
Yield: 92%; ¹H NMR (400 MHz, D₂O)δ4.19 (1H, dd, J=5.2, 8.8 Hz), 3.60 (1H, t, J=6.0 Hz), 3.17-3.12 (2H, m), 2.49-2.30 (3H, m), 1.96 (1H, m), 1.77-1.73 (2H, m), 1.49-1.45 (2H, m), 1.32-1.28 (2H, m).

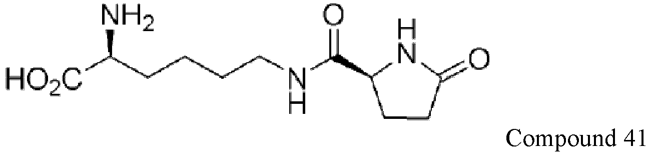

### Synthesis Example 40

Compound 42 was obtained using N^{α}-Cbz-lysine benzyl ester and D-pyroglutamic acid as starting materials by the same method as Compound 21.
Yield: 72%; ESI MS m/z 482.2 (M+H)⁺; ¹H NMR (400 MHz, CD₃OD)δ7.36-7.29 (10H, m), 5.20-5.06 (4H, m), 4.25 (1H, t, J=4.4 Hz), 4.12 (1H, dd, J=4.8, 8.8 Hz), 3.19-3.15 (2H, m), 2.41-2.34 (2H, m), 2.26 (1H, m), 2.01 (1H, m), 1.83 (1H, m), 1.70 (1H, m), 1.56-1.44 (2H, m), 1.42-1.34 (2H, m).

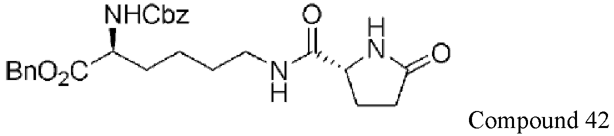

### Synthesis Example 41

Compound 43 was obtained using Compound 42 as a starting material by the same method as Compound 41.
Yield: 86%; ESI MS m/z 258.1 (M+H)⁺; ¹H NMR (400 MHz, D₂O)δ4.19 (1H, dd, J=5.2, 8.8 Hz), 3.63 (1H, dd, J=6.0, 6.4 Hz), 3.17-3.13 (2H, m), 2.47-2.30 (3H, m), 1.96 (1H, m), 1.84-1.70 (2H, m), 1.51-1.44 (2H, m), 1.38-1.23 (2H, m).

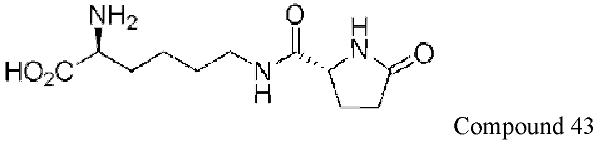

### Synthesis Example 42

Compound 44 was obtained using leucine t-butyl ester hydrochloride and D-pyroglutamic acid as starting materials by the same method as Compound 21.
Yield: 74%; ESI MS m/z 299.1 (M+H)⁺; ¹H NMR (400 MHz, CD₃OD)δ4.35 (1H, dd, J=6.4, 8.8 Hz), 4.24 (1H, dd, J=4.8, 8.4 Hz), 2.54-2.28 (3H, m), 2.09 (1H, m), 1.70 (1H, m), 1.66-1.61 (2H, m), 0.99 (3H, d, J=6.4 Hz), 0.94 (3H, d, J=6.4 Hz).

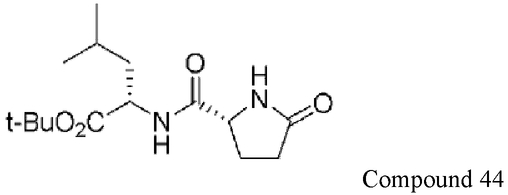

### Synthesis Example 43

Compound 45 was obtained using phenylalanine t-butyl ester hydrochloride and D-pyroglutamic acid as starting materials by the same method as Compound 21. Yield: 89%; ESI MS m/z 377.1 (M+HCO₂)⁻; ¹H NMR (400 MHz, CD₃OD)δ7.33-7.22 (5H, m), 4.64 (1H, dd, J=6.0, 9.2 Hz), 4.16 (1H, dd, J=4.8, 8.4 Hz), 3.18 (1h, dd, J=6.0, 13.6 Hz), 2.97 (1H, dd, J=9.2, 13.6 Hz), 2.34-2.21 (3H, m), 1.77 (1H, m), 1.44 (9H, s).

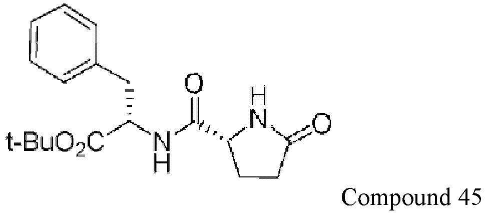

### Synthesis Example 44

Compound 46 was obtained using N^{α}-Cbz-lysine benzyl ester benzenesulfonate and (R)-(-)-5-oxotetrahydrofuran-2-carboxylic acid as starting materials by the same method as Compound 21.
Yield: 91%; ESI MS m/z 483.2 (M+H)⁺; ¹H NMR (400 MHz, CD₃OD)δ7.38-7.30 (10H, m), 5.20 (1H, d, J=13.4 Hz), 5.15 (1H, d, J=13.4 Hz), 5.10 (2H, s), 3.21 (2H, t, J=6.8 Hz), 2.57-2.54 (3H, m), 2.23-2.14 (2H, m), 1.85 (1H, m), 1.71 (1H, m), 1.59-1.47 (2H, m), 1.43-1.35 (2H, m).

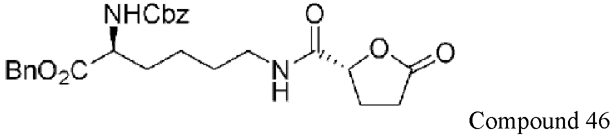

### Synthesis Example 45

Compound 47 was obtained using N^{ε}-Cbz-lysine benzyl ester hydrochloride and D-pyroglutamic acid as starting materials by the same method as Compound 21. Yield: 64%; ESI MS m/z 482.2 (M+H)⁺; ¹H NMR (400 MHz, CD₃OD)δ7.41-7.30 (10H, m), 5.19 (1H, d, J=12.0 Hz), 5.16 (1H, d, J=12.0 Hz), 5.07 (2H, s), 4.45 (1H, dd, J=4.8, 9.2 Hz), 4.22 (1H, d, J=4.8, 8.8 Hz), 3.12-3.08 (2H, m), 2.47-2.20 (4H, m), 2.02 (1H, m), 1.89 (1H, m), 1.76 (1H, m), 1.52-1.46 (2H, m), 1.42-1.36 (2H, m).

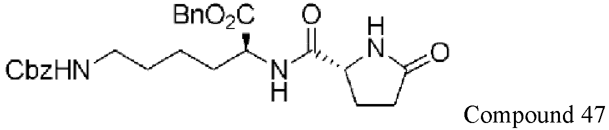

### Synthesis Example 46

Compound 48 was obtained using Compound 44 as a starting material by the same method as Compound 39.
Yield: 99%; ESI MS m/z 243.1 (M+H)⁺; ¹H NMR (400 MHz, CD₃OD)δ6.34 (1H, d, J=8.0 Hz), 4.48 (1H, m), 4.25 (1H, dd, J=4.8, 8.8 Hz), 2.53-2.40 (2H, m), 2.31 (1H, m), 2.10 (1H, m), 1.71-1.67 (3H, m), 1.00 (3H, d, J=6.0 Hz) , 0.96 (3H, d, J=6.0 Hz).

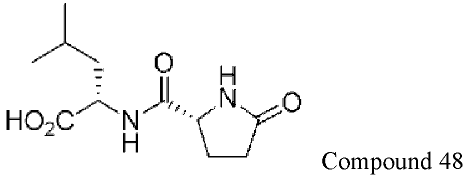

### Synthesis Example 47

Compound 49 was obtained using Compound 45 as a starting material by the same method as Compound 39.
Yield: 99%; ESI MS m/z 277.1 (M+H)⁺; ¹H NMR (400 MHz, CD₃OD)δ7.32-7.21 (5H, m), 4.76 (1H, dd, J=4.8, 9.6 Hz), 4.15 (1H, dd, J=4.8, 8.4 Hz), 3.30 (1H, dd, J=4.4, 10.0 Hz), 2.97 (1H, dd, J=9.6, 10.0 Hz), 3.32-2.19 (3H, m), 1.71 (1H, m).

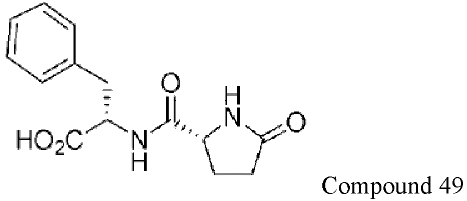

### Synthesis Example 48

Compound 50 was obtained using D-phenylalanine t-butyl ester hydrochloride and D-pyroglutamic acid as starting materials by the same method as Compound 21. Yield: 85%; ESI MS m/z 377.1 (M+HCO₂)⁻; ¹H NMR (400 MHz, CD₃OD)δ7.32-7.24 (5H, m), 4.61 (1H, dd, J=6.0, 8.8 Hz), 4.17 (1H, dd, J=4.4, 8.8 Hz), 3.17 (1H, dd, J=6.0, 12.0 Hz), 3.00 (1H, dd, J=8.8, 12.0 Hz), 2.42 (1H, m), 2.30-2.24 (2H, m), 1.96 (1H, m), 1.44 (9H, s).

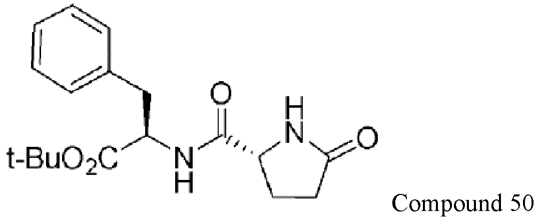

### Synthesis Example 49

Compound 51 was obtained using phenylalanine t-butyl ester hydrochloride and L-pyroglutamic acid as starting materials by the same method as Compound 21. Yield: 80%; ESI MS m/z 377.1 (M+HCO₂)⁻; ¹H NMR (400 MHz, CD₃OD)δ7.32-7.24 (5H, m), 4.61 (1H, dd, J=6.0, 8.8 Hz), 4.17 (1H, dd, J=4.4, 8.4 Hz), 3.17 (1H, dd, J=6.0, 14.0 Hz), 3.00 (1H, dd, J=8.8, 14.0 Hz), 2.42 (1H, m), 2.30-2.24 (2H, m), 1.97 (1H, m), 1.44 (9H, s).

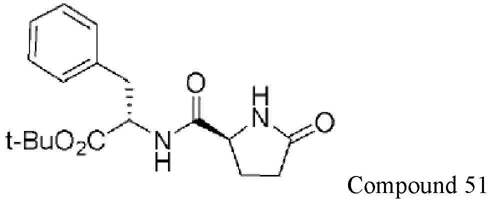

### Synthesis Example 50

Compound 52 was obtained using D-phenylalanine t-butyl ester hydrochloride and L-pyroglutamic acid as starting materials by the same method as Compound 21. Yield: 89%; ESI MS m/z 377.0 (M+HCO₂)⁻; ¹H NMR (400 MHz, CD₃OD)δ7.33-7.22 (5H, m), 4.64 (1H, dd, J=6.0, 9.2 Hz), 4.16 (1H, dd, J=4.8, 8.4 Hz), 3.18 (1H, dd, J=6.0, 14.0 Hz), 2.97 (1H, dd, J=9.2, 14.0 Hz), 2.34-2.21 (3H, m), 1.76 (1H, m), 1.44 (9H, s).

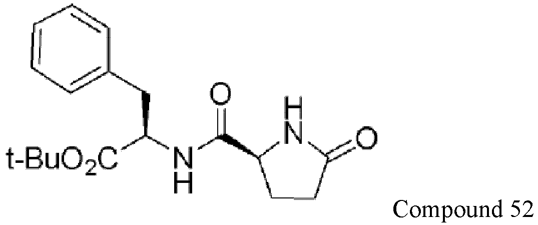

### Synthesis Example 51

Compound 53 was obtained using leucyl-leucine t-butyl ester hydrochloride and D-pyroglutamic acid as starting materials by the same method as Compound 21. Yield: 70%; ESI MS m/z 456.2 (M+HCO₂)⁻; ¹H NMR (400 MHz, CD₃OD)δ4.48 (1H, dd, J=6.8, 8.0 Hz), 4.33 (1H, dd, J=6.8, 8.4 Hz), 4.24 (1H, dd, J=4.8, 8.8 Hz), 2.52-2.28 (3H, m), 2.06 (1H, m), 1.78-1.67 (2H, m), 1.65-1.58 (4H, m), 1.48 (9H, s), 1.00 (3H, d, J=6.8 Hz), 0.98 (3H, d, J=6.8 Hz), 0.97 (3H, d, J=6.4 Hz), 0.92 (3H, d, J=6.4 Hz).

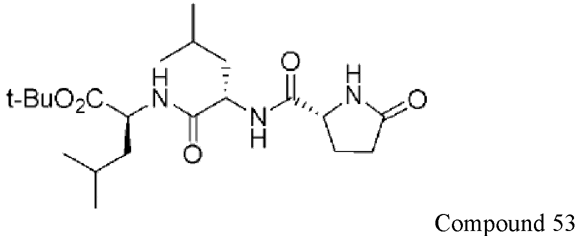

### Synthesis Example 52

Compound 54 was obtained using sarcosine t-butyl ester and D-pyroglutamic acid as starting materials by the same method as Compound 21.
Yield: 17%; ESI MS m/z 513.3 (2M+H)⁺; ¹H NMR (400 MHz, CD₃OD)δ4.77 (0.7H, dd, J=4.0, 8.8 Hz), 4.59 (0.3H, dd, J=4.4, 8.4 Hz), 4.27 (0.3H, d, J=18.4 Hz), 4.19 (0.7H, d, J=16.8 Hz), 4.12 (0.7H, d, J=18.4 Hz), 3.90 (0.3H, d, J=16.8 Hz), 3.14 (2.1H, s), 2.97 (0.9H, s), 2.57 (1H, m), 2.44-2.30 (2H, m), 2.09 (1H, m), 1.52 (2.7H, s), 1.49 (6.3H, s).

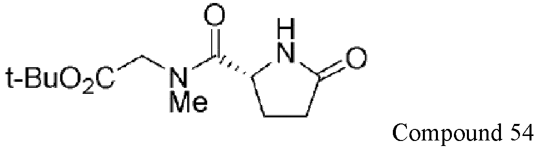

### Synthesis Example 53

Compound 55 was obtained using proline t-butyl ester and D-pyroglutamic acid as starting materials by the same method as Compound 21.
Yield: 12%; ESI MS m/z 565.3 (2M+H)⁺; ¹H NMR (400 MHz, CD₃OD)δ4.67 (0.25H, dd, J=2.4, 8.8 Hz), 4.60 (0.75H, dd, J=4.4, 8.8 Hz), 4.40 (0.25H, t, J=4.0 Hz), 4.34 (0.75H, dd, J=4.4, 8.8 Hz), 3.76 (1H, m), 3.60 (1H, m), 2.57-2.21 (4H, m), 2.12-1.93 (4H, m), 1.52 (2.25H, s), 1.48 (6.75H, s).

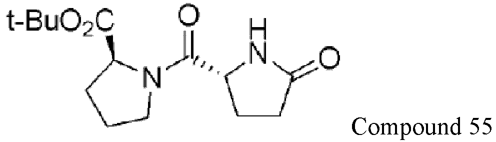

### Synthesis Example 54

Compound 56 was obtained using Compound 53 as a starting material by the same method as Compound 39.
Yield: 99%; ESI MS m/z 356.1 (M+H)⁺; ¹H NMR (400 MHz, CD₃OD)δ4.50-4.43 (2H, m), 4.25 (1H, dd, J=4.4, 8.4 Hz), 2.52-2.28 (3H, m), 2.06 (1H, m), 1.80-1.70 (2H, m), 1.68-1.62 (4H, m), 1.00-0.93 (12H, m).

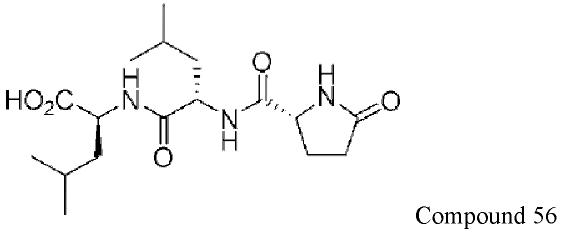

### Synthesis Example 55

Compound 57 was obtained using mono N-Boc-cadaverine and D-pyroglutamic acid as starting materials by the same method as Compound 21. Yield: 27%; ESI MS m/z 314.1 (M+H)⁺; ¹H NMR (400 MHz, CD₃OD)δ4.17 (1H, m), 3.24-3.20 (2H, m), 3.06 (2H, t, J=6.8 Hz), 2.50-2.28 (3H, m), 2.07 (1H, m), 1.58-1.34 (15H, m).

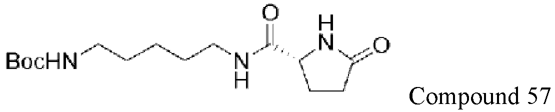

### Synthesis Example 56

Compound 58 was obtained using Compound 57 as a starting material by the same method as Compound 39.
Yield: 99%; ESI MS m/z 214.0 (M+H)⁺; ¹H NMR (400 MHz, CD₃OD)δ4.27 (1H, dd, J=4.8, 8.4 Hz), 3.25 (2H, t, J=6.8 Hz), 2.98-2.94 (2H, m), 2.53-2.32 (3H, m), 2.08 (1H, m), 1.74-1.70 (2H, m), 1.62-1.58 (2H, m), 1.48-1.42 (2H, m).

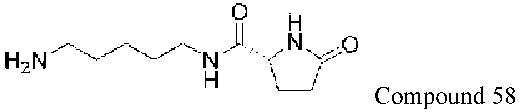

### Synthesis Example 57

Compound 59 was obtained using GABA ethyl ester hydrochloride and D-pyroglutamic acid as starting materials by the same method as Compound 21. Yield: 33%; ESI MS m/z 243.0 (M+H)⁺; ¹H NMR (400 MHz, CD₃OD)δ4.05-4.00 (3H, m), 3.21-3.12 (2H, m), 2.40-2.16 (5H, m), 1.94 (1H, m), 1,75-1.68 (2H, m), 1.15 (3H, t, J=6.8 Hz).

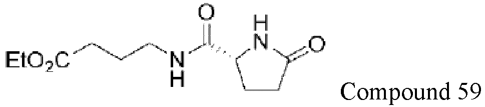

### Synthesis Example 58

Compound 59 (75 mg, 0.31 mmol) was dissolved in ethanol (2 mL), and a 1N aqueous sodium hydroxide solution (0.5 mL) was added thereto, followed by stirring at room temperature for 2 hours. Water (3 mL) was added to the reaction solution, which was then passed through an AMBERLITE FPC3500 (H⁺) column and eluted with water. The resulting non-adsorbed fraction was concentrated to dryness, thereby obtaining Compound 60.
Yield: 90%; ¹H NMR (400 MHz, D₂O)δ4.20 (1H, dd, J=5.2, 9.2 Hz), 3.20-3.16 (2H, m), 2.47-2.28 (3H, m), 1.97 (1H, m), 1.76-1.69 (2H, m).

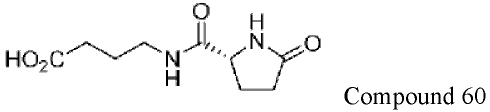

### Synthesis Example 59

Compound 61 was obtained using serine methyl ester hydrochloride and D-pyroglutamic acid as starting materials by the same method as Compound 21.
Yield: 57%; ESI MS m/z 231.0 (M+H)⁺; ¹H NMR (400 MHz, CD₃OD)δ4.56 (1H, dd, J=4.0, 9.2 Hz), 4.36 (1H, dd, J=4.8, 8.8 Hz), 3.94 (1H, dd, J=5.2, 11.2 Hz), 3.85 (1H, dd, J=4.0, 11.2 Hz), 3.77 (3H, s), 2.54-2.36 (4H, m), 2.24-2.13 (2H, m).

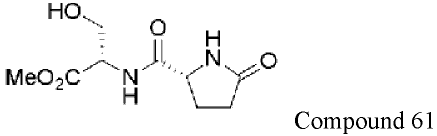

### Synthesis Example 60

Compound 62 was obtained using L-homoserine lactone hydrochloride and N-Boc-L-pyroglutamic acid as starting materials by the same method as Compound 21. Yield: 26%; ESI MS m/z 357.0 (M+HCO₂⁻)⁻; ¹H NMR (400 MHz, CDCl₃)δ7.54 (1H, d, J=8.0 Hz), 4.62 (1H, dd, J=4.4, 9.2 Hz), 4.41 (1H, m), 4.25 (1H, m), 2.75-2.60 (2H, m), 2.50-2.35 (3H, m), 2.17 (1H, m).

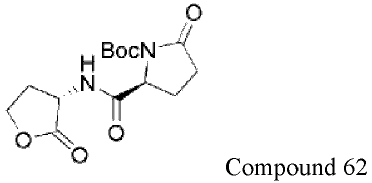

### Synthesis Example 61

Compound 63 was obtained using Compound 62 as a starting material by the same method as Compound 39.
Yield: 99%; ESI MS m/z 213.0 (M+H)⁺; ¹H NMR (400 MHz, CD₃OD)δ4.67 (1H, dd, J=8.8, 11.2 Hz), 4.49 (1H, dd, J=2.0, 8.8 Hz), 4.45-4.25 (2H, m), 2.60-2.30 (5H, m), 2.16 (1H, m).

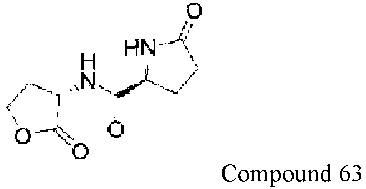

### Synthesis Example 62

Compound 64 was obtained using D-homoserine lactone hydrochloride and N-Boc-L-pyroglutamic acid as starting materials by the same method as Compound 21. Yield: 20%; ESI MS m/z 357.0 (M+HCO₂⁻)⁻; ¹H NMR (400 MHz, CD₃OD)δ4.66-4.58 (2H, m), 4.48 (1H, m), 4.33 (1H, m), 2.67-2.56 (2H, m), 2.52-2.31 (3H, m), 2.00 (1H, m), 1.52 (9H, s).

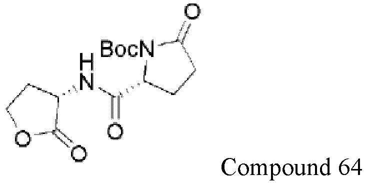

### Synthesis Example 63

Compound 65 was obtained using Compound 64 as a starting material by the same method as Compound 39.
Yield: 99%; ESI MS m/z 212.9 (M+H)⁺; ¹H NMR (400 MHz, CD₃OD)δ4.55 (1H, dd, J=8.8, 10.8 Hz), 4.38 (1H, dd, J=1.6, 9.2 Hz), 4.34-4.12 (2H, m), 2.45-2.21 (5H, m), 2.01 (1H, m).

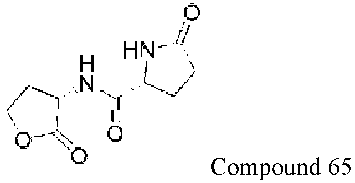

### Synthesis Example 64

n-Butanol (0.5 mL) and a 4N dioxane hydrochloride solution (0.5 mL) were added to D-pyroglutamic acid (30 mg, 0.023 mmol), and the mixture was stirred at room temperature for 4 days. The solvent and excess reagent were removed under reduced pressure, thereby obtaining Compound 66 as a colorless oily matter. Yield: 99%; ESI MS m/z 186.1 (M+H)⁺; ¹H NMR (400 MHz, CDCl₃)δ6.70 (1H, brs), 4.25 (1H, m), 4.16 (2H, m), 2.52-2.34 (3H, m), 2.20 (1H, m), 1.66-1.60 (2H, m), 1.41-1.35 (2H, m), 0.94 (3H, t, J=7.2 Hz).

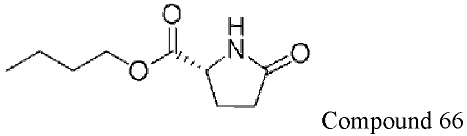

### Synthesis Example 65

Compound 67 was obtained as a colorless oily matter using D-pyroglutamic acid and n-hexanol as starting materials by the same method as Compound 66. ESI MS m/z 214.1 (M+H)⁺; ¹H NMR (400 MHz, CDCl₃)δ4.26 (1H, m), 4.16-4.15 (2H, m), 2.49 (1H, m), 2.42-2.36 (2H, m), 2.23 (1H, m), 1.68-1.62 (2H, m), 1.37-1.29 (6H, m), 0.90 (3H, t, J=6.8 Hz).

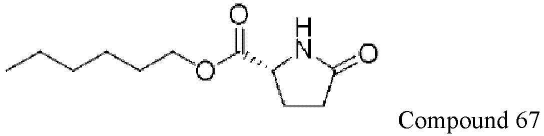

### Synthesis Example 66

Compound 68 was obtained using D-pyroglutamic acid and n-dodecanol as starting materials by the same method as Compound 66.
ESI MS m/z 595.5 (2M+H)⁺; ¹H NMR (400 MHz, CDCl₃)δ4.30 (1H, dd, J=4.4, 8.4 Hz), 4.18 (2H, t, J=6.4 Hz), 2.57-2.29 (3H, m), 2.16 (1H, m), 1.71-1.65 (2H, m), 1.52 (1H, m), 1.37-1.22 (17H, m), 0.92 (3H, t, J=6.8 Hz).

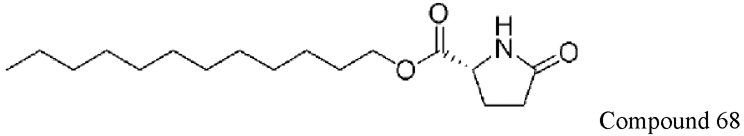

### Synthesis Example 67

Compound 69 was obtained using D-pyroglutamic acid and geraniol as starting materials by the same method as Compound 21.
Yield: 78%; ESI MS m/z 266.1 (M+H)⁺; ¹H NMR (400 MHz, CD₃OD)δ5.39 (1H, m), 5.11 (1H, m), 4.71 (2H, d, J=6.8 Hz), 4.29 (1H, dd, J=4.8, 8.8 Hz), 2.50 (1H, m), 2.42-2.28 (2H, m), 2.19-2.06 (5H, m), 1.75 (3H, d, J=1.6 Hz), 1.69 (3H, d, J=1.6 Hz), 1.63 (3H, d, J=1.6 Hz).

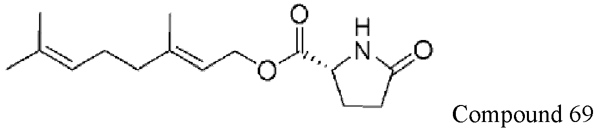

### Synthesis Example 68

Compound 70 was obtained using nerol and D-pyroglutamic acid as starting materials by the same method as Compound 21.
Yield: 95%; ESI MS m/z 266.1 (M+H)⁺; ¹H NMR (400 MHz, CD₃OD)δ5.39 (1H, m), 5.14 (1H, m), 4.68 (2H, dd, J=0.8, 6.8 Hz), 4.29 (1H, dd, J=4.8, 8.8 Hz), 2.50 (1H, m), 2.42-2.28 (2H, m), 2.20-2.10 (5H, m), 1.79 (3H, d, J=1.2 Hz), 1.70 (3H, d, J=1.2 Hz), 1.64 (3H, d, J=1.2 Hz).

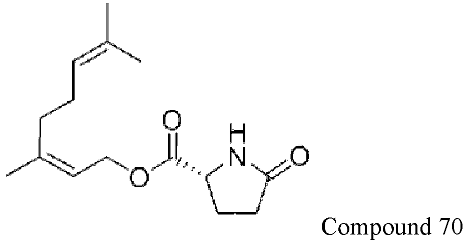

### Synthesis Example 69

Compound 71 was obtained using phenethyl alcohol and D-pyroglutamic acid as starting materials by the same method as Compound 21.
Yield: 54%; m/z 234.1 (M+H)⁺; ¹H NMR (400 MHz, CD₃OD)δ7.33-7.21 (5H, m), 4.45-4.37 (2H, m), 4.25 (1H, dd, J=4.0, 8.8 Hz), 3.01-2.97 (2H, m), 2.55 (1H, m), 2.43 (1H, m), 2.28-2.24 (2H, m), 2.05-1.99 (2H, m).

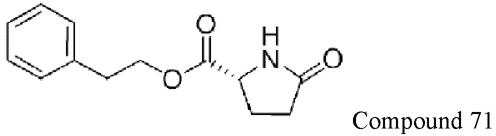

### Synthesis Example 70

Compound 72 was obtained using indoleacetic acid and (S)-pyroglutaminol as starting materials by the same method as Compound 21.
Yield: 72%; ESI MS m/z 273.1 (M+H)⁺; ¹H NMR (400 MHz, CD₃OD)δ7.42 (1H, d, J=7.6 Hz), 7.24 (1H, d, J=8.4 Hz), 7.05 (1H, s), 7.00 (1H, m), 6.92 (1H, m), 4.03 (1H, dd, J=4.0, 11.6 Hz), 3.89 (1H, dd, J=2.0, 11.6 Hz), 3.72 (1H, m), 3.69 (2H, s), 2.07-1.98 (3H, m), 1.60 (1H, m).

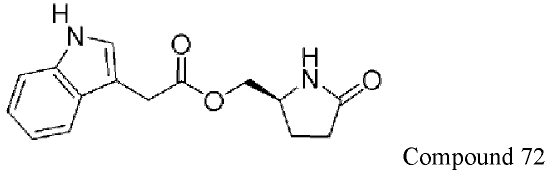

### Synthesis Example 71

Compound 73 was obtained using indoleacetic acid and (R)-pyroglutaminol as starting materials by the same method as Compound 21.
Yield: 65%; ESI MS m/z 273.1 (M+H)⁺; ¹H NMR (400 MHz, CD₃OD)δ7.54 (1H, dd, J=1.2, 8.0 Hz), 7.36 (1H, d, J=8.0 Hz), 7.18 (1H, s), 7.12 (1H, m), 7.04 (1H, m), 4.16 (1H, dd, J=4.0, 11.6 Hz), 4.02 (1H, dd, J=5.2, 11.6 Hz), 3.86 (1H, m), 3.85 (2H, s), 2.20-2.11 (3H, m), 1.73 (1H, m).

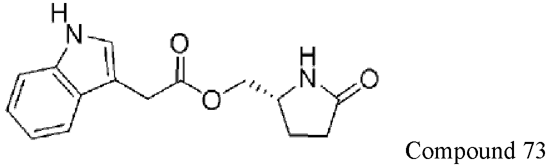

### Synthesis Example 72

Compound 74 was obtained using n-octanoic acid and (R)-pyroglutaminol as starting materials by the same method as Compound 21.
Yield: 89%; ESI MS m/z 242.1 (M+H)⁺; ¹H NMR (400 MHz, CD₃OD)δ4.19 (1H, dd, J=4.0, 11.2 Hz), 4.03-3.92 (2H, m), 2.45-2.26 (5H, m), 1.91 (1H, m), 1.65-1.62 (2H, m), 1.37-1.31 (8H, m), 0.92 (3H, t, J=6.8 Hz).

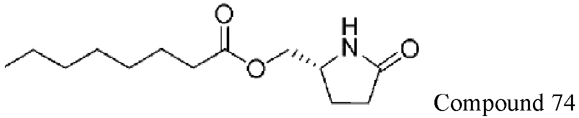

### Synthesis Example 73

Compound 75 was obtained using lauric acid and (R)-pyroglutaminol as starting materials by the same method as Compound 21.
Yield: 95%; m/z 595.5 (2M+H)⁺; ¹H NMR (400 MHz, CD₃OD)δ4.19 (1H, dd, J=4.0, 11.2 Hz), 4.03-3.94 (2H, m), 2.40-2.27 (5H, m), 1.91 (1H, m), 1.65-1.62 (2H, m), 1.37-1.31 (16H, m), 0.92 (3H, t, J=6.8 Hz).

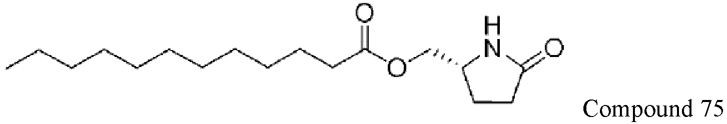

### Synthesis Example 74

Compound 76 was obtained using N-Boc-phenylalanine and (R)-pyroglutaminol as starting materials by the same method as Compound 21.
Yield: 87%; ESI MS m/z 385.2 (M+Na)⁺; ¹H NMR (400 MHz, CD₃OD)δ7.33-7.22 (5H, m), 4.38 (1H, dd, J=6.0, 8.8 Hz), 4.10-4.08 (2H, m), 3.88 (1H, m), 3.12 (1H, dd, J=6.0, 13.6 Hz), 2.95 (1H, dd, J=8.8, 13.6 Hz), 2.45-2.18 (3H, m), 1.84 (1H, m), 1.41 (9H, s).

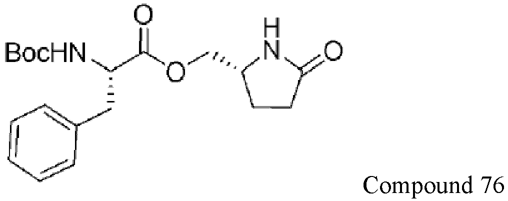

### Synthesis Example 75

Compound 77 (hydrochloride) was obtained using Compound 42 as a starting material by the same method as Compound 39.
Yield: 99%; ESI MS m/z 263.1 (M+H)⁺; ¹H NMR (400 MHz, CD₃OD)δ7.37-7.19 (5H, m), 4.43 (1H, t, J=6.8 Hz), 4.26 (1H, dd, J=3.6, 11.2 Hz), 4.06 (1H, dd, J=6.0, 11.2 Hz), 3.90 (1H, m), 3.26-3.16 (2H, m), 2.33-2.28 (2H, m), 2.24-1.76 (2H, m), .

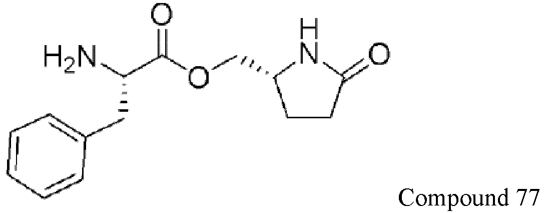

### Synthesis Example 76

Compound 78 was obtained using succinic acid semi-t-butyl ester and (R)-pyroglutaminol as starting materials by the same method as Compound 21.
Yield: 78%; ESI MS m/z 294.1 (M+Na)⁺; ¹H NMR (400 MHz, CD₃OD)δ4.17 (1H, dd, J=4.0, 11.2 Hz), 4.06 (1H, dd, J=6.0, 11.2 Hz), 3.95 (1H, m), 2.64-2.54 (4H, m), 2.46-2.26 (3H, m), 1.91 (1H, m), 1.46 (9H, s).

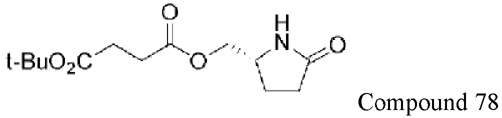

### Synthesis Example 77

Compound 79 was obtained using N-Boc-GABA and (R)-pyroglutaminol as starting materials by the same method as Compound 21.
Yield: 57%; ESI MS m/z 301.0 (M+H)⁺; ¹H NMR (400 MHz, CD₃OD)δ4.18 (1H, dd, J=3.6, 10.8 Hz), 4.05-3.94 (2H, m), 3.11-3.08 (2H, m), 2.43-2.29 (5H, m), 1.90 (1H, m), 1.82-1.75 (2H, m), 1.45 (9H, s).

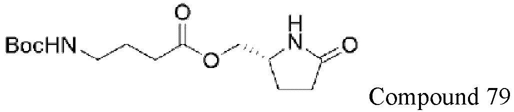

### Synthesis Example 78

Concentrated sulfuric acid (0.05 mL) was added to a THF solution (2 mL) of 5-hydroxy-3-methyl-2,5-dihydrofuran-2-one (35 mg, 0.31 mmol) and N-Boc-glutamine methyl ester (77 mg, 0.30 mmol), and the mixture was stirred at room temperature for 2 days. Ethyl acetate was added to the reaction solution and then partitioned and washed with water. The organic layer was dehydrated and dried over anhydrous sodium sulfate and then concentrated to dryness under reduced pressure. The resulting residue was purified by reverse phase HPLC (water/acetonitrile), thereby obtaining Compound 80.
Yield: 4%; ESI MS m/z 379.0 (M+Na)⁺; ¹H NMR (400 MHz, CD₃OD) δ7.04 (1H, t, J=1.6 Hz), 6.55 (1H, dd, J=1.6 Hz), 4.15 (1H, m), 3.74 (3H, s), 2.37 (2H, t, J=7.2 Hz), 2.16 (1H, m), 1.94-1.91 (4H, m), 1.459 (4.5H, s), 1.457 (4.5H, s).

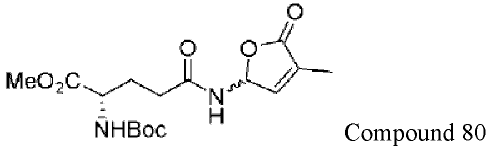

### Synthesis Example 79

### (Step 1) Synthesis of Compound 81

Compound 81 was obtained using octanoic acid and N,N'-di-Boc-guanidine as starting materials by the same method as Compound 21.
Yield: 66%; ESI MS m/z 386.2 (M+H)⁺; ¹H NMR (400 MHz, CDCl₃)δ2.51 (1H, br), 2.32 (1H, t, J=7.2 Hz), 1.69-1.61 (2H, m), 1.50 (9H, s), 1.49 (9H, s), 1.34-1.26 (8H, m), 0.90-0.86 (3H, m).

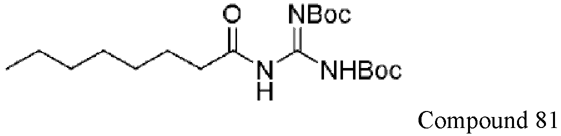

### (Step 2) Synthesis of Compound 82

A 60% dispersion of sodium hydride in mineral oil (26 mg, 1.08 mmol) was dispersed in DMF (1 mL) and stirred at room temperature for 5 minutes. Then, a DMF solution (1 mL) of Compound 81 (240 mg, 0.62 mmol) was added thereto and stirred at room temperature for 5 minutes. A DMF solution (1 mL) of 5-bromo-3-methyl-2,5-dihydrofuran-2-one (110 mg, 0.62 mmol) was added to this reaction solution, and the mixture was stirred at room temperature for 4 hours. Ethyl acetate was added to the reaction solution and then partitioned and washed with 0.1N hydrochloric acid. The organic layer was concentrated to dryness under reduced pressure and purified with Sep-Pack Silica (n-hexane/ethyl acetate), thereby obtaining Compound 82.
Yield: 16%; ESI MS m/z 482.3 (M+H)⁺; ¹H NMR (400 MHz,CDCl₃)δ6.19 (1H, d, J=7.6 Hz), 5.12 (1H, dd, J=7.6, 11.2 Hz Hz), 3.08-2.94 (2H, m), 1.70-1.61 (2H, m), 1.54 (9H, s), 1.52 (9H, s), 1.50 (3H, s), 1.33-1.27 (8H, m), 0.89 (3H, t, J=6.8 Hz).

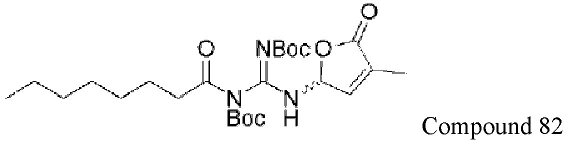

### (Step 3) Synthesis of Compound 83

Compound 83 was obtained using Compound 82 as a starting material by the same method as Compound 2.
Yield: 99%; ESI MS m/z 282.0 (M+H)⁺; ¹H NMR (400 MHz, CDCl₃)δ5.38 (1H, brs), 4.67 (1H, brs), 2.82 (1H, m), 2.64 (1H, m), 2.49 (1H, m), 2.30 (1H, m), 1.66-1.61 (3H, m), 1.30-1.26 (8H, m), 0.89-0.86 (3H, m).

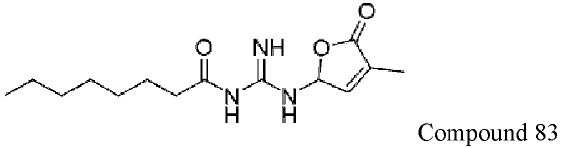

### Synthesis Example 80

Compound 84 was obtained using N,N',N"-tri-Boc-guanidine and 5-hydroxy-3-methyl-2,5-dihydrofuran-2-one as starting materials by the same method as Compound 80.
Yield: 87%; ¹H NMR (400 MHz, CD₃OD)δ6.99 (1H, t, J=1.6 Hz), 6.05 (1H, brs), 1.91 (3H, t, J=1.6 Hz), 1.54 (18H, s), 1.46 (9H, s).

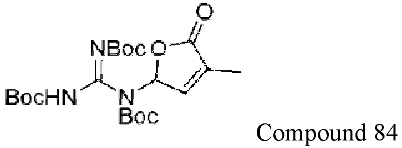

### Synthesis Example 81

Compound 85 (formate) was obtained using Compound 84 as a starting material by the same method as Compound 2.
Yield: 99%; ¹H NMR (400 MHz, CD₃OD)δ8.53 (1H, s),7.03 (1H, t, J=1.6 Hz), 6.46 (1H, t, J=1.6 Hz), 1.93 (3H, t, J=1.6 Hz).

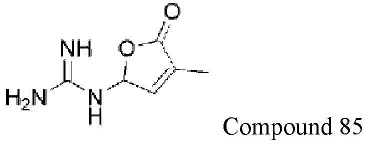

### Synthesis Example 82

Compound 86 was obtained using N-Boc-glutamic acid-γ-t-butyl ester and L-homoserine lactone hydrochloride as starting materials by the same method as Compound 21.
Yield: 83%; ESI MS m/z 409.1 (M+Na)⁺; ¹H NMR (400 MHz, CD₃OD)δ4.63 (1H, dd, J=9.2, 11.2 Hz), 4.45 (1H, dd, J=5.6, 8.8 Hz), 4.33 (1H, m), 3.99 (1H, m), 2.57 (1H, m), 2.38-2.23 (3H, m), 2.11 (1H, m), 1.89 (1H, m), 1.49 (9H, s), 1.46 (9H, s).

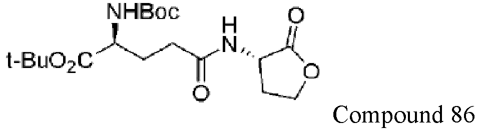

### Synthesis Example 83

Compound 87 was obtained as hydrochloride using Compound 86 as a starting material by the same method as Compound 39.
Yield: 99%; ESI MS m/z 230.9 (M+H)⁺; ¹H NMR (400 MHz,D₂O)δ4.62 (1H, dd, J=9.2, 10.8 Hz), 4.51 (1H, m), 4.34 (1H, m), 4.05 (1H, t, J=6.4 Hz), 2.61-2.50 (3H, m), 2.35-2.16 (3H, m).

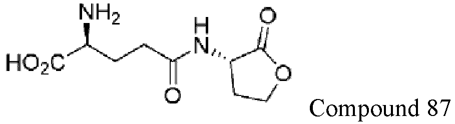

### Synthesis Example 84

Compound 88 was obtained using N-Boc-glutamic acid-γ-t-butyl ester and D-homoserine lactone hydrochloride as starting materials by the same method as Compound 21.
Yield: 89%; ESI MS m/z 409.1 (M+Na)⁺; ¹H NMR (400 MHz, CD₃OD)δ4.60 (1H, dd, J=9.6, 11.2 Hz), 4.47 (1H, m), 4.32 (1H, m), 4.00 (1H, m), 2.56 (1H, m), 2.38-2.27 (3H, m), 2.11 (1H, m), 1.91 (1H, m), 1.49 (9H, s), 1.46 (9H, s).

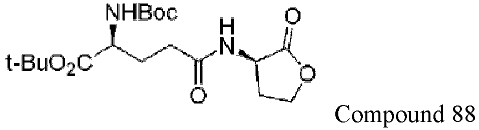

### Synthesis Example 85

Compound 89 was obtained as hydrochloride using Compound 88 as a starting material by the same method as Compound 39.
Yield: 99%; ESI MS m/z 231.0 (M+H)⁺;
¹H NMR (400 MHz,D₂O)δ4.58 (1H, dd, J=9.2, 11.2 Hz), 4.47 (1H, m), 4.30 (1H, m), 3.98 (1H, t, J=6.4 Hz), 2.54-2.45 (3H, m), 2.29-2.10 (3H, m).

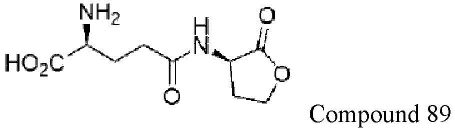

### Synthesis Example 86

Compound 90 was obtained using Compound 5 as a starting material by the same method as Compound 22.
Yield: 68%; ESI MS m/z 386.1 (M+Na)⁺; ¹H NMR (400 MHz, CD₃OD)δ7.32-7.23 (5H, m), 6.45 (1H, m), 4.33 (1H, m), 3.14-2.92 (2H, m), 2.80-2.72 (2H, m), 1.90 (1H, m), 1.48 (2H, s), 1.43 (3.5H, s), 1.41 (3.5H, s), 1.34 (2H, d, J=6.8 Hz), 1.13 (0.4H, d, J=7.2 Hz), 0.93 (0.6H, d, J=7.2 Hz).

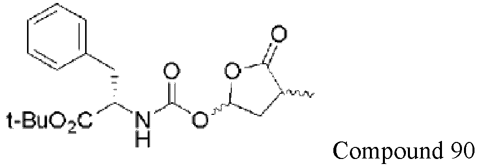

### «Example 1» Binding Activity of Various Compounds to Arabidopsis Thaliana Strigolactone Receptor D14 Protein

In this Example, the binding activity of Compounds 1 to 20, 23, 26 to 61, 65 to 80, and 83 to 90 to the Arabidopsis thaliana strigolactone receptor D14 protein was analyzed by measuring the degree of inhibition of the binding of Yoshimulactone Green (YLG), which is a fluorescent probe-labeled synthetic strigolactone, to D14. YLG is a compound that emits green fluorescence when bound to the strigolactone receptor. D14 has the activity of hydrolyzing strigolactone, and when YLG is bound thereto in place of strigolactone, the D ring moiety of YLG is detached from the fluorescent probe, causing fluorescence emission. However, when a compound having the strigolactone activity coexists, the binding between YLG and D14 is inhibited, decreasing the fluorescence value. By measuring the degree of inhibition, it is possible to measure the degree to which a compound having the strigolactone activity binds to the receptor (Reference 1: Tsuchiya et al., (2015) Science, 349, 864-868. PARASITIC PLANTS. Probing strigolactone receptors in Striga hermonthica with fluorescence.).

The D14 receptor YLG *in vitro* assay was performed with reference to Reference 1. To a buffer (100 mM HEPES, 150 mM NaCl, pH 7.0), 1 µg of the D14 protein, which had been expressed in Escherichia coli and purified, was added. Measurements were performed with a system having a total volume of 100 µL using a COSTAR black 96-well plate with a SpectraMax M2 (Molecular Devices). The fluorescence of YLG was excited at 480 nm and measured at 520 nm. Each compound to be tested was added to the reaction solution at a final concentration of from 100 µM to 1000 µM, and YLG was added to a final concentration of 1 µM. The degree of inhibition obtained using each compound to be tested was calculated as a relative value when the degree of inhibition obtained using the same concentration of synthetic strigolactone GR24 was set as 100%.

The results are shown in Tables 1 to 6.

In the tables, "D14 inhibition" indicates the binding activity of each compound to D14. Compounds whose relative value of the degree of inhibition was 80% or less were marked with (+), and the others were marked with (-). Some of the compounds inhibited the binding of YLG to D14, i.e., they showed binding activity to D14. Compound 10 was marked with (+) regarding "D14 inhibition" for both formate and heptafluorobutyrate. Compound 12 was marked with (+) regarding "D14 inhibition" for both formate and heptafluorobutyrate.

### «Example 2» Germination Inducer Activity of Various Compounds in Orobanche Minor

In this Example, the germination inducer activity of Compounds 1 to 20, 23, 26 to 61, 65 to 80, and 83 to 90 on Orobanche minor was analyzed by measuring the germination rate. Orobanche minor used herein was a species that parasitizes white clover, which grows wild in Japan. The experiment was carried out according to the method described in Reference 2 (Uraguchi et al., (2018) Science, 362, 1301-1305. A femtomolar-range suicide germination stimulant for the parasitic plant Striga hermonthica.) with some modifications. Dried seeds of Orobanche minor were placed in a 1.5-mL tube to a volume of 50 µL, and 100 µL of chloroform was added thereto and stirred, thereby removing the wax layer from the seed coat. Thereafter, the chloroform was removed by volatilization in a fumehood for 3 hours or more. The seeds were then sterilized by adding 1 mL of approximately 1% sodium hypochlorite, washed three times with sterile water, transferred to a petri dish, and conditioned by incubating in the dark at 22°C for 7 to 10 days. Thereafter, 30 µL of the solution containing the seeds was dispensed into a 96-well plate, and an equal volume of compound solution was added thereto. Each compound to be tested was added to give a final concentration of from 100 nM to 10 µM. After incubation at 22°C for 1 week after the addition of the treatment solution, the germination rate was evaluated by counting the number of germinated seeds under a stereomicroscope. The germination rate obtained using each compound was calculated as a relative value when the germination rate obtained using the same concentration of synthetic strigolactone GR24 was set as 100%.

The results are shown in Tables 1 to 6.

In the tables, "Germination" indicates the germination inducer activity of each compound. Compounds whose relative value of the germination rate was 5% or more were marked with (+), and the others were marked with (-). Some of the compounds showed the germination inducer activity for Orobanche minor. Compound 10 was marked with (+) regarding "Germination" for both formate and heptafluorobutyrate. Compound 12 was marked with (+) regarding "Germination" for both formate and heptafluorobutyrate.

In the tables, "Function" indicates the predicted function of each compound. Compounds marked with (+) regarding "Germination" were determined to have a germination-inducing function. Compounds marked with (+) and (-) regarding "D14 inhibition" and "Germination," respectively, were determined to have a germination-inhibiting function.

In the tables, the "D ring" in the "D ring moiety" column represents a structure represented by the following Formula (I-D).

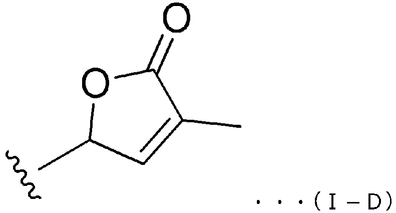

### [Table 1]

**Table 1**

| Compound No. | **D-ring portion bond form** | | Germination | D14 inhibition | Function |
|---|---|---|---|---|---|
| 1 | **D-ring** | **Carbamate** | + | + | Germination stimulant |
| 2 | **D-ring** | **Carbamate** | + | + | Germination stimulant |
| 3 | **D-ring** | **Carbamate** | + | + | Germination stimulant |
| 4 | **D-ring** | **Carbamate** | - | + | Germination inhibitor |
| 5 | **D-ring** | **Carbamate** | + | + | Germination stimulant |
| 6 | **D-ring** | **Carbamate** | + | + | Germination stimulant |
| 7 | **D-ring** | **Carbamate** | + | + | Germination stimulant |
| 8 | **D-ring** | **Carbamate** | + | - | Germination stimulant |
| 9 | **D-ring** | **Carbamate** | + | + | Germination stimulant |
| 10 | **D-ring** | **Carbamate** | + | + | Germination stimulant |
| 11 | **D-ring** | **Carbamate** | + | + | Germination stimulant |
| 12 | **D-ring** | **Carbamate** | + | + | Germination stimulant |
| 13 | **D-ring** | **Carbamate** | + | + | Germination stimulant |
| 14 | **D-ring** | **Carbamate** | + | + | Germination stimulant |
| 15 | **D-ring** | **Carbamate** | - | + | Germination inhibitor |

### [Table 2]

**Table 2**

| Compound No. | **D-ring portion bond form** | | Germination | D14 inhibition | Function |
|---|---|---|---|---|---|
| 16 | **D-ring** | **Carbamate** | + | + | Germination stimulant |
| 17 | **D-ring** | **Carbamate** | + | + | Germination stimulant |
| 18 | **D-ring** | **Carbamate** | + | + | Germination stimulant |
| 19 | **D-ring** | **Carbamate** | + | + | Germination stimulant |
| 20 | **D-ring** | **Carbamate** | + | + | Germination stimulant |
| 23 | **D-ring** | **Carbamate** | + | + | Germination stimulant |
| 26 | **D-ring** | **Carbamate** | + | + | Germination stimulant |
| 27 | **D-ring** | **Ester** | + | + | Germination stimulant |
| 28 | **D-ring** | **Ester** | + | + | Germination stimulant |
| 29 | **D-ring** | **Ester** | + | + | Germination stimulant |
| 30 | **D-ring** | **Ester** | + | + | Germination stimulant |
| 31 | **D-ring** | **Ester** | + | + | Germination stimulant |
| 32 | **D-ring** | **Ester** | + | + | Germination stimulant |
| 33 | **D-ring** | **Ester** | + | + | Germination stimulant |
| 34 | **D-ring** | **Ester** | + | + | Germination stimulant |

### [Table 3]

**Table 3**

| Compound No. | **D-ring portion** n **bond form** | | Germination | D14 inhibition | Function |
|---|---|---|---|---|---|
| 35 | **D-ring** | **Ester** | + | + | Germination stimulant |
| 36 | **D-ring** | **Ester** | - | + | Germination inhibitor |
| 37 | desMe-D-ring | **Ester** | + | + | Germination stimulant |
| 38 | L-PCA | **Amide** | + | + | Germination stimulant |
| 39 | L-PCA | **Amide** | - | + | Germination inhibitor |
| 40 | L-PCA | **Amide** | + | - | Germination stimulant |
| 41 | L-PCA | **Amide** | - | - | - |
| 42 | D-PCA | **Amide** | - | + | Germination inhibitor |
| 43 | D-PCA | **Amide** | - | + | Germination inhibitor |
| 44 | D-PCA | **Amide** | - | + | Germination inhibitor |
| 45 | D-PCA | **Amide** | - | + | Germination inhibitor |
| 46 | D-PCA **lactone** | **Amide** | - | + | Germination inhibitor |
| 47 | D-PCA | **Amide** | - | + | Germination inhibitor |
| 48 | D-PCA | **Amide** | - | + | Germination inhibitor |
| 49 | D-PCA | **Amide** | - | + | Germination inhibitor |

### [Table 4]

**Table 4**

| Compound No. | **D-ring portion bond form** | | Germination | D14 inhibition | Function |
|---|---|---|---|---|---|
| 50 | D-PCA | **Amide** | - | - | - |
| 51 | L-PCA | **Amide** | - | + | Germination inhibitor |
| 52 | L-PCA | **Amide** | - | - | - |
| 53 | D-PCA | **Amide** | + | + | Germination stimulant |
| 54 | D-PCA | **Amide** | - | - | - |
| 55 | D-PCA | **Amide** | - | - | - |
| 56 | D-PCA | **Amide** | - | + | Germination inhibitor |
| 57 | D-PCA | **Amide** | - | + | Germination inhibitor |
| 58 | D-PCA | **Amide** | - | - | - |
| 59 | D-PCA | **Amide** | - | + | Germination inhibitor |
| 60 | D-PCA | **Amide** | + | - | Germination stimulant |
| 61 | D-PCA | **Amide** | - | + | Germination inhibitor |
| 63 | L-PCA | **Amide** | - | + | Germination inhibitor |
| 65 | D-PCA | **Amide** | - | - | |
| 66 | D-PCA | **Ester** | - | + | Germination inhibitor |

### [Table 5]

**Table 5**

| Compound No. | **D-ring portion bond form** | | Germination | D14 inhibition | Function |
|---|---|---|---|---|---|
| 67 | D-PCA | **Ester** | - | + | Germination inhibitor |
| 68 | D-PCA | **Ester** | - | + | Germination inhibitor |
| 69 | D-PCA | **Ester** | - | + | Germination inhibitor |
| 70 | D-PCA | **Ester** | - | + | Germination inhibitor |
| 71 | D-PCA | **Ester** | - | + | Germination inhibitor |
| 72 | L-PCAol | **Ester** | + | - | Germination stimulant |
| 73 | D-PCAol | **Ester** | - | + | Germination inhibitor |
| 74 | D-PCAol | **Ester** | - | + | Germination inhibitor |
| 75 | D-PCAol | **Ester** | - | + | Germination inhibitor |
| 76 | D-PCAol | **Ester** | - | + | Germination inhibitor |
| 77 | D-PCAol | **Ester** | - | - | - |
| 78 | D-PCAol | **Ester** | - | + | Germination inhibitor |
| 79 | D-PCAol | **Ester** | - | + | Germination inhibitor |
| 80 | D-ring | N- **glycoside** | - | + | Germination inhibitor |
| 83 | D-ring | N **glycoside** | + | + | Germination stimulant |

### [Table 6]

**Table 6**

| Compound No. | **D-ring portion** | **bond form** | Germination | D14 inhibition | Function |
|---|---|---|---|---|---|
| 84 | **D-ring** | N**-glycoside** | - | + | Germination inhibitor |
| 85 | **D-ring** | N**- glycoside** | - | - | - |
| 86 | L**-homoserine lactone** | **Amide** | - | - | - |
| 87 | L**-homoserine lactone** | **Amide** | - | - | - |
| 88 | D**-homoserine lactone** | **Amide** | + | - | Germination stimulant |
| 89 | D**-homoserine lactone** | **Amide** | + | - | Germination stimulant |
| 90 | **reduced D-ring** | **Carbamate** | - | - | - |

### «Example 3» Control effects of Compound 5 or Synthetic Strigolactone GR24 on Orobanche Minor by Inducing Suicide Germination

In this Example, the parasitic plant control activity of Compound 5 was analyzed by measuring the suicide germination activity of the parasitic plant Orobanche minor.

The suicide germination test of Orobanche minor was carried out with reference to Reference 2 (Uraguchi et al., (2018) Science, 362, 1301-1305.). Plastic pots (top diameter: 52.5 mm; bottom diameter: 35 mm; depth: 85 mm; with a hole at the bottom) were filled with 0.52 L of dry soil (a mixture of equal amounts of combined potting soil and vermiculite) up to 2 cm below the top surface, and soil mixed with 5 mg of Orobanche minor was placed on top to form a 2-cm layer. The pots were bottom-watered and conditioned at 21°C for 14 days. Then, 120 mL of 1 nM or 10 nM Compound 5 (DMSO concentration: 0.0001%), 10 nM GR24 (DMSO concentration: 0.0001%), or 0.0001% DMSO was applied to the soil surface per pot, and the pots were further incubated for 14 days. Ten white clover seeds were sown per pot and eventually thinned to three individuals. During cultivation, the pots were bottom-watered once every 2 to 3 days and fertilized once a week with 0.1% Hyponex ^{R} (NPK = 6-10-5%) from the bottom. They were then cultivated for about 3 months under long-day conditions at 21°C. The number of emerging individuals of Orobanche minor was counted on Day 98. The pots were then dismantled and the numbers of individuals of Tubercle and Orobanche minor parasitizing the roots were counted.

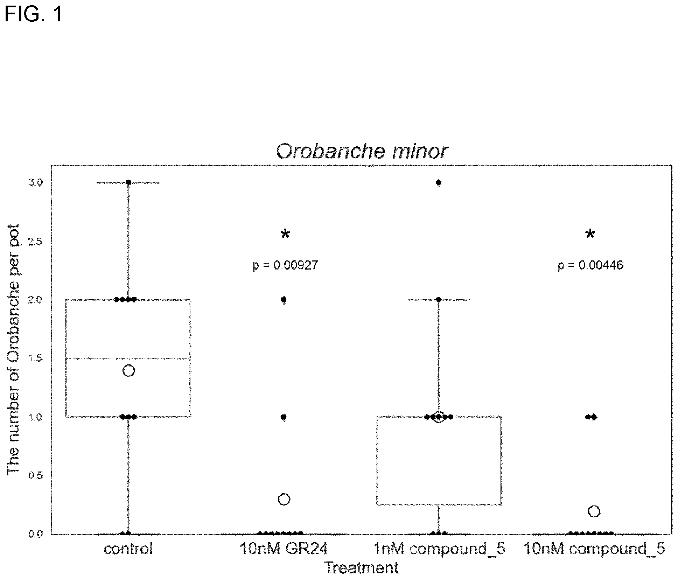

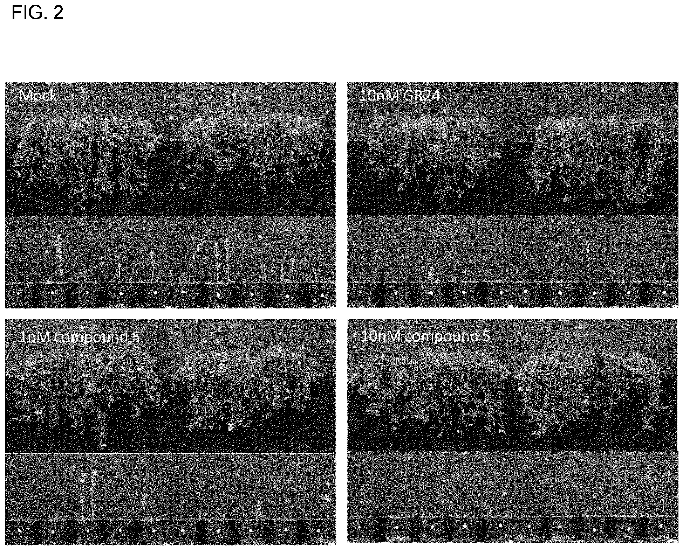

The results are shown in FIGS. 1 and 2. In the figures, "p" indicates the result of Dunnett's multiple test, and "*" indicates that there is a significant difference at the 5% level in Dunnett's multiple test. In the figures, "∘" indicates the average value.

### «Example 4» Germination Inducer Activity of Compound 1 in Orobanche Ramosa L.

In this Example, the germination inducer activity of Compound 1 on Orobanche ramosa L. was analyzed by measuring the germination rate. Orobanche ramosa L. is a parasitic plant of tomato, which is now classified as Phelipanche ramosa (L.) Pomel. The Orobanche ramosa L. used herein is a species that parasitizes tomatoes native to Portugal. Dried seeds of Orobanche ramosa L. were conditioned for one week in water from 20°C to 26°C in a dark and humid place. The compounds to be tested were each added in an amount of 2 mL to a Petri dish so as to give a final concentration of 1 µM or 100 nM (Compound 1), or 0.34 µM (GR24). After incubation from 20°C to 26°C in a dark and humid place for 1 week after the addition of the treatment solution, the germination rate was evaluated by counting the number of germinated seeds under a stereomicroscope.

The results are shown in Table 7. In the table, "Germination" indicates the germination inducer activity of Compound 1. When the relative value of the germination rate was 4% or more, Compound 1 was marked with (+). Compound 1 exhibited germination inducer activity for Orobanche ramosa L.

**[Table 7]**

| **Table 7 Germination inducer activity of Compound 1 in Orobanche ramose L.** | | | | |
|---|---|---|---|---|
| Compound No. | **D-ring portion** | **bond form** | Germination | Function |
| 1 | **D-ring** | **Carbamate** | + | Germination stimulant |

### Industrial Applicability

According to the present invention, it is possible to obtain valuable results in the agricultural and horticultural fields, such as controlling parasitic plants.

## Claims

1. A composition for controlling a parasitic plant,
which contains the following Component (A), (B), or (C):
(A) a compound represented by the following Formula (I);
(B) a compound represented by the following Formula (II); or
(C) an amino acid fermentation by-product, wherein 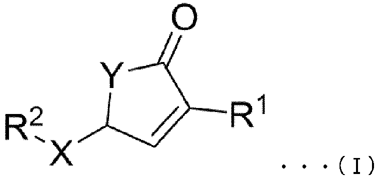
in Formula (I),
X represents an interatomic bond or an oxycarbonyl group (OC(=O)),
Y represents an oxygen atom (O), a nitrogen atom to which a hydrogen atom is bonded (NH), or a nitrogen atom to which a methyl group is bonded (NMe)
R1 represents a hydrogen atom (H) or a methyl group,
R2 represents an amino acid, agmatine, guanidine, a structure represented by the following Formula (R2-1), or a structure represented by the following Formula (R2-2), 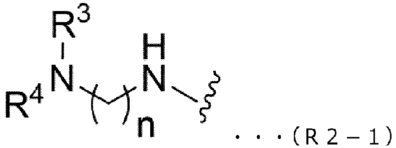
in Formula (R2-1),
n represents an integer of 2 to 5 (i.e., 2, 3, 4, or 5),
in Formula (R2-1), R3 and R4 each independently represent a hydrogen atom or an acyl group, 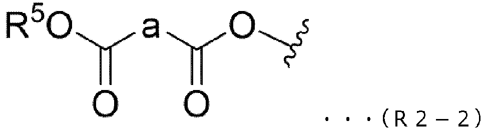
in Formula (R2-2),
a represents an optionally substituted alkylene group having 1 to 4 carbon atoms or an optionally substituted alkenylene group having 2 to 4 carbon atoms,
R5 represents a hydrogen atom (H) or an optionally substituted alkyl group having 1 to 4 carbon atoms, 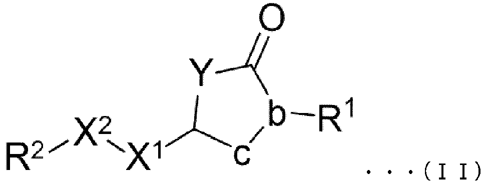
in Formula (II),
X1 represents an interatomic bond or a methyleneoxy group (CH₂O),
X2 represents an interatomic bond or a carbonyl group (C(=O)),
Y represents an oxygen atom (O) or a nitrogen atom (NH) to which a hydrogen atom is bonded,
R1 represents a hydrogen atom (H) or a methyl group,
R2 represents an amino acid, agmatine, guanidine, an aliphatic alcohol, a fatty acid, a structure represented by Formula (R2-1), or a structure represented by Formula (R2-2), and
b-c represents CH-CH₂ or C=CH.

2. The composition according to claim 1, wherein the parasitic plant is controlled by inducing suicide germination of the parasitic plant or by inhibiting germination of the parasitic plant.

3. The composition according to claim 1 or 2, wherein the parasitic plant is a plant of the family Orobanchaceae, a plant of the family Scrophulariaceae, or a plant of the family Convolvulaceae.

4. The composition according to any one of claims 1 to 3, wherein the parasitic plant is a plant of the genus Striga, a plant of the genus Orobanche, a plant of the genus Phelipanche, a plant of the genus Alectra, or a plant of the genus Cuscuta.

5. The composition according to any one of claims 1 to 4, wherein the parasitic plant is Striga asiatica, Striga gesnerioides, Striga hermonthica, Striga aspera, Striga asiatica, Striga curviflora, Striga parviflora, Striga angustifolia, Striga latericea, Striga aequinoctialis, Striga angolensis, Striga bilabiate, Striga brachycalyx, Striga chrsantha, Striga dalzielii, Striga elegans, Striga forbesii, Striga gastonii, Striga gracillima, Striga hallaei, Striga hirsuta, Striga junodii, Striga klingii, Striga lepidagathidis, Striga lutea, Striga macrantha, Striga passargei, Striga pinnatifida, Striga primuloides, Striga yemenica, Striga pubiflora, Orobanche ramosa, Orobanche minor, Orobanche crenata, Orobanche cumana, Orobanche foetida, Orobanche aegyptiaca, Orobanche cernua, Phelipanche ramosa, Phelipanche aegyptiaca, Alectra vogelii, Alectra picta, Alectra sessiliflora, Alectra orobanchoides, Alectra fluminensis, Cuscuta australis, Cuscuta campestris, Cuscuta chinensis, Cuscuta indecora, Cuscuta epithymum, Cuscuta epilinum, Cuscuta gronovii, Cuscuta planiflora, Cuscuta monogyna, Cuscuta pedicellata, Cuscuta palaestina, or Cuscuta rejlexa.

6. The composition according to any one of claims 1 to 5, wherein for the Component (A), Y is NH and R1 is a methyl group.

7. The composition according to any one of claims 1 to 6, wherein the Component (A) satisfies any one of the following conditions:
(1) X is an interatomic bond or an oxycarbonyl group, and R2 is an amino-linked amino acid, amino-linked agmatine, or amino-linked guanidine;
(2) X is an interatomic bond, and R2 is a carboxyl-linked amino acid;
(3) X is an interatomic bond, and R2 is a hydroxyl-linked amino acid;
(4) X is an interatomic bond, and R2 is a thiol-linked amino acid;
(5) X is an interatomic bond, and R2 is an amide-linked amino acid;
(6) X is an interatomic bond or an oxycarbonyl group, and R2 is a structure represented by Formula (R2-1); and
(7) X is an interatomic bond, and R2 is a structure represented by Formula (R2-2).

8. The composition according to any one of claims 1 to 7, wherein the Component (A) satisfies any one of the following conditions:
(1) X is an interatomic bond, Y is NH, R1 is a methyl group, and R2 is an amino-linked amino acid, amino-linked agmatine, amino-linked agmatine, amino-linked guanidine, or a structure represented by Formula (R2-1); and
(2) X is an oxycarbonyl group, Y is NH, R1 is a methyl group, and R2 is a carboxyl-linked amino acid or a structure represented by Formula (R2-2).

9. The composition according to any one of claims 1 to 8, wherein for the Component (B), Y is NH, b-c is CH-CH₂, and R1 is H.

10. The composition according to any one of claims 1 to 9, wherein the Component (B) satisfies any one of the following conditions:
(1) X1 is an interatomic bond, X2 is a carbonyl group, and R2 is an amino-linked amino acid, amino-linked agmatine, or amino-linked guanidine;
(2) X1 is a methyleneoxy group, X2 is an interatomic bond, and R2 is a carboxyl-linked amino acid;
(3) X1 is an interatomic bond, X2 is a carbonyl group, and R2 is an aliphatic alcohol;
(4) X1 is a methyleneoxy group, X2 is an interatomic bond, and R2 is a fatty acid;
(5) X1 is an interatomic bond, X2 is a carbonyl group, and R2 is a structure represented by Formula (R2-1);
(6) X1 is a methyleneoxy group, X2 is an interatomic bond, and R2 is a structure represented by Formula (R2-2); and
(7) X1 is an interatomic bond, X2 is an interatomic bond, and R2 is amino-linked guanidine.

11. The composition according to any one of claims 1 to 10, wherein the Component (B) satisfies any one of the following conditions:
(1) X1 is an interatomic bond, X2 is a carbonyl group, Y is NH, b-c is CH-CH₂, R1 is H, and R2 is an amino-linked amino acid, amino-linked agmatine, amino-linked guanidine, or a structure represented by Formula (R2-1);
(2) X1 is a methyleneoxy group, X2is an interatomic bond, Y is NH, b-c is CH-CH₂, R1 is H, and R2 is a carboxyl-linked amino acid, a fatty acid having 2 to 18 carbon atoms, or a structure represented by Formula (R2-2); and
(3) X1 is an interatomic bond, X2 is an interatomic bond, Y is an oxygen atom (O), b-c is C=CH, R1 is a methyl group, and R2 is amino-linked guanidine.

12. The composition according to any one of claims 1 to 11, excluding compositions in which the Component (B) is a compound represented by the following Formula (Compound 41), (Compound 50), (Compound 52), (Compound 54), (Compound 55), or (Compound 77):

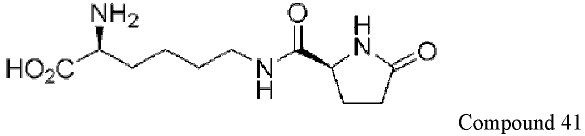

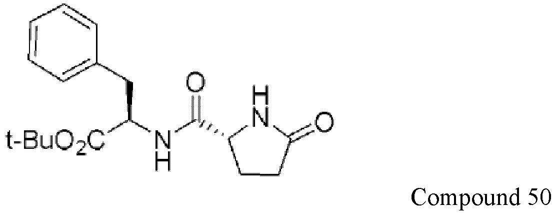

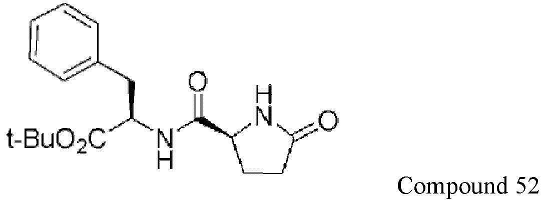

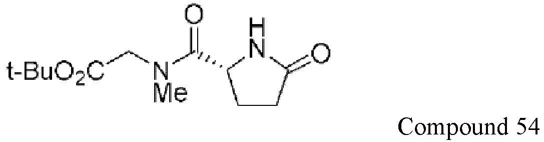

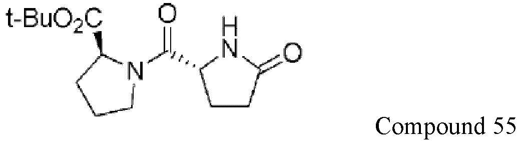

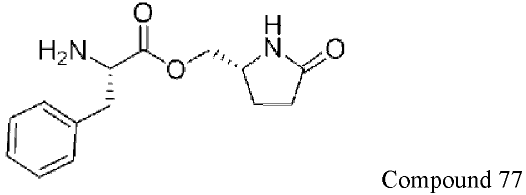

13. The composition according to any one of claims 1 to 12, wherein the Component (A) or (B) is selected from compounds represented by the following Formulae (Compound 1) to (Compound 20), (Compound 23), (Compound 26) to (Compound 40), (Compound 42) to (Compound 49), (Compound 51), (Compound 53), (Compound 56) to (Compound 76), (Compound 78) to (Compound 80), and (Compound 82) to (Compound 90):

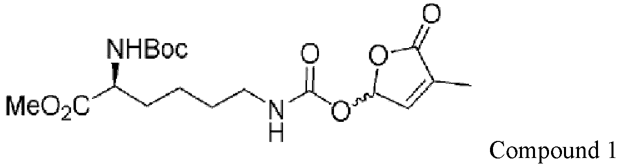

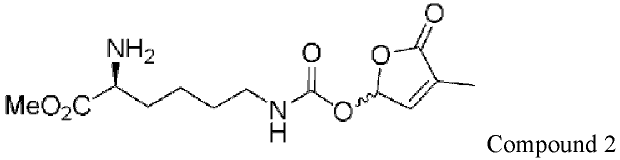

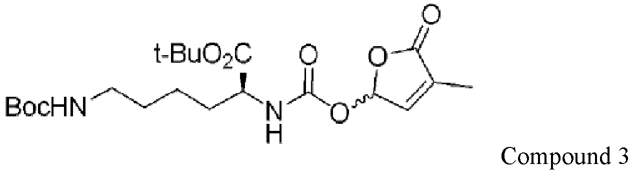

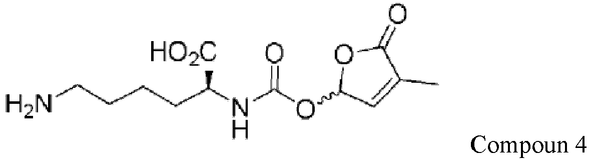

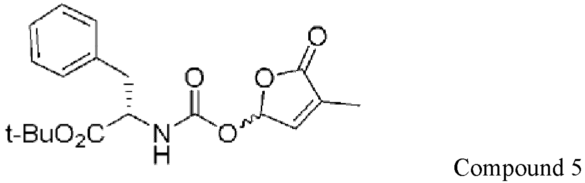

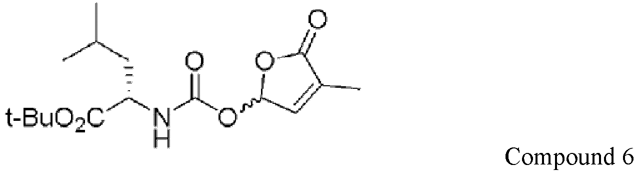

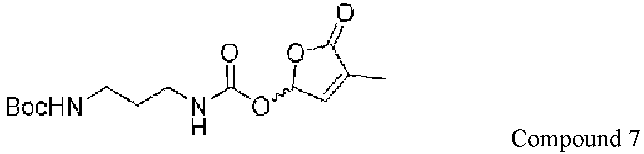

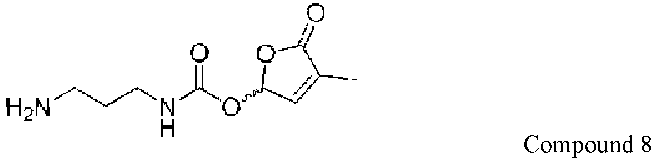

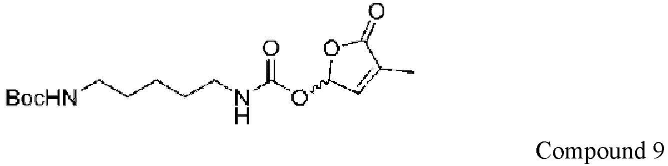

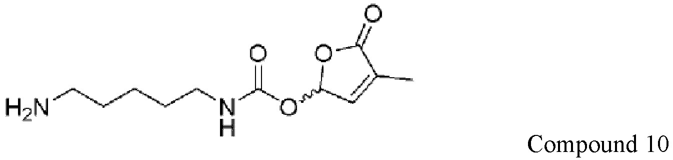

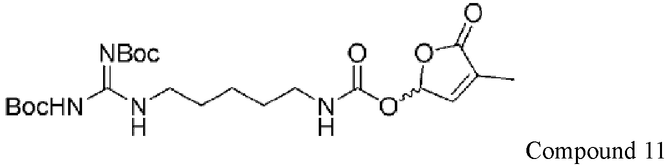

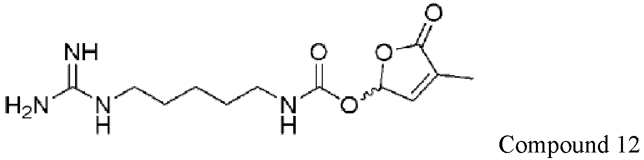

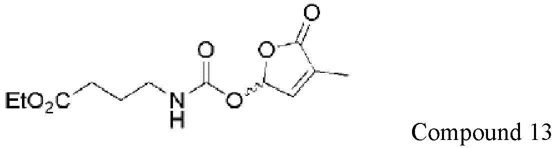

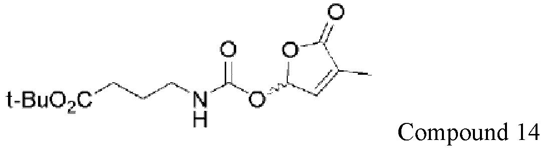

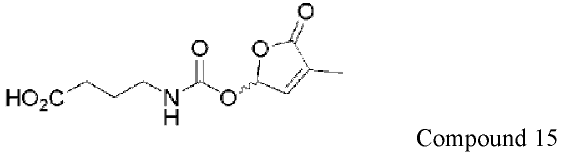

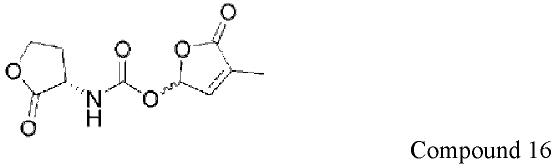

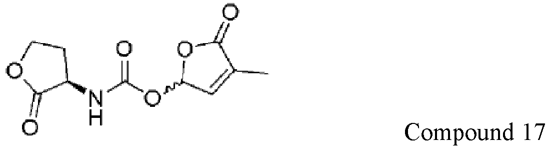

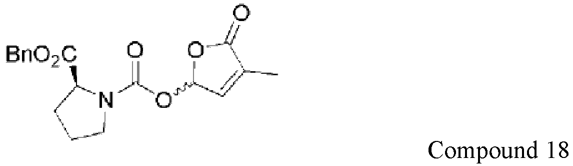

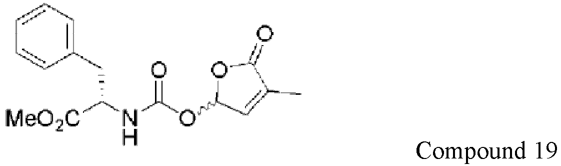

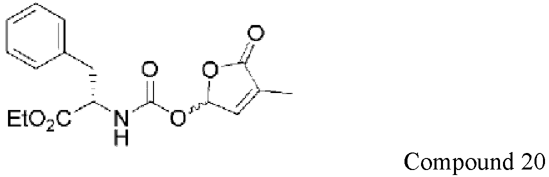

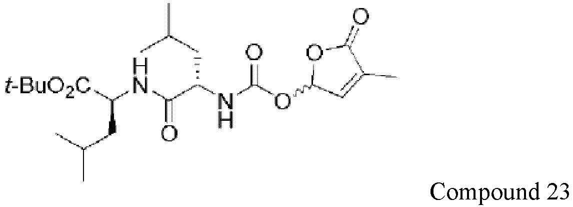

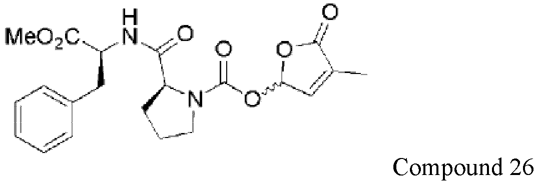

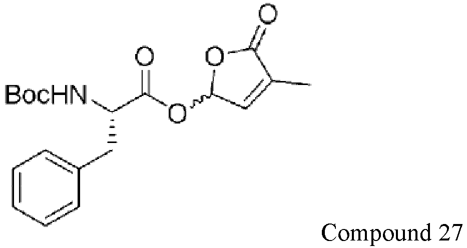

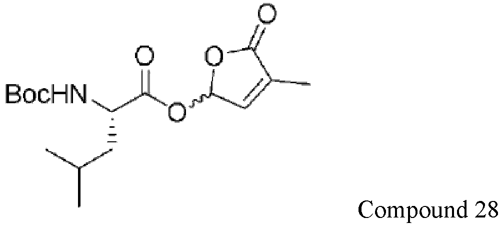

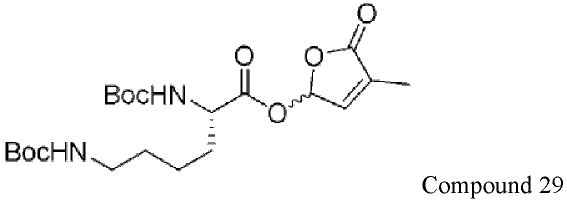

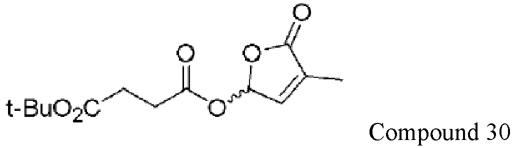

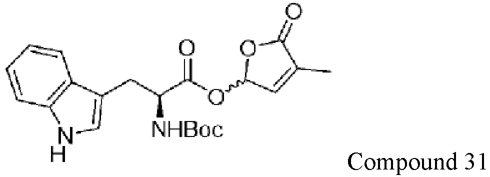

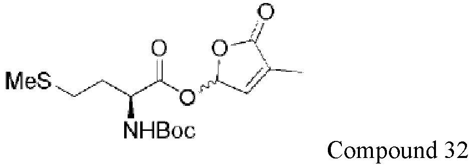

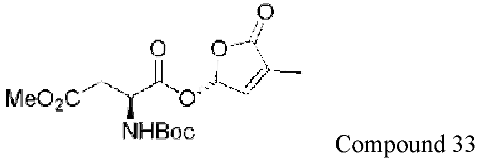

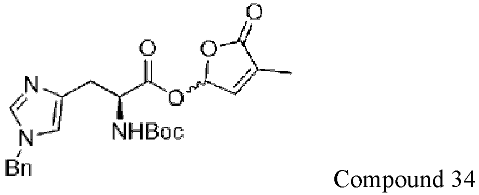

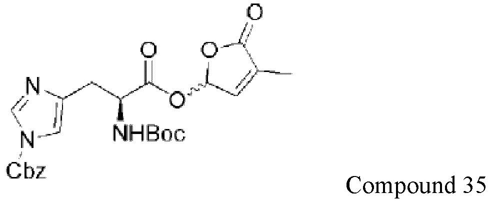

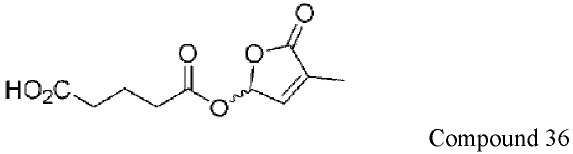

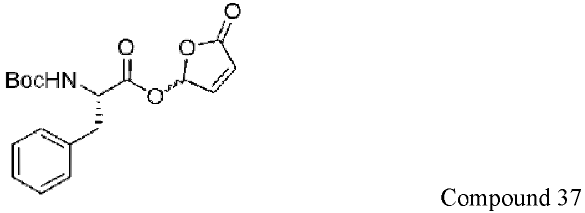

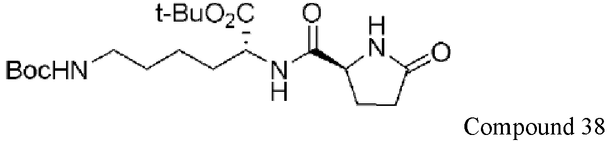

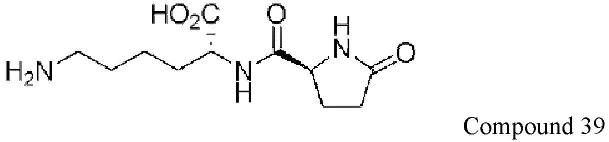

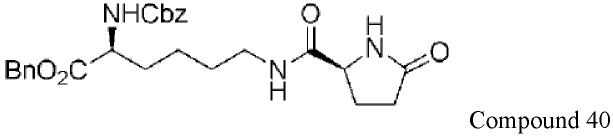

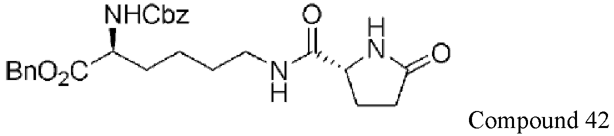

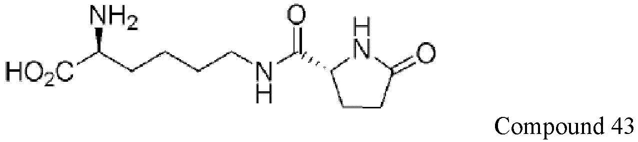

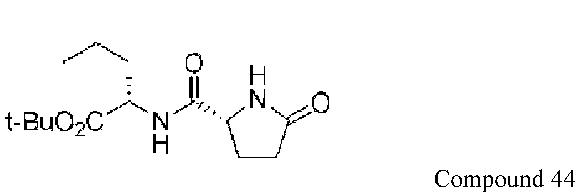

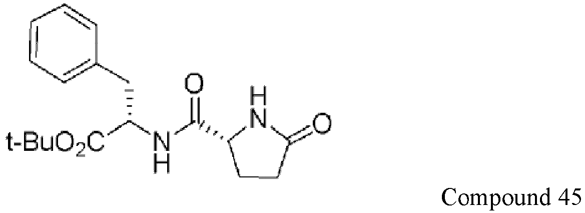

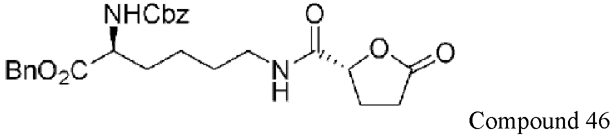

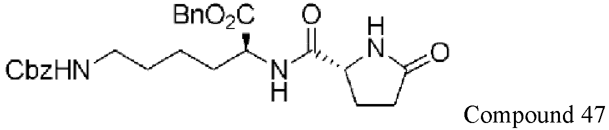

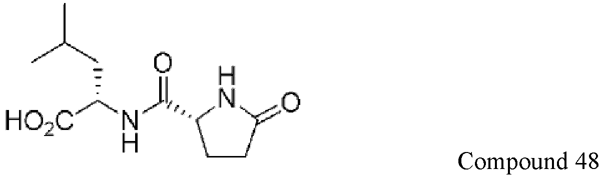

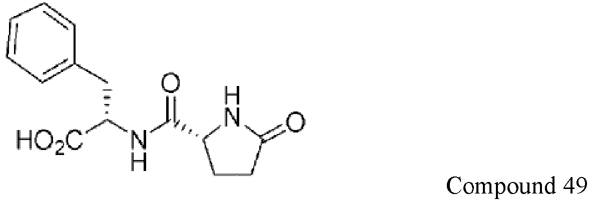

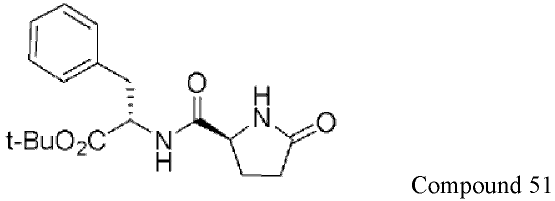

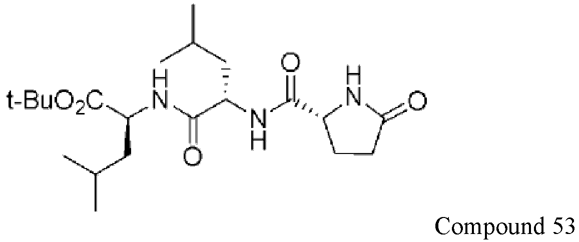

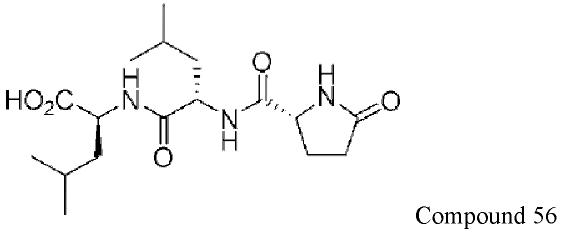

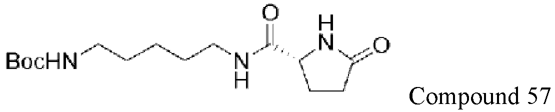

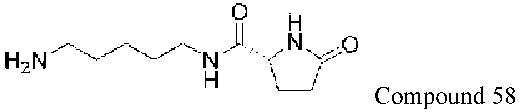

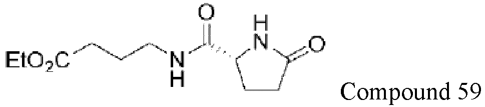

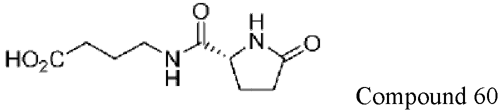

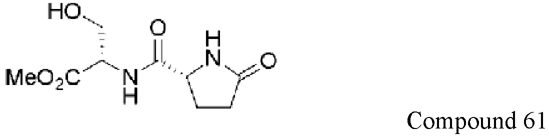

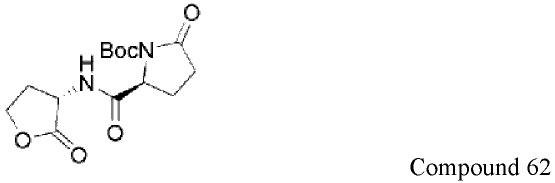

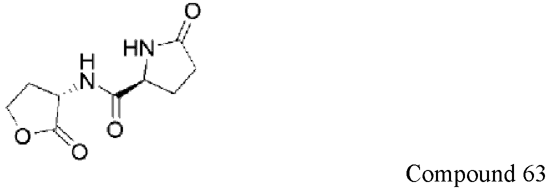

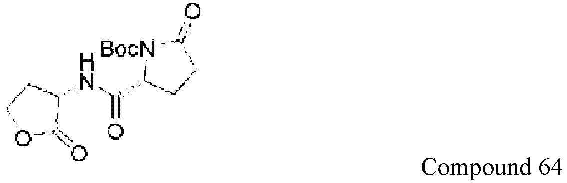

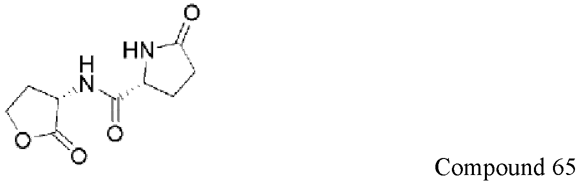

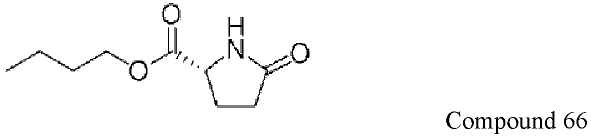

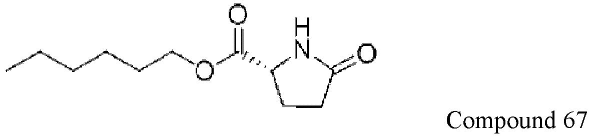

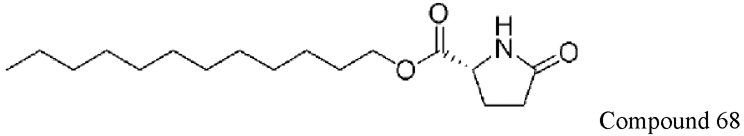

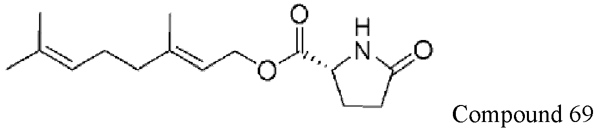

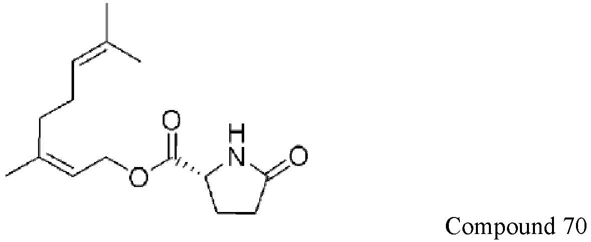

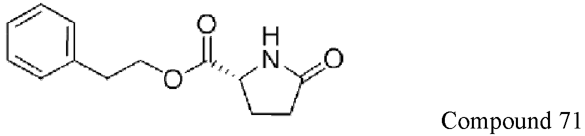

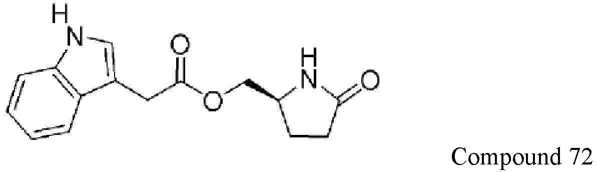

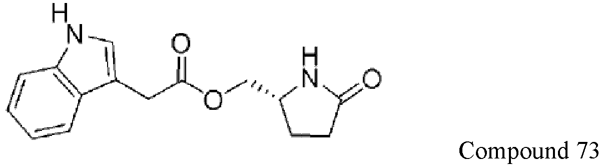

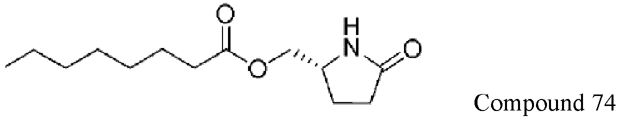

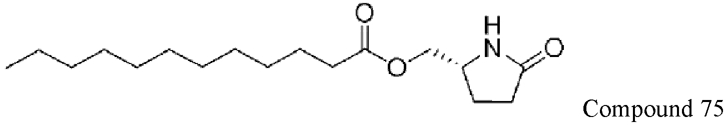

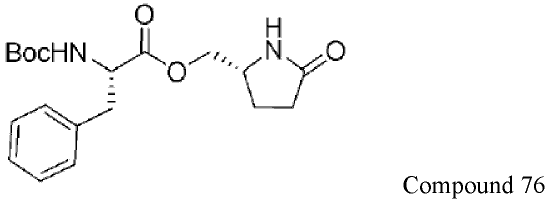

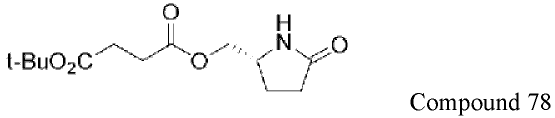

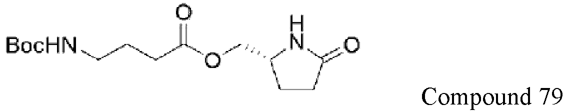

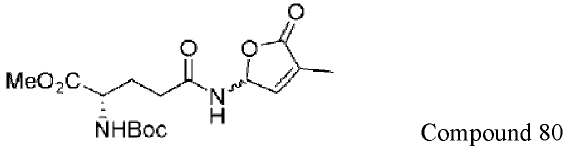

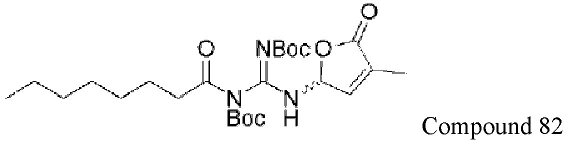

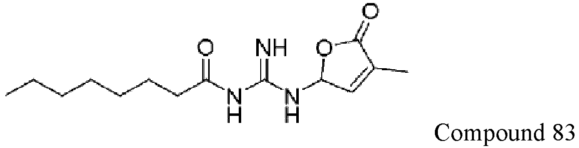

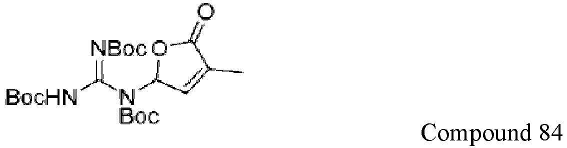

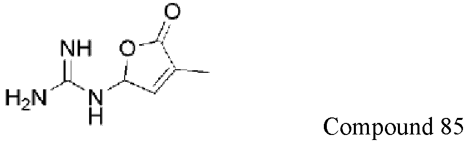

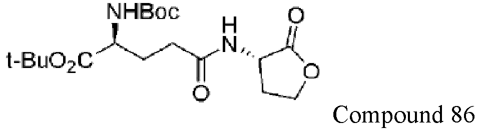

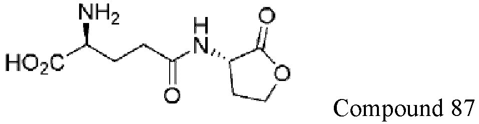

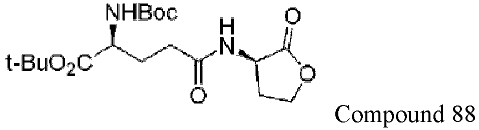

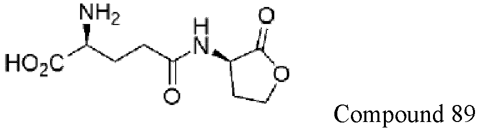

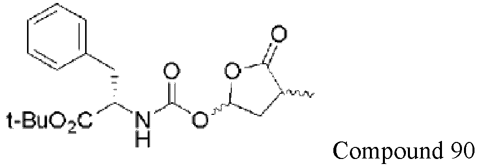

14. The composition according to any one of claims 1 to 13, wherein the Component (C) is a fermentation by-product of lysine, tryptophan, threonine, valine, leucine, or isoleucine.

15. The composition according to any one of claims 1 to 14, which is used in a liquid form containing the Component (A), (B), or (C) at a concentration of from 10 nM to 10 mM.

16. A method for controlling a parasitic plant, comprising
applying the following Component (A), (B), or (C) to a seed of a parasitic plant:
(A) a compound represented by the following Formula (I);
(B) a compound represented by the following Formula (II); or
(C) an amino acid fermentation by-product, wherein 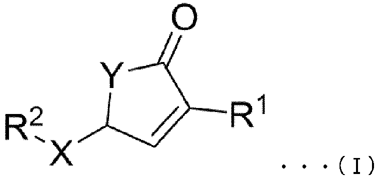
in Formula (I),
X represents an interatomic bond or an oxycarbonyl group (OC(=O)),
Y represents an oxygen atom (O), a nitrogen atom to which a hydrogen atom is bonded (NH), or a nitrogen atom to which a methyl group is bonded (NMe),
R1 represents a hydrogen atom (H) or a methyl group,
R2 represents an amino acid, agmatine, guanidine, a structure represented by the following Formula (R2-1), or a structure represented by the following Formula (R2-2), 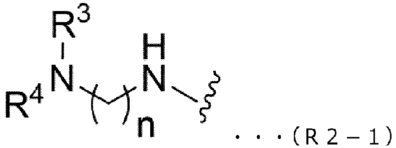
in Formula (R2-1),
n represents an integer of 2 to 5 (i.e., 2, 3, 4, or 5),
in Formula (R2-1), R3 and R4 each independently represent a hydrogen atom or an acyl group, 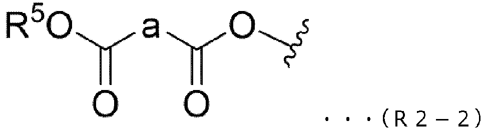
in Formula (R2-2),
a represents an optionally substituted alkylene group having 1 to 4 carbon atoms or an optionally substituted alkenylene group having 2 to 4 carbon atoms,
R5 represents a hydrogen atom (H) or an optionally substituted alkyl group having 1 to 4 carbon atoms, 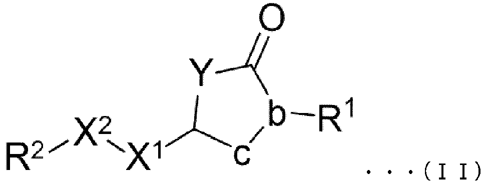
in Formula (II),
X1 represents an interatomic bond or a methyleneoxy group (CH₂O),
X2 represents an interatomic bond or a carbonyl group (C(=O)),
Y represents an oxygen atom (O) or a nitrogen atom (NH) to which a hydrogen atom is bonded,
R1 represents a hydrogen atom (H) or a methyl group,
R2 represents an amino acid, agmatine, guanidine, an aliphatic alcohol, a fatty acid, a structure represented by Formula (R2-1), or a structure represented by Formula (R2-2), and
b-c represents CH-CH₂ or C=CH.

17. A method for producing a plant body, comprising:
applying the following Component (A), (B), or (C) to a seed of a parasitic plant, thereby inducing suicide germination of the parasitic plant;
cultivating a plant that is a parasitism target of the parasitic plant after the application; and
harvesting a plant body of the plant that is a parasitism target of the parasitic plant:
(A) a compound represented by the following Formula (I);
(B) a compound represented by the following Formula (II); or
(C) an amino acid fermentation by-product, wherein 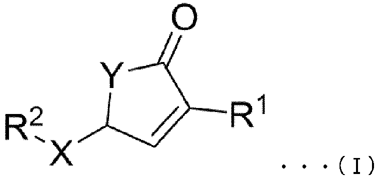
in Formula (I),
X represents an interatomic bond or an oxycarbonyl group (OC(=O)),
Y represents an oxygen atom (O), a nitrogen atom to which a hydrogen atom is bonded (NH), or a nitrogen atom to which a methyl group is bonded (NMe),
R1 represents a hydrogen atom (H) or a methyl group,
R2 represents an amino acid, agmatine, guanidine, a structure represented by the following Formula (R2-1), or a structure represented by the following Formula (R2-2), 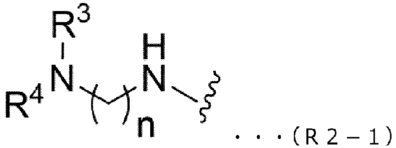
in Formula (R2-1),
n represents an integer of 2 to 5 (i.e., 2, 3, 4, or 5),
in Formula (R2-1), R3 and R4 each independently represent a hydrogen atom or an acyl group, 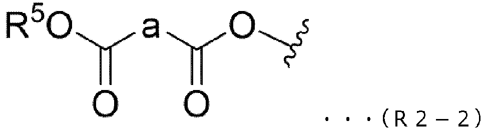
in Formula (R2-2),
a represents an optionally substituted alkylene group having 1 to 4 carbon atoms or an optionally substituted alkenylene group having 2 to 4 carbon atoms,
R5 represents a hydrogen atom (H) or an optionally substituted alkyl group having 1 to 4 carbon atoms, 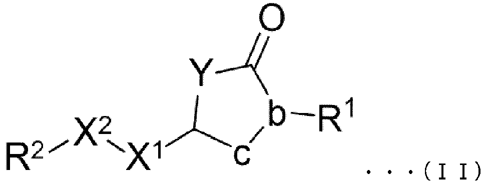
in Formula (II),
X1 represents an interatomic bond or a methyleneoxy group (CH₂O),
X2 represents an interatomic bond or a carbonyl group (C(=O)),
Y represents an oxygen atom (O) or a nitrogen atom (NH) to which a hydrogen atom is bonded,
R1 represents a hydrogen atom (H) or a methyl group,
R2 represents an amino acid, agmatine, guanidine, an aliphatic alcohol, a fatty acid, a structure represented by Formula (R2-1), or a structure represented by Formula (R2-2), and
b-c represents CH-CH₂ or C=CH.

18. A method for producing a plant body, comprising:
cultivating a plant that is a parasitism target of a parasitic plant;
applying the following Component (A), (B), or (C) to a seed of the parasitic plant in a late stage of the cultivation, thereby inducing germination of the parasitic plant; and
harvesting a plant body of the plant that is a parasitism target of the parasitic plant:
(A) a compound represented by the following Formula (I);
(B) a compound represented by the following Formula (II); or
(C) an amino acid fermentation by-product, wherein 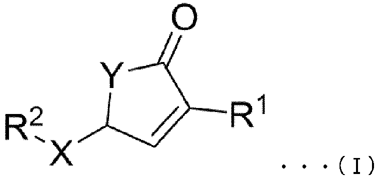
in Formula (I),
X represents an interatomic bond or an oxycarbonyl group (OC(=O)),
Y represents an oxygen atom (O), a nitrogen atom to which a hydrogen atom is bonded (NH), or a nitrogen atom to which a methyl group is bonded (NMe),
R1 represents a hydrogen atom (H) or a methyl group,
R2 represents an amino acid, agmatine, guanidine, a structure represented by the following Formula (R2-1), or a structure represented by the following Formula (R2-2), 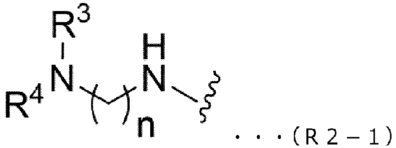
in Formula (R2-1),
n represents an integer of 2 to 5 (i.e., 2, 3, 4, or 5),
in Formula (R2-1), R3 and R4 each independently represent a hydrogen atom or an acyl group, 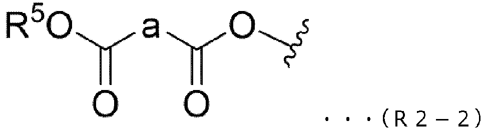
in Formula (R2-2),
a represents an optionally substituted alkylene group having 1 to 4 carbon atoms or an optionally substituted alkenylene group having 2 to 4 carbon atoms,
R5 represents a hydrogen atom (H) or an optionally substituted alkyl group having 1 to 4 carbon atoms, 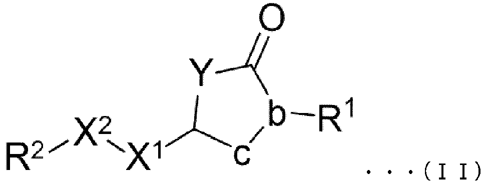
in Formula (II),
X1 represents an interatomic bond or a methyleneoxy group (CH₂O),
X2 represents an interatomic bond or a carbonyl group (C(=O)),
Y represents an oxygen atom (O) or a nitrogen atom (NH) to which a hydrogen atom is bonded,
R1 represents a hydrogen atom (H) or a methyl group,
R2 represents an amino acid, agmatine, guanidine, an aliphatic alcohol, a fatty acid, a structure represented by Formula (R2-1), or a structure represented by Formula (R2-2), and
b-c represents CH-CH₂ or C=CH.

19. A method for producing a plant body, comprising:
cultivating a plant that is a parasitism target of a parasitic plant;
applying the following Component (A), (B), or (C) to a seed of the parasitic plant during the cultivation, thereby inhibiting germination of the parasitic plant; and
harvesting a plant body of the plant that is a parasitism target of the parasitic plant:
(A) a compound represented by the following Formula (I);
(B) a compound represented by the following Formula (II); or
(C) an amino acid fermentation by-product, wherein 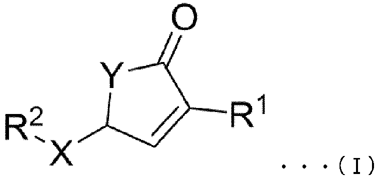
in Formula (I),
X represents an interatomic bond or an oxycarbonyl group (OC(=O)),
Y represents an oxygen atom (O), a nitrogen atom to which a hydrogen atom is bonded (NH), or a nitrogen atom to which a methyl group is bonded (NMe),
R1 represents a hydrogen atom (H) or a methyl group,
R2 represents an amino acid, agmatine, guanidine, a structure represented by the following Formula (R2-1), or a structure represented by the following Formula (R2-2), 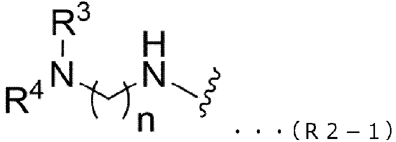
in Formula (R2-1),
n represents an integer of 2 to 5 (i.e., 2, 3, 4, or 5),
in Formula (R2-1), R3 and R4 each independently represent a hydrogen atom or an acyl group, 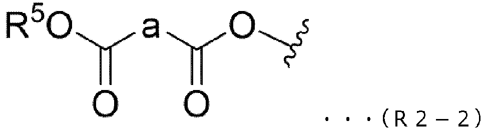
in Formula (R2-2),
a represents an optionally substituted alkylene group having 1 to 4 carbon atoms or an optionally substituted alkenylene group having 2 to 4 carbon atoms,
R5 represents a hydrogen atom (H) or an optionally substituted alkyl group having 1 to 4 carbon atoms, 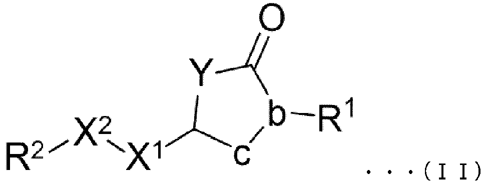
in Formula (II),
X1 represents an interatomic bond or a methyleneoxy group (CH₂O),
X2 represents an interatomic bond or a carbonyl group (C(=O)),
Y represents an oxygen atom (O) or a nitrogen atom (NH) to which a hydrogen atom is bonded,
R1 represents a hydrogen atom (H) or a methyl group,
R2 represents an amino acid, agmatine, guanidine, an aliphatic alcohol, a fatty acid, a structure represented by Formula (R2-1), or a structure represented by Formula (R2-2), and
b-c represents CH-CH₂ or C=CH.

20. The method according to claim 16, wherein the parasitic plant is controlled by inducing suicide germination of the parasitic plant or by inhibiting germination of the parasitic plant.

21. The method according to any one of claims 17 to 19, wherein the application controls the parasitic plant.

22. The method according to any one of claims 16 to 21, wherein the parasitic plant is a plant of the family Orobanchaceae, a plant of the family Scrophulariaceae, or a plant of the family Convolvulaceae.

23. The method according to any one of claims 16 to 22, wherein the parasitic plant is a plant of the genus Striga, a plant of the genus Orobanche, a plant of the genus Phelipanche, a plant of the genus Alectra, or a plant of the genus Cuscuta.

24. The method according to any one of claims 16 to 23, wherein the parasitic plant is Striga asiatica, Striga gesnerioides, Striga hermonthica, Striga aspera, Striga asiatica, Striga curviflora, Striga parviflora, Striga angustifolia, Striga latericea, Striga aequinoctialis, Striga angolensis, Striga bilabiate, Striga brachycalyx, Striga chrsantha, Striga dalzielii, Striga elegans, Striga forbesii, Striga gastonii, Striga gracillima, Striga hallaei, Striga hirsuta, Striga junodii, Striga klingii, Striga lepidagathidis, Striga lutea, Striga macrantha, Striga passargei, Striga pinnatifida, Striga primuloides, Striga yemenica, Striga pubiflora, Orobanche ramosa, Orobanche minor, Orobanche crenata, Orobanche cumana, Orobanche foetida, Orobanche aegyptiaca, Orobanche cernua, Phelipanche ramosa, Phelipanche aegyptiaca, Alectra vogelii, Alectra picta, Alectra sessiliflora, Alectra orobanchoides, Alectra fluminensis, Cuscuta australis, Cuscuta campestris, Cuscuta chinensis, Cuscuta indecora, Cuscuta epithymum, Cuscuta epilinum, Cuscuta gronovii, Cuscuta planiflora, Cuscuta monogyna, Cuscuta pedicellata, Cuscuta palaestina, or Cuscuta rejlexa.

25. The method according to any one of claims 16 to 24, wherein for the Component (A), Y is NH and R1 is a methyl group.

26. The method according to any one of claims 16 to 25, wherein the Component (A) satisfies any one of the following conditions:
(1) X is an interatomic bond or an oxycarbonyl group, and R2 is an amino-linked amino acid, amino-linked agmatine, or amino-linked guanidine;
(2) X is an interatomic bond, and R2 is a carboxyl-linked amino acid;
(3) X is an interatomic bond, and R2 is a hydroxyl-linked amino acid;
(4) X is an interatomic bond, and R2 is a thiol-linked amino acid;
(5) X is an interatomic bond, and R2 is an amide-linked amino acid;
(6) X is an interatomic bond or an oxycarbonyl group, and R2 is a structure represented by Formula (R2-1); and
(7) X is an interatomic bond, and R2 is a structure represented by Formula (R2-2).

27. The method according to any one of claims 16 to 26, wherein the Component (A) satisfies any one of the following conditions:
(1) X is an interatomic bond, Y is NH, R1 is a methyl group, and R2 is an amino-linked amino acid, amino-linked agmatine, amino-linked guanidine, or a structure represented by Formula (R2-1); and
(2) X is an oxycarbonyl group, Y is NH, R1 is a methyl group, and R2 is a carboxyl-linked amino acid or a structure represented by Formula (R2-2).

28. The composition according to any one of claims 16 to 27, wherein for the Component (B), Y is NH, b-c is CH-CH₂, and R1 is H.

29. The method according to any one of claims 16 to 28, wherein the Component (B) satisfies any one of the following conditions:
(1) X1 is an interatomic bond, X2 is a carbonyl group, and R2 is an amino-linked amino acid, amino-linked agmatine, or amino-linked guanidine;
(2) X1 is a methyleneoxy group, X2 is an interatomic bond, and R2 is a carboxyl-linked amino acid;
(3) X1 is an interatomic bond, X2 is a carbonyl group, and R2 is an aliphatic alcohol;
(4) X1 is a methyleneoxy group, X2 is an interatomic bond, and R2 is a fatty acid;
(5) X1 is an interatomic bond, X2 is a carbonyl group, and R2 is a structure represented by Formula (R2-1);
(6) X1 is a methyleneoxy group, X2 is an interatomic bond, and R2 is a structure represented by Formula (R2-2); and
(7) X1 is an interatomic bond, X2 is an interatomic bond, and R2 is amino-linked guanidine.

30. The method according to any one of claims 16 to 29, wherein the Component (B) satisfies any one of the following conditions:
(1) X1 is an interatomic bond, X2 is a carbonyl group, Y is NH, b-c is CH-CH₂, R1 is H, and R2 is an amino-linked amino acid, amino-linked agmatine, or a structure represented by Formula (R2-1);
(2) X1 is a methyleneoxy group, X2 is an interatomic bond, Y is NH, b-c is CH-CH₂, R1 is H, and R2 is a carboxyl-linked amino acid, a fatty acid having 2 to 18 carbon atoms, or a structure represented by Formula (R2-2); and
(3) X1 is an interatomic bond, X2 is an interatomic bond, Y is an oxygen atom (O), b-c is C=CH, R1 is a methyl group, and R2 is amino-linked guanidine.

31. The method according to any one of claims 16 to 30, excluding methods applying, as the Component (B), a compound represented by the following Formula (Compound 41), (Compound 50), (Compound 52), (Compound 54), (Compound 55), and (Compound 77):

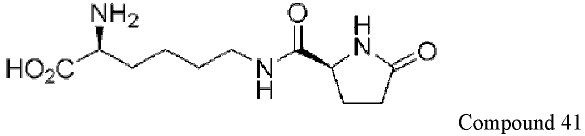

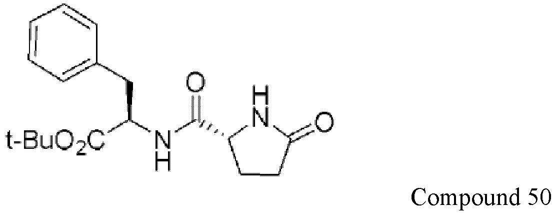

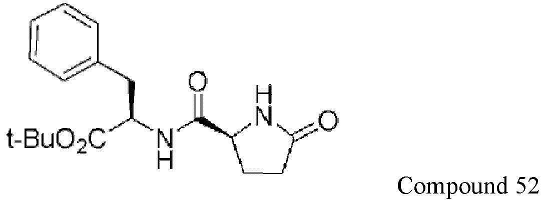

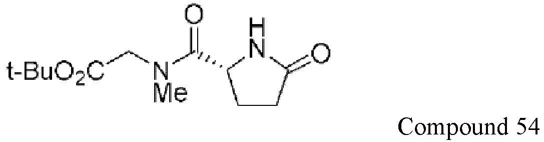

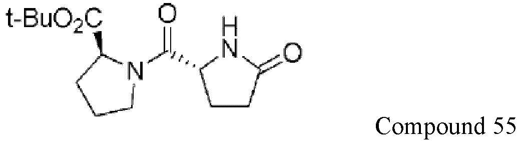

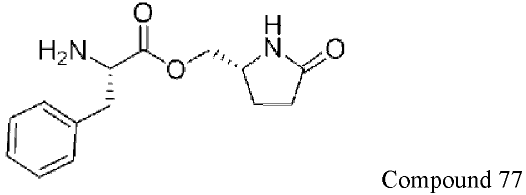

32. The method according to any one of claims 16 to 31, wherein the Component (A) or (B) is selected from compounds represented by the following Formulae (Compound 1) to (Compound 20), (Compound 23), (Compound 26) to (Compound 40), (Compound 42) to (Compound 49), (Compound 51), (Compound 53), (Compound 56) to (Compound 76), (Compound 78) to (Compound 80), and (Compound 82) to (Compound 90):

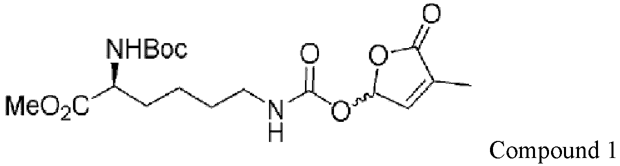

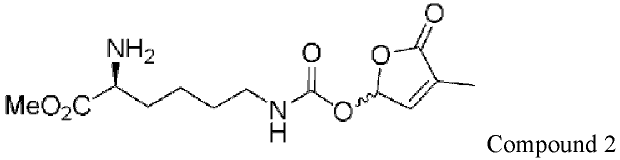

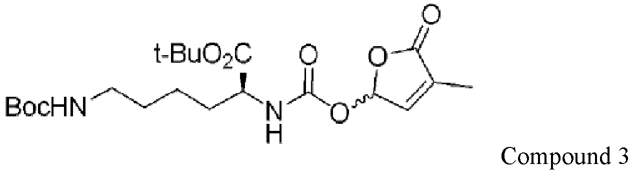

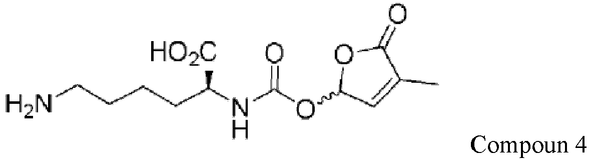

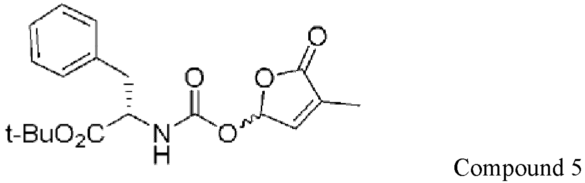

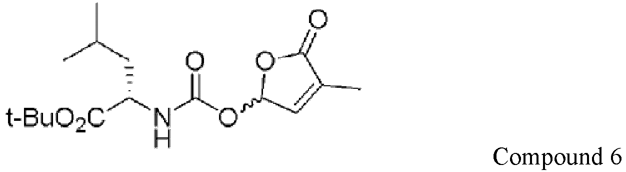

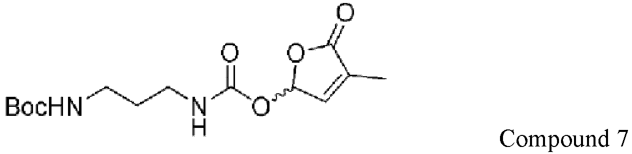

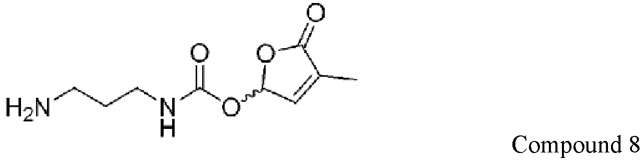

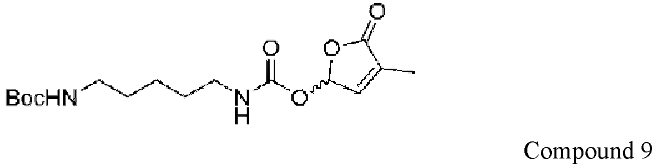

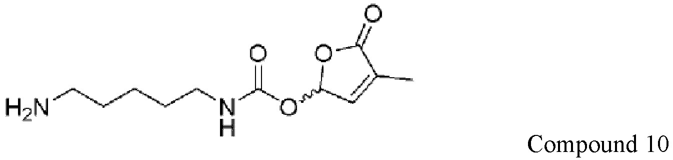

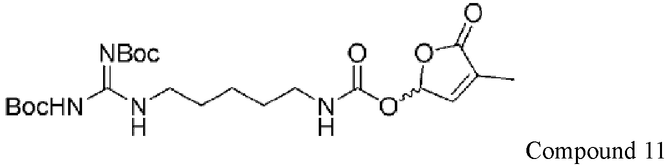

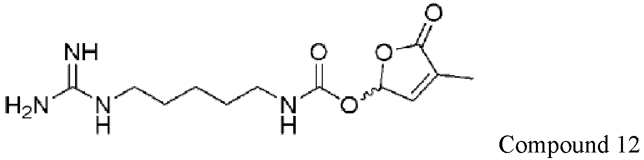

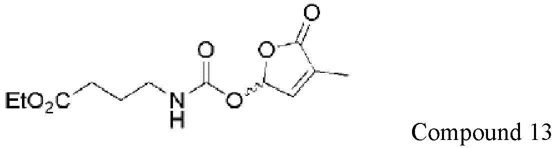

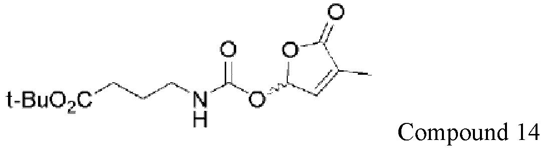

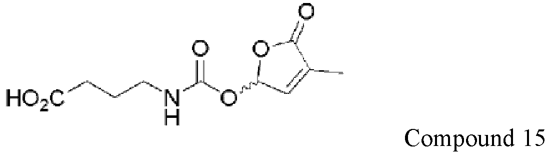

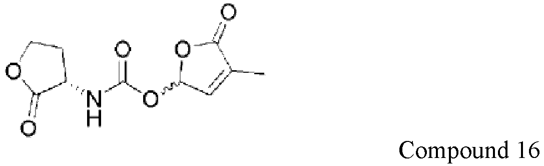

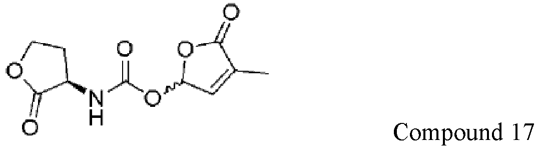

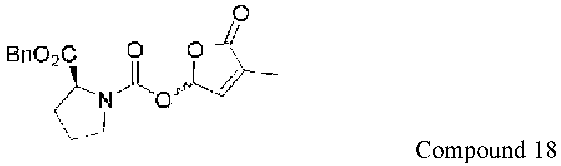

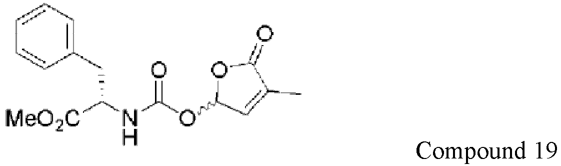

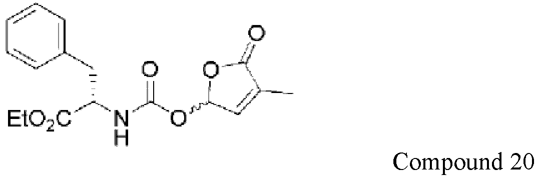

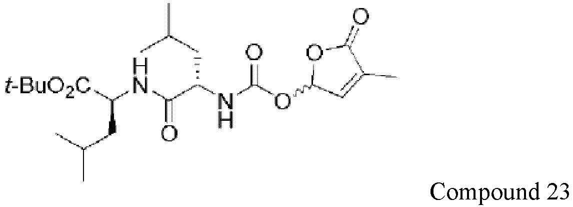

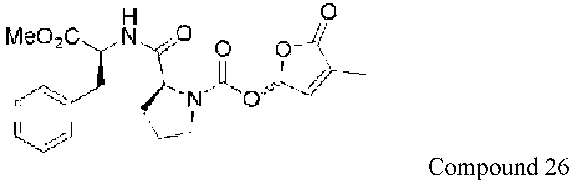

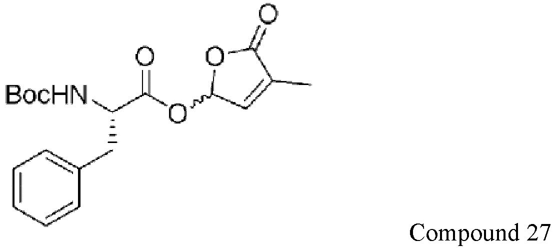

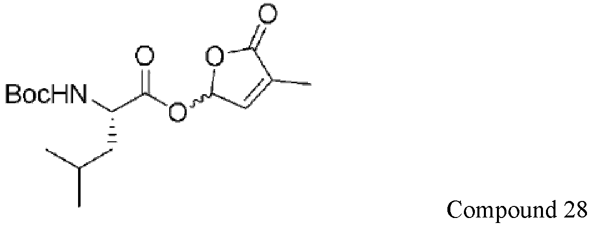

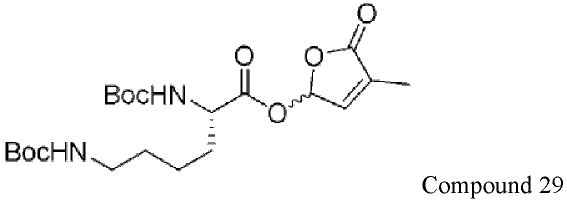

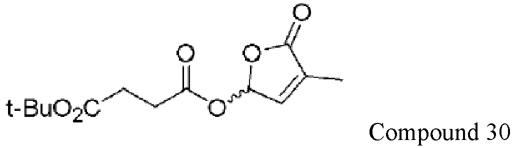

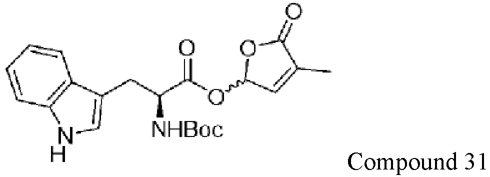

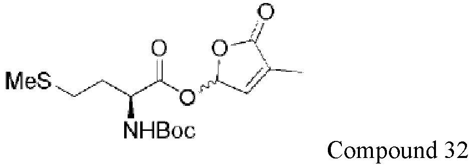

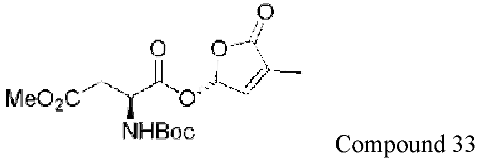

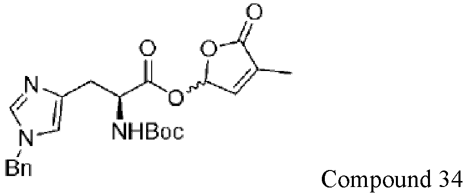

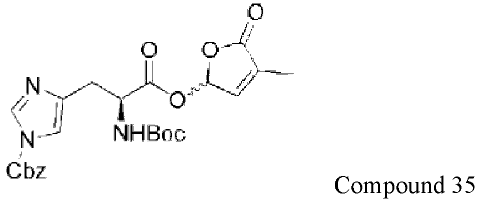

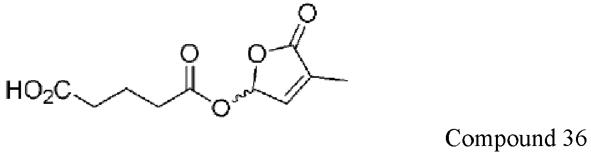

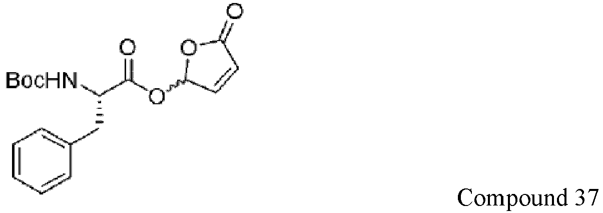

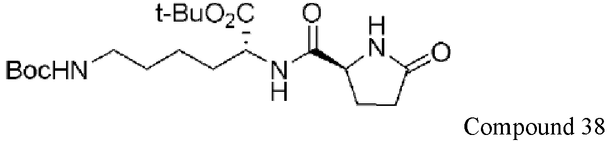

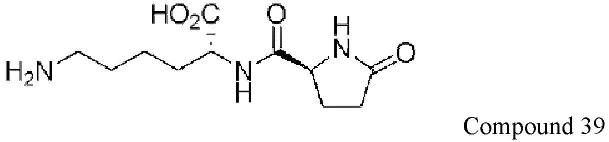

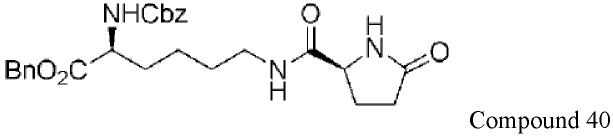

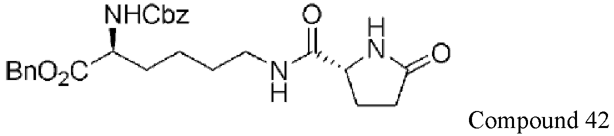

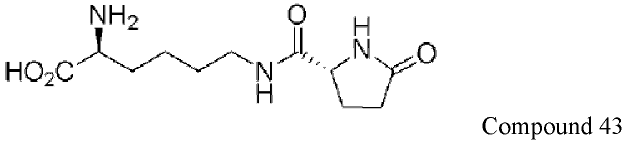

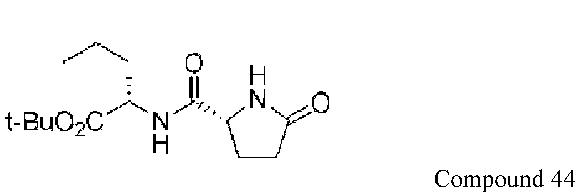

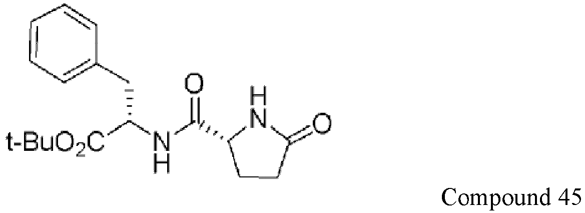

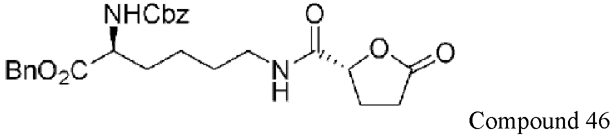

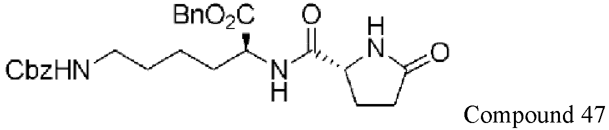

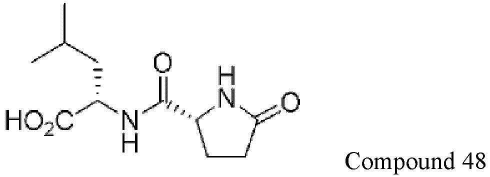

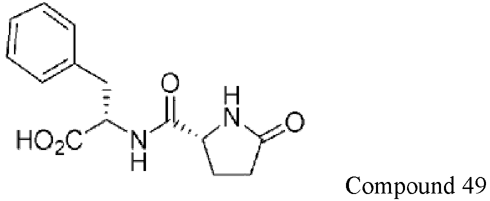

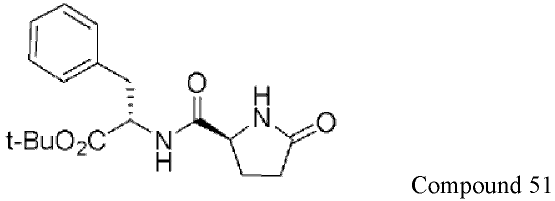

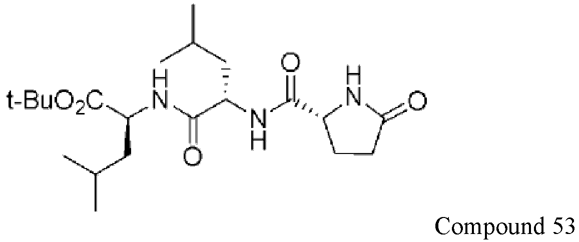

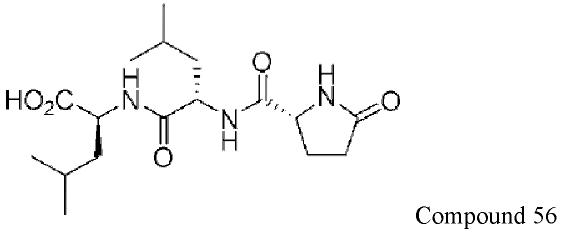

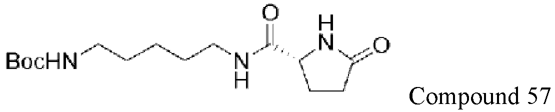

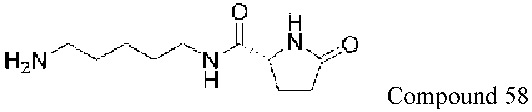

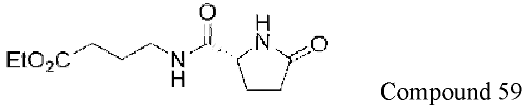

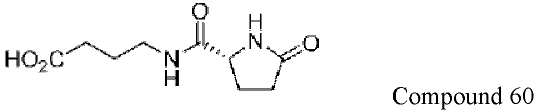

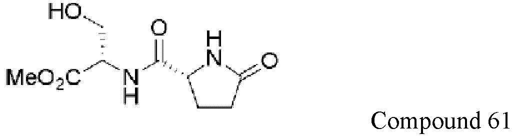

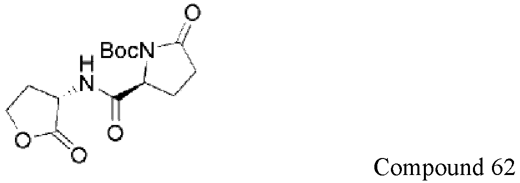

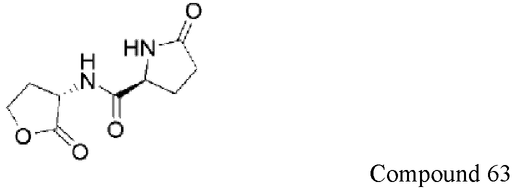

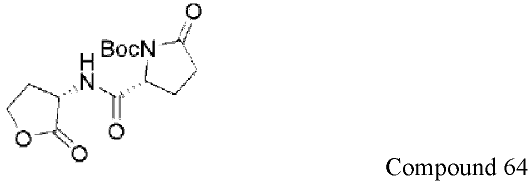

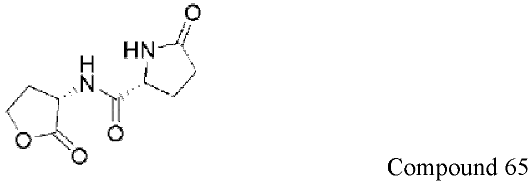

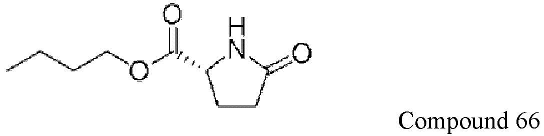

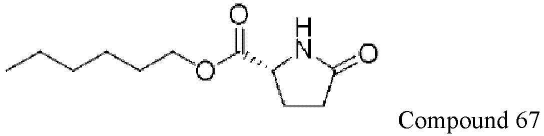

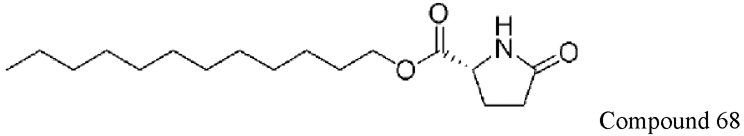

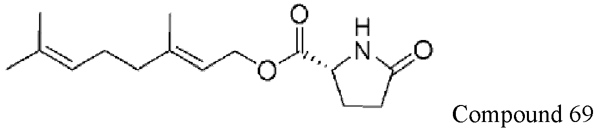

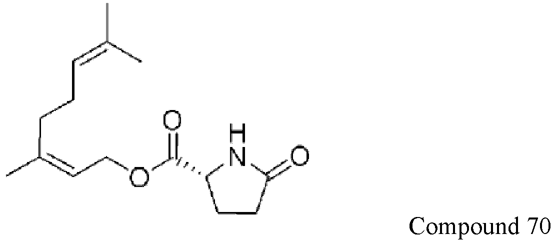

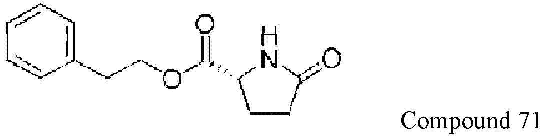

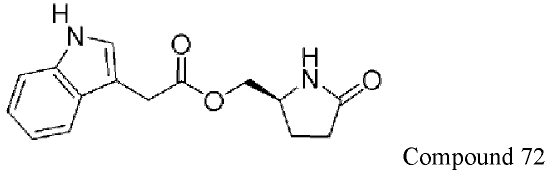

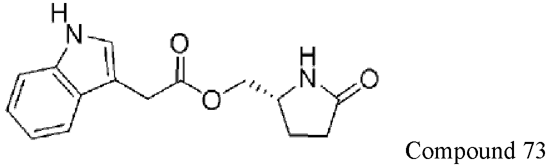

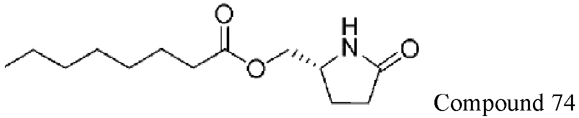

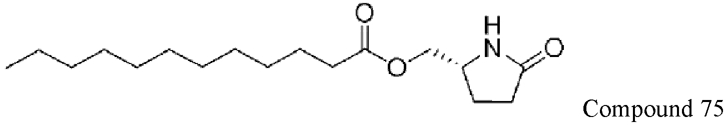

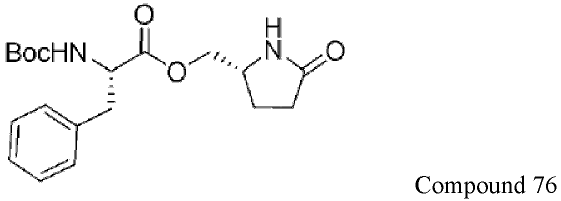

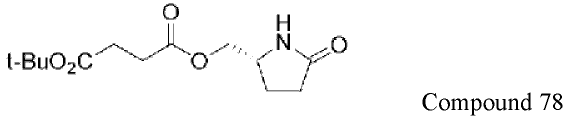

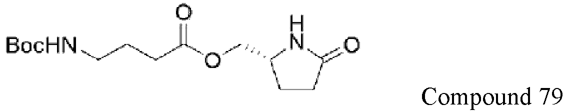

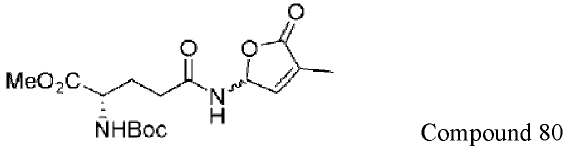

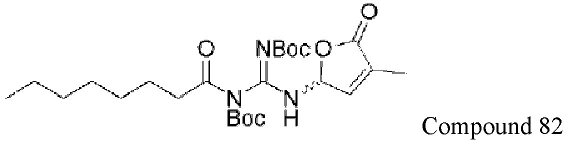

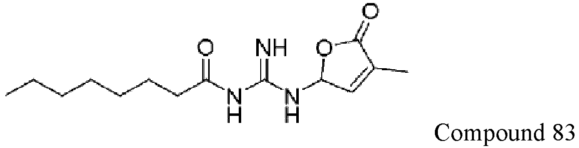

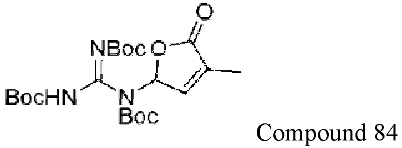

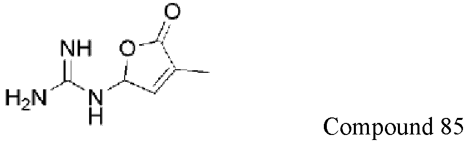

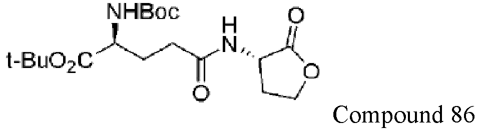

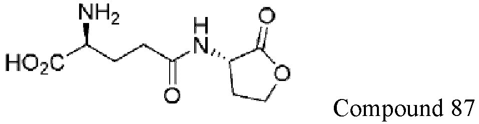

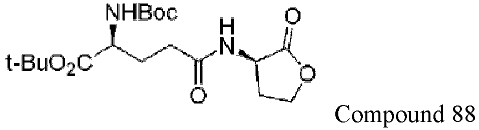

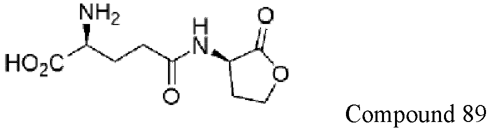

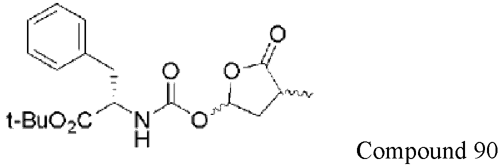

33. The method according to any one of claims 16 to 32, wherein the Component (C) is a fermentation by-product of lysine, tryptophan, threonine, valine, leucine, or isoleucine.

34. The method according to any one of claims 16 to 33, wherein the Component (A), (B), or (C) is used in a liquid form containing the Component (A), (B), or (C) at a concentration of from 10 nM to 10 mM.
